# EUROPÄISCHE PATENTANMELDUNG

(11) **EP 3 815 772 A1**
(43) Veröffentlichungstag der Anmeldung: **05.05.2021**
(21) Anmeldenummer: 19826829.4
(22) Anmeldetag: 26.06.2019
(51) Int. Cl.: B01D 69/10, B01D 63/06, B01D 63/08, B01D 69/12, B01D 71/48, C02F 3/12, D04H 1/541

(54) **SEMIPERMEABLER MEMBRANTRÄGER ZUR MEMBRANBIOREAKTORBEHANDLUNG**

(30) Priorität: 29.06.2018 JP 2018124836; 25.09.2018 JP 2018178764; 11.06.2019 JP 2019108628
(71) Anmelder: Mitsubishi Paper Mills Limited, Tokyo 130-0026 (JP)
(72) Erfinder: YOSHIDA Mitsuo, Tokyo 130-0026 (JP)
(74) Vertreter: Beckmann, Claus
(86) Internationale Anmeldenummer: PCT/JP2019/025378
(87) Internationale Veröffentlichungsnummer: WO 2020/004462

(57) **Zusammenfassung**

Eine Aufgabe der vorliegenden Erfindung besteht darin, einen Trägerkörper für semipermeable Membranen zur Membranbioreaktor-Behandlung bereitzustellen, der ausgezeichnete Lösungsmittelbeständigkeit aufweist und dessen Festigkeit beim Auftragen einer Beschichtungslösung zur Bildung einer semipermeablen Membran auf dem Trägerkörper für semipermeable Membranen nicht leicht abnimmt. Ein Trägerkörper für semipermeable Membranen zur Membranbioreaktor-Behandlung, bei dem es sich um einen Vliesstoff handelt, der Hauptfasern und Bindefasern enthält, ist dadurch gekennzeichnet, dass der Trägerkörper für semipermeable Membranen zur Membranbioreaktor-Behandlung als Hauptfasern gestreckte Polyesterfasern und als Bindefasern Polyesterverbundfasern vom Kern-Mantel-Typ mit einem Mantelabschnitt aus kristallinem copolymerisiertem Polyester, dessen Schmelzpunkt im Bereich von 160 bis 185°C liegt, und in dem eine Dicarbonsäurekomponente Terephthalsäure ist und Diolkomponenten Ethylenglykol und Tetramethylenglykol sind, enthält.

## Beschreibung

### Technisches Feld

Die vorliegende Erfindung betrifft einen Trägerkörper für semipermeable Membranen zur Membranbioreaktor-Behandlung.

### Stand der Technik

Semipermeable Membranen werden häufig in Bereichen wie der Meerwasserentsalzung, Wasseraufarbeitung, Lebensmittelanreicherung, Abwasserbehandlung, medizinischen Anwendungen wie der Hämofiltration, und der Herstellung von hochreinem Wasser für die Halbleiterreinigung eingesetzt. Die funktionelle Trennschicht von semipermeablen Membranen besteht aus porösen Harzen wie Harzen auf Cellulosebasis, Harzen auf Polysulfonbasis, Harzen auf Polyacrylnitrilbasis, Harzen auf Fluorbasis, oder Harzen auf Polyesterbasis. Da diese porösen Harze allein eine geringere mechanische Festigkeit aufweisen, werden sie in "Filtermembranen" verwendet, wobei es sich um eine Form von Verbundmaterial handelt, bei dem an einer Oberflächenseite eines Trägerkörpers für semipermeable Membranen, der aus einem Faserbasismaterial wie einem Vliesstoff oder einem gewebten Stoff besteht, eine semipermeable Membran vorgesehen ist. Die Oberfläche des Trägerkörpers für semipermeable Membranen, auf der die semipermeable Membran vorgesehen ist, wird als "beschichtete Oberfläche" bezeichnet.

Eine der Verwendungsformen dieser semipermeablen Membranen und Filtermembranen ist ein Verfahren zur Membranbioreaktor-Behandlung (Membrane Bioreactor, MBR). Aufgrund der stabilen Qualität des Wassers nach der Behandlung und der einfachen Wartung wird das Verfahren zur Membranbioreaktor-Behandlung häufig bei der Behandlung von organischen Abwässern eingesetzt. Bei dem Verfahren zur Membranbioreaktor-Behandlung werden zuerst Verunreinigungen im Abwasser entfernt, dann organische Substanzen im Abwasser mit Belebtschlamm in einem biologischen Behandlungsbehälter (belüfteter Behälter) zersetzt und entfernt, mit einer in den biologischen Behandlungsbehälter abgesenkt installierten Tauch-Membrantrennungsanlage die gemischte Lösung nach festen und flüssigen Bestandteilen getrennt, und das durchgelassene Permeat als behandeltes Wasser abgeführt. Beim Betrieb einer derartigen Membrantrennungsanlage kommt es im Abschnitt zur Membrantrennung zu heftigen Zusammenstößen von anorganischen Substanzen wie Sand, Schlamm, und anderen Feststoffen, sowie zu heftigen Zusammenstößen von Blasen mit der Membranoberfläche aufgrund von Belüftungsvorgängen, die zur Zufuhr von Sauerstoff an den Belebtschlamm und zur Verhinderung des Verstopfens durchgeführt werden. Deshalb ist es erforderlich, dass der Abschnitt zur Membrantrennung in einer solchen Membrantrennungsanlage eine ausreichende Festigkeit aufweist, um diesen Aufprallereignissen standzuhalten.

Außerdem werden Filtermembranen in Form von Modulen verwendet. Typische Module für plattenförmige Filtermembranen sind Flachmembranmodule und Spiralmodule. Typische Module für rohrförmige Filtermembranen sind rohrförmige oder schlauchartige Module (siehe beispielsweise Nicht Patentiertes Dokument 1). Bei all diesen Modulen kommt, wenn die Membranoberfläche während des Gebrauchs verschmutzt wird, eine als "Rückspülung (Rückspülreinigung)" bezeichnete Reinigungsmethode zur Reinigung der Membranoberfläche zum Einsatz, bei der eine alkalische Reinigungslösung oder eine saure Reinigungslösung aus der entgegengesetzten Richtung der üblichen Wasserströmungsrichtung unter Druck durchgeleitet wird. Daher muss der Trägerkörper für semipermeable Membranen Alkali- und Säurebeständigkeit aufweisen, und die Grenzfläche zwischen dem Trägerkörper für semipermeable Membranen und der semipermeablen Membran muss eine hohe Haftfestigkeit aufweisen, um dem Rückspülen standzuhalten. Zusätzlich muss der Trägerkörper für semipermeable Membranen Lösungsmittelbeständigkeit gegenüber dem Lösungsmittel der Lösung der semipermeablen Membran aufweisen.

Beispiele für einen allgemeinen Trägerkörper für semipermeable Membranen umfassen einen Trägerkörper für semipermeable Membranen, der Olefinfasern wie Polyethylen und Polypropylen enthält. Beispielsweise wurden ein Trägerkörper für semipermeable Membranen, der durch Wärmebehandlung von Verbundfasern mit Polypropylen als Kernmaterial und Polyethylen als Mantelmaterial erhalten wird (siehe, zum Beispiel, Patentdokument 1), und ein Trägerkörper für semipermeable Membranen, der aus den oben genannten Olefinverbundfasern und unter Feuchtigkeit und Wärme haftenden Fasern wie Vinylalkohol gebildet ist (siehe, zum Beispiel, Patentdokument 2), vorgeschlagen. Diese Olefinfasern enthaltenden Trägerkörper für semipermeable Membranen weisen eine schwache Zugfestigkeit und eine unzureichende Druckbeständigkeit auf.

Ferner wird bei rohrförmigen bzw. schlauchartigen Modulen der rohrförmige Trägerkörper für semipermeable Membranen hergestellt, indem ein rohrförmiges Substrat oder ein Aufspanndorn verwendet werden, darauf ein bandförmiger Trägerkörper für semipermeable Membranen spiralförmig gewickelt wird, wobei dessen Seitenkanten teilweise zur Deckung gebracht werden, und die überlappenden Abschnitte schließlich durch thermisches Schweißen, Ultraschall-Schweißen, oder dergleichen verschmolzen werden. Danach wird an der Außen- oder Innenseite dieses rohrförmigen Trägerkörpers für semipermeable Membranen eine Vielzahl von Filtermembranen, die semipermeable Membranen enthalten, als Bündel angeordnet und so ein Modul erhalten. Da der bandförmige Trägerkörper für semipermeable Membranen spiralförmig gewickelt ist, sind die beschichtete Oberfläche und die der beschichteten Oberfläche entgegengesetzte Rückseite (nicht beschichtete Oberfläche) des Trägerkörpers für semipermeable Membranen an den überlappenden Abschnitten verschmolzen. Da der Olefinfasern enthaltende Trägerkörper für semipermeable Membranen leicht verschmolzen werden kann, wird eine ausgezeichnete Haftfestigkeit zwischen der beschichteten Oberfläche und der nicht beschichteten Oberfläche des Trägerkörpers für semipermeable Membranen erzielt und der rohrförmige Trägerkörper für semipermeable Membranen ist einfach herzustellen. Da jedoch der Abschnitt, in dem der Trägerkörper für semipermeable Membranen überlappt und verschmolzen ist, einen Filmüberzug formt, kann die semipermeable Membran nur schlecht in den den Filmüberzug formenden Abschnitt eingreifen, wodurch es vorkommen kann, dass die Haftfestigkeit zwischen der semipermeablen Membran und dem Trägerkörper für semipermeable Membranen unzureichend ist und sich die semipermeable Membran ablöst.

Ein anderer üblicher Trägerkörper für semipermeable Membranen ist beispielsweise ein Trägerkörper für semipermeable Membranen, der gestreckte Polyesterfasern und Bindemittel-Polyesterfasern enthält. Beispielsweise wurden ein Trägerkörper für semipermeable Membranen, der gestreckte Polyesterfasern und Polyesterverbundfasern vom Kern-Mantel-Typ enthält (siehe, zum Beispiel, Patentdokument 3), ein Trägerkörper für semipermeable Membranen, der gestreckte Polyesterfasern, Polyolefinfasern, und Polyesterverbundfasern vom Kern-Mantel-Typ mit einem Mantelabschnitt mit einem Schmelzpunkt von 120°C oder höher und 150°C oder niedriger enthält (siehe, zum Beispiel, Patentdokument 4), ein Trägerkörper für semipermeable Membranen, der gestreckte Polyesterfasern, nicht gestreckte Polyesterfasern, und Polyesterverbundfasern vom Kern-Mantel-Typ mit einem Mantelabschnitt mit einem Schmelzpunkt von 125°C oder höher und 160°C oder niedriger enthält (siehe, zum Beispiel, Patentdokument 5), und dergleichen vorgeschlagen.

Der in Patentdokument 3 vorgeschlagene Trägerkörper für semipermeable Membranen erreicht durch seinen Gehalt an gestreckten Polyesterfasern und Polyesterverbundfasern vom Kern-Mantel-Typ gute Festigkeit und gute Beschaffenheit. Allerdings wurden keine Untersuchungen zur Lösungsmittelbeständigkeit, zur Haftfestigkeit an einem Rahmenmaterial, oder zur Haftfestigkeit zwischen der semipermeablen Membran und dem Trägerkörper für semipermeable Membranen in einem rohrförmigen Trägerkörper für semipermeable Membranen angestellt.

In Patentdokument 4 wird eine Bewertung der Haftung eines Trägerkörpers für semipermeable Membranen an einem Rahmenmaterial durch thermisches Schweißen bei einer Temperatur von 200°C durchgeführt. Der Trägerkörper für semipermeable Membranen enthält Polyolefinfasern, wodurch die Haftfestigkeit mit dem Rahmenmaterial erhöht wird. Wie oben beschrieben, werden der die Olefinfasern enthaltende Trägerkörper für semipermeable Membranen und das Rahmenmaterial durch einen Ultraschallschweißprozess zwar verbunden, aber die Haftfestigkeit zwischen dem Trägerkörper für semipermeable Membranen und dem Rahmenmaterial ist unzureichend.

Bei dem in Patentdokument 5 beschriebenen Trägerkörper für semipermeable Membranen kann durch dessen Gehalt an Polyesterverbundfasern vom Kern-Mantel-Typ mit einem Mantelabschnitt mit einem Schmelzpunkt von 125°C oder höher und 160°C oder niedriger, die Luftdurchlässigkeit des Vliesstoffs innerhalb eines bestimmten Bereichs eingestellt werden, während eine ausreichende Festigkeit beibehalten wird, und ein Effekt erzielt werden, durch den Breitenschrumpfung und Faltenbildung während der Filmbildung unterdrückt werden. Darüber hinaus wird durch den zusätzlichen Gehalt an nicht gestreckten Polyesterfasern ein Effekt erzielt, durch den sich die Festigkeit verbessert. Allerdings haben die Erfinder der vorliegenden Erfindung in ihren Untersuchungen festgestellt, dass bei dem Trägerkörper für semipermeable Membranen, der gestreckte Polyesterfasern, nicht gestreckte Polyesterfasern, und Polyesterverbundfasern vom Kern-Mantel-Typ mit einem Mantelabschnitt mit einem Schmelzpunkt von 125°C oder höher und 160°C oder niedriger enthält, fallweise nur unzureichende Haftfestigkeit mit dem Rahmenmaterial besteht.

Ferner wurde ein Trägerkörper für semipermeable Membranen zur Membranbioreaktor-Behandlung offenbart, der durch seinen Gehalt an gestreckten Polyesterfasern, nicht gestreckten Polyesterfasern, und Polyesterverbundfasern vom Kern-Mantel-Typ mit einem Mantelabschnitt aus copolymerisiertem Polyester dessen Glasübergangstemperatur im Bereich von 40 bis 80°C liegt, ausgezeichnete Haftfestigkeit mit dem Rahmenmaterial, ausgezeichnete Haftfestigkeit zwischen der beschichteten Oberfläche und der nicht beschichteten Oberfläche des Trägerkörpers für semipermeable Membranen aufweist und ausgezeichnete Haftfestigkeit mit der semipermeablen Membran zeigt (zum Beispiel Patentdokumente 6, 7, und 8). Allerdings kommt es bei den in den Patentdokumenten 6, 7, und 8 beschriebenen Trägerkörpern für semipermeable Membranen beim Auftragen der Beschichtungslösung zur Bildung der semipermeablen Membran auf dem Trägerkörper für semipermeable Membranen zu einem Herauslösen der Polyesterverbundfasern vom Kern-Mantel-Typ in dem Trägerkörper für semipermeable Membranen durch das Lösungsmittel der Beschichtungslösung. Dadurch kann fallweise die Festigkeit des Trägerkörpers für semipermeable Membranen abnehmen und die Beschichtseigenschaften der semipermeablen Membran können sich verschlechtern. Ferner beträgt das Flächengewicht des Trägerkörpers für semipermeable Membranen 100 g/m² oder weniger, wodurch Verformungen des Schlauchs im Rohrformungsprozess des rohrförmigen Trägerkörpers für semipermeable Membranen und dem Membranbeschichtungsprozess im rohrförmigen bzw. schlauchartigen Modul auftreten können, weshalb in einigen Fällen keine gleichmäßige Filmbildung erreicht werden konnte. Selbst wenn bei dem in Patentdokument 8 beschriebenen Trägerkörper für semipermeable Membranen das Flächengewicht des Trägerkörpers für semipermeable Membranen 100 g/m² oder mehr beträgt, so ist das Mischungsverhältnis an Polyesterverbundfasern vom Kern-Mantel-Typ hoch, wodurch es beim Heißkalandrieren des Vliesstoffs, der das Grundblatt des Trägerkörpers für semipermeable Membranen bildet, dazu kommen kann, dass der Mantelabschnitt der geschmolzenen Polyesterverbundfasern vom Kern-Mantel-Typ an der Heizwalze anhaftet und allmählich die erhitzte Metallwalze verschmutzt.

### LISTE DER ANFÜHRUNGEN

### Patentdokumente

Patentdokument 1: Japanische Ungeprüfte Patentanmeldung Nr. 2001-17842
Patentdokument 2: Japanische Ungeprüfte Patentanmeldung Nr. 2012-250223
Patentdokument 3: Japanische Ungeprüfte Patentanmeldung Nr. 2010-194478
Patentdokument 4: Japanische Ungeprüfte Patentanmeldung Nr. 2012-101213
Patentdokument 5: Japanische Ungeprüfte Patentanmeldung Nr. 2013-220382
Patentdokument 6: Japanisches Patent Nr. 6038369
Patentdokument 7: Japanisches Patent Nr. 6038370
Patentdokument 8: Japanische Ungeprüfte Patentanmeldung Nr. 2017-121606

### Nicht patentierte Dokumente

Nicht patentiertes Dokument 1: Konferenzband Kanalisationsmembranbehandlungstechnologie, "Richtlinien für die Anwendung der Membranbehandlungstechnologie in der Kanalisation", 2. Auflage, (online), März 2011, (Suche am 6. Januar 2016), Internet URL: http://www.mlit.go.jp/common/000146906.pdf

### ZUSAMMENFASSUNG DER ERFINDUNG

### Durch die Erfindung zu lösende Aufgabe

Eine Aufgabe der vorliegenden Erfindung besteht darin, einen Trägerkörper für semipermeable Membranen zur Membranbioreaktor-Behandlung bereitzustellen, der ausgezeichnete Lösungsmittelbeständigkeit aufweist und dessen Festigkeit beim Auftragen einer Beschichtungslösung zur Bildung einer semipermeablen Membran auf dem Trägerkörper für semipermeable Membranen nicht leicht abnimmt.

### Mittel zur Lösung der Aufgabe

Als Ergebnis sorgfältiger Studien zur Lösung der obigen Probleme wurden die folgenden Erfindungen gemacht.
(1) Ein Trägerkörper für semipermeable Membranen zur Membranbioreaktor-Behandlung, bei dem es sich um einen Vliesstoff handelt, der Hauptfasern und Bindefasern enthält, ist dadurch gekennzeichnet, dass der Trägerkörper für semipermeable Membranen zur Membranbioreaktor-Behandlung als Hauptfasern gestreckte Polyesterfasern und als Bindefasern Polyesterverbundfasern vom Kern-Mantel-Typ mit einem Mantelabschnitt aus kristallinem copolymerisiertem Polyester, dessen Schmelzpunkt im Bereich von 160 bis 185°C liegt, und in dem die Dicarbonsäurekomponente Terephthalsäure ist und die Diolkomponenten Ethylenglykol und Tetramethylenglykol sind, enthält.
(2) Der in (1) beschriebene Trägerkörper für semipermeable Membranen zur Membranbioreaktor-Behandlung, wobei der Trägerkörper für semipermeable Membranen zur Membranbioreaktor-Behandlung als Bindefasern nicht gestreckte Bindefasern enthält.
(3) Der in (1) oder (2) beschriebene Trägerkörper für semipermeable Membranen zur Membranbioreaktor-Behandlung, wobei der Trägerkörper für semipermeable Membranen zur Membranbioreaktor-Behandlung eine einschichtige Struktur aufweist.
(4) Der in (1) oder (2) beschriebene Trägerkörper für semipermeable Membranen zur Membranbioreaktor-Behandlung, wobei der Trägerkörper für semipermeable Membranen zur Membranbioreaktor-Behandlung eine zweischichtige Struktur aufweist.
(5) Der in (1) beschriebene Trägerkörper für semipermeable Membranen zur Membranbioreaktor-Behandlung, wobei der Trägerkörper für semipermeable Membranen zur Membranbioreaktor-Behandlung eine zweischichtige Struktur aufweist, die aus einer beschichteten Oberflächenschicht und einer der beschichteten Oberflächenschicht entgegengesetzten Rückflächenschicht besteht, der Trägerkörper für semipermeable Membranen zur Membranbioreaktor-Behandlung ein Flächengewicht von 150 g/m² oder mehr und 250 g/m² oder weniger aufweist, sowohl die beschichtete Oberflächenschicht als auch die Rückflächenschicht als Hauptfasern gestreckte Polyesterfasern und als Bindefasern die Polyesterverbundfasern vom Kern-Mantel-Typ und nicht gestreckte Polyesterfasern enthalten, sowohl in der beschichteten Oberflächenschicht als auch in der Rückflächenschicht die Bindefasern ein Mischungsverhältnis von 25 Gew.% oder mehr und 40 Gew.% oder weniger, und die Polyesterverbundfasern vom Kern-Mantel-Typ ein Mischungsverhältnis von 5 Gew.% oder mehr und 20 Gew.% oder weniger in Bezug auf die in der jeweiligen Schicht enthaltenen Gesamtfasern aufweisen, und die in der beschichteten Oberflächenschicht enthaltenen gestreckten Polyesterfasern einen Faserdurchmesser von 6 bis 18 µm aufweisen.

### Wirkung der Erfindung

Der erfindungsgemäße Trägerkörper für semipermeable Membranen zur Membranbioreaktor-Behandlung weist ausgezeichnete Lösungsmittelbeständigkeit auf, und ermöglicht einen Effekt zu erzielen, durch den beim Auftragen einer Beschichtungslösung zur Bildung einer semipermeablen Membran auf dem Trägerkörper für semipermeable Membranen die Haftfestigkeit zwischen dem Trägerkörper für semipermeable Membranen und der semipermeablen Membran hoch ist, und das Durchbluten der Lösung der semipermeablen Membran zur Rückseite (nicht beschichtete Oberfläche) des Trägerkörpers für semipermeable Membranen gering ist.

### KURZE BESCHREIBUNG DER ZEICHNUNGEN

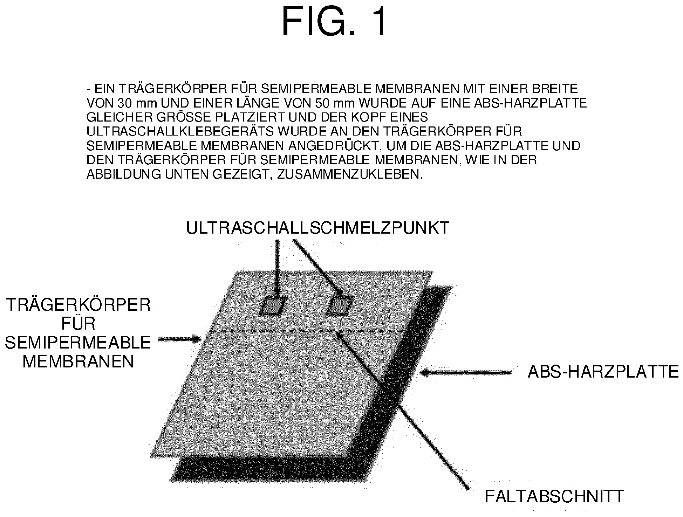

[Fig. 1] Fig. 1 ist eine schematische Darstellung, die ein Verfahren zum Aufkleben eines Trägerkörpers für semipermeable Membranen auf eine ABS-Harzplatte in einer Bewertung eines Trägerkörpers für semipermeable Membranen zur Membranbioreaktor-Behandlung zeigt.

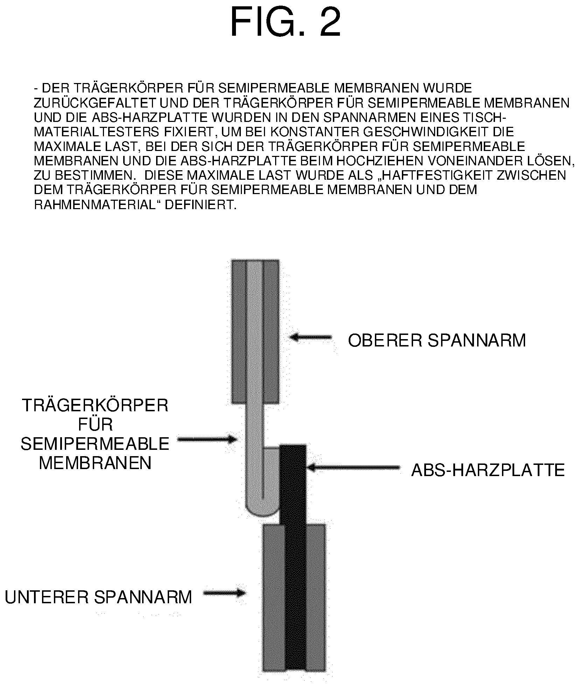

[Fig. 2] Fig. 2 ist eine schematische Darstellung, die ein Verfahren zum Messen der Haftfestigkeit des Trägerkörpers für semipermeable Membranen an der ABS-Harzplatte in der Bewertung des Trägerkörpers für semipermeable Membranen zur Membranbioreaktor-Behandlung zeigt.

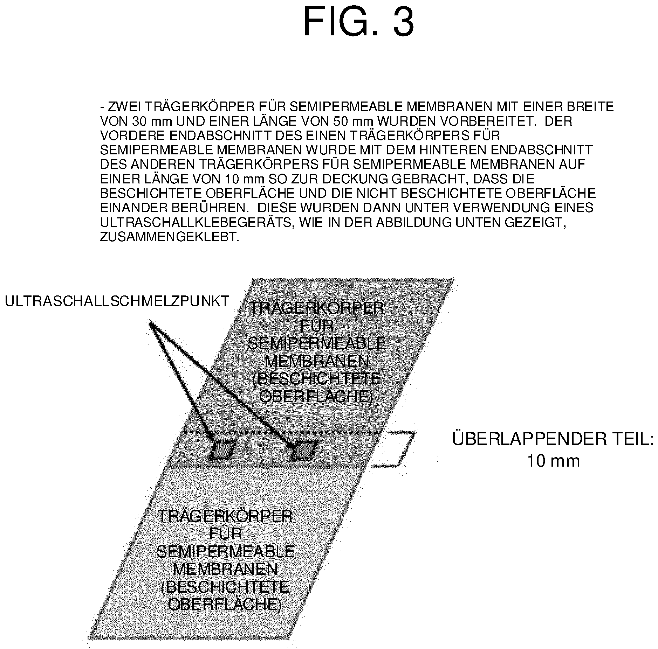

[Fig. 3] Fig. 3 ist eine schematische Darstellung, die ein Verfahren zum Verkleben einer beschichteten Oberflächenoberfläche und einer nicht beschichteten Oberfläche des Trägerkörpers für semipermeable Membranen in der Bewertung des Trägerkörpers für semipermeable Membranen zur Membranbioreaktor-Behandlung zeigt.

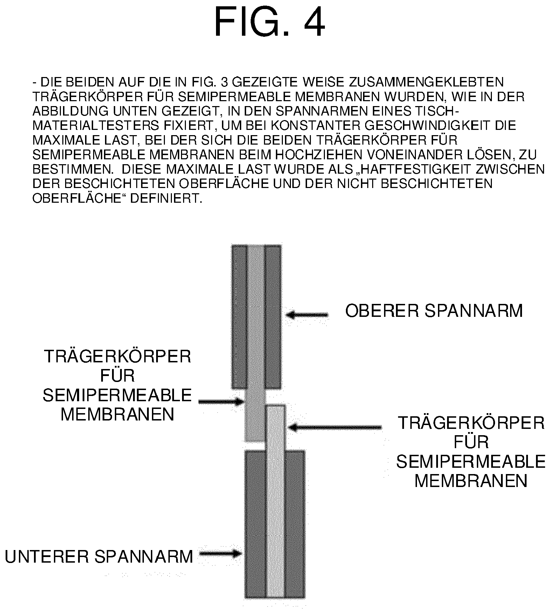

[Fig. 4] Fig. 4 ist eine schematische Darstellung, die ein Verfahren zum Messen der Haftfestigkeit zwischen der beschichteten Oberfläche und der nicht beschichteten Oberfläche des Trägerkörpers für semipermeable Membranen in der Bewertung des Trägerkörpers für semipermeable Membranen zur Membranbioreaktor-Behandlung zeigt.

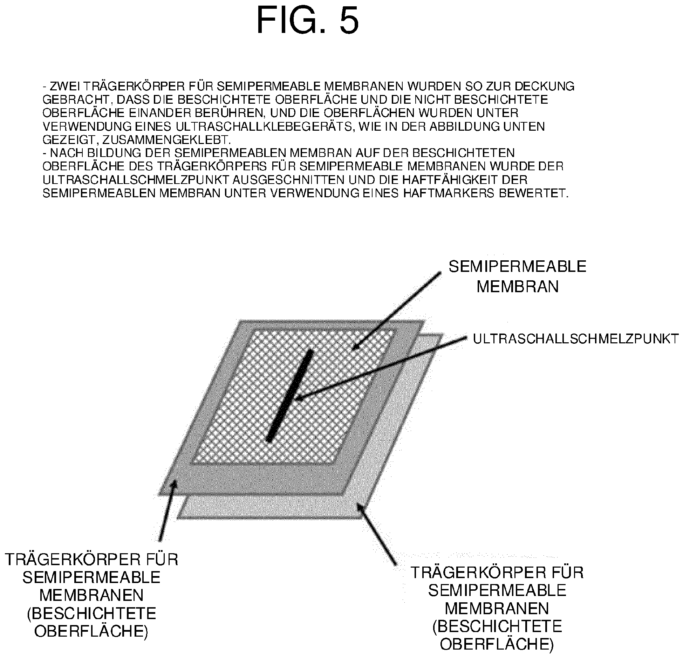

[Fig. 5] Fig. 5 ist eine schematische Darstellung, die in der Bewertung des Trägerkörpers für semipermeable Membranen zur Membranbioreaktor-Behandlung ein Verfahren zum Messen der Haftfestigkeit einer semipermeablen Membran zeigt, die in einem Abschnitt vorgesehen ist, in dem die beschichtete Oberfläche und die nicht beschichtete Oberfläche des Trägerkörpers für semipermeable Membranen zusammengeschweißt sind.

### BESCHREIBUNG DER AUSFÜHRUNGSFORMEN

In der vorliegenden Erfindung handelt es sich bei einer Filtermembran um einen Verbundkörper, bei dem auf einer Seite eines Trägerkörpers für semipermeable Membranen eine semipermeable Membran zur Wasserbehandlung vorgesehen ist, wobei die semipermeable Membran gebildet wird, indem eine Beschichtungslösung als Grundmaterial einer funktionellen Trennschicht auf eine beschichtete Oberfläche, die eine Seite eines Trägerkörpers für semipermeable Membranen zur Membranbioreaktor-Behandlung darstellt, aufgetragen wird. Als Grundmaterial der funktionellen Trennschicht werden verschiedene Polymermaterialien, basierend beispielsweise auf Vinylchloridharzen (PVC), Polysulfon (PS), Polyvinylidenfluorid (PVDF), Polyethylen (PE), Celluloseacetat (CA), Polyacrylnitril (PAN), Polyvinylalkohol (PVA), und Polyimid (PI), verwendet. Insbesondere ist der Gebrauch von PVC und PVDF für semipermeable Membranen zur Membranbioreaktor-Behandlung üblich. Auf den Trägerkörper für semipermeable Membranen wird eine Beschichtungslösung, in der ein das Grundmaterial bildende Polymermaterial gelöst ist, aufgebracht und dann geliert, um einen mikroporösen Film zu bilden. Im Folgenden wird der Prozess des Aufbringens und Bildens der funktionellen Trennschicht auf dem Trägerkörper für semipermeable Membranen als "Filmbildung" bezeichnet.

Die Filtermembran wird in Form eines Moduls verwendet. Typische Module für plattenförmige Filtermembranen sind Flachmembranmodule und Spiralmodule. Typische Module für rohrförmige Filtermembranen sind rohrförmige oder schlauchartige Module.

Bei der Verwendung von Flachmembranmodulen wird in dem Trägerkörper für semipermeable Membranen die der beschichteten Oberfläche entgegengesetzte Rückseite (nicht beschichtete Oberfläche), als Klebefläche für ein Rahmenmaterial verwendet, und die Filtermembran wird an das Rahmenmaterial, das aus einem Harz wie einem Copolymer-Kunstharz aus Polypropylen oder Acrylnitril, Butadien, und Styrol (ABS-Harz) besteht, angehaftet und fixiert. Zur Haftung und Fixierung an dem Rahmenmaterial werden üblicherweise Prozesse wie thermisches Schweißen und Ultraschall-Schweißen durchgeführt.

Bei rohrförmigen bzw. schlauchartigen Modulen wird der rohrförmige Trägerkörper für semipermeable Membranen hergestellt, indem ein rohrförmiges Substrat oder ein Aufspanndorn verwendet werden, darauf ein bandförmiger Trägerkörper für semipermeable Membranen spiralförmig gewickelt wird, wobei die Seitenkanten des Trägerkörpers für semipermeable Membranen teilweise zur Deckung gebracht werden, und die überlappenden Abschnitte schließlich durch thermisches Schweißen, Ultraschall-Schweißen, oder dergleichen verschmolzen werden. Danach wird an der Außen- oder Innenseite dieses rohrförmigen Trägerkörpers für semipermeable Membranen eine Vielzahl von Filtermembranen, die semipermeable Membranen enthalten, überlappend angeordnet und so das Modul erhalten.

Der erfindungsgemäße Trägerkörper für semipermeable Membranen zur Membranbioreaktor-Behandlung ist ein Vliesstoff, der Hauptfasern und Bindefasern enthält, und ist dadurch gekennzeichnet, als Hauptfasern gestreckte Polyesterfasern und als Bindefasern Polyesterverbundfasern vom Kern-Mantel-Typ mit einem Mantelabschnitt aus kristallinem copolymerisiertem Polyester, dessen Schmelzpunkt im Bereich von 160 bis 185°C liegt, und in dem eine Dicarbonsäurekomponente Terephthalsäure ist und die Diolkomponenten Ethylenglykol und Tetramethylenglykol sind, zu enthalten. Im Folgenden werden die "Polyesterverbundfasern vom Kern-Mantel-Typ mit einem Mantelabschnitt aus kristallinem copolymerisiertem Polyester, dessen Schmelzpunkt im Bereich von 160 bis 185°C liegt, und in dem eine Dicarbonsäurekomponente Terephthalsäure ist und die Diolkomponenten Ethylenglykol und Tetramethylenglykol sind" als "Polyesterverbundfasern vom Kern-Mantel-Typ A" bezeichnet.

Der Mantelabschnitt der Polyesterverbundfasern vom Kern-Mantel-Typ A ist ein copolymerisierter Polyester, bei dem die Dicarbonsäurekomponente Terephthalsäure ist und die Diolkomponenten Ethylenglykol und Tetramethylenglykol sind. Selbst wenn der Trägerkörper für semipermeable Membranen in ein Lösungsmittel wie Methylethylketon (MEK), Dimethylformamid (DMF), oder N-Methylpyrrolidon (NMP) eingetaucht wird, die als Lösungsmittel beim Aufbringen der semipermeablen Membran verwendet werden, kommt es kaum zu einem Ablösen des Mantelabschnitts und die Festigkeit des Trägerkörpers für semipermeable Membranen nimmt nicht ab. Da die Polyesterverbundfasern vom Kern-Mantel-Typ A außerdem kristallin sind, wird selbst bei der Herstellung des Vliesstoffs (Grundblatts) sowie nach Abschluss des darauf folgenden Heißkalandrierens ermöglicht, dass ein Kernabschnitt der Polyesterverbundfasern vom Kern-Mantel-Typ A nicht schmilzt, die Faserform bestehen bleibt, und Hohlräume sichergestellt werden können. Somit dringt die semipermeable Membran beim Auftragen der semipermeablen Membran ins Innere des Trägerkörpers für semipermeable Membranen ein. Infolgedessen ist es möglich, einen Trägerkörper für semipermeable Membranen mit ausgezeichneter Haftfestigkeit zwischen dem Trägerkörper für semipermeable Membranen und der semipermeablen Membran zu erhalten. Wenn Isophthalsäure oder dergleichen zusätzlich zu Terephthalsäure als Dicarbonsäurekomponente des Mantelabschnitts beigemischt wird, kommt es beim Eintauchen in das Lösungsmittel zum Ablösen des Mantelabschnitts, wodurch die Festigkeit des Trägerkörpers für semipermeable Membranen abnimmt und die Bildung der semipermeablen Membran gehemmt werden kann, was unerwünscht ist. Wenn ferner Diethylenglykol oder dergleichen zusätzlich zu Ethylenglykol und Tetramethylenglykol als Diolkomponente des Mantelabschnitts beigemischt wird, kommt es beim Eintauchen in das Lösungsmittel zum Ablösen des Mantelabschnitts, und aufgrund der Abnahme der Festigkeit und des Herauslösens des Trägerkörpers für semipermeable Membranen kann die Filmbildung gehemmt werden. Darüber hinaus kann es vorkommen, dass beim Heißkalandrieren im Herstellungsprozess des Trägerkörpers für semipermeable Membranen die Mantelkomponente beim Nippen an der Hochtemperatur-Heizwalze schmilzt und an der Heizwalze haftet, wodurch die Heizwalze verunreinigt wird.

Da der Trägerkörper für semipermeable Membranen in der vorliegenden Erfindung die Polyesterverbundfasern vom Kern-Mantel-Typ A enthält, verschmelzen beim thermischen Schweißen oder Ultraschall-Schweißen im Rahmen der Herstellung von Flachmembranmodulen, das Rahmenmaterial und der Mantelabschnitt der in dem Trägerkörper für semipermeable Membranen enthaltenen Polyesterverbundfasern vom Kern-Mantel-Typ A. Zusätzlich zu dem Haften zwischen dem Mantelabschnitt und dem Rahmenmaterial haftet der Kernabschnitt durch Verflechtung mit den Hauptfasern, wodurch die Haftung zwischen dem Rahmenmaterial und dem Trägerkörper für semipermeable Membranen verbessert und ein Trägerkörper für semipermeable Membranen mit einer hohen Haftfestigkeit an dem Rahmenmaterial erhalten werden kann. Ferner wird bei der Herstellung des rohrförmigen Trägerkörpers für semipermeable Membranen in rohrförmigen bzw. schlauchartigen Modulen durch das Schmelzen des Mantelabschnitts die Haftung zwischen der beschichteten Oberfläche und der nicht beschichteten Oberfläche des Trägerkörpers für semipermeable Membranen erhöht, weshalb es möglich wird, einen Trägerkörper für semipermeable Membranen mit hoher Haftfestigkeit zwischen der beschichteten Oberfläche und der nicht beschichteten Oberfläche des Trägerkörpers für semipermeable Membranen zu erhalten.

Das heißt, in der vorliegenden Erfindung enthält der Trägerkörper für semipermeable Membranen als Hauptfasern gestreckte Polyesterfasern und als Bindefasern die Polyesterverbundfasern vom Kern-Mantel-Typ A. Dadurch kann ein Trägerkörper für semipermeable Membranen zur Membranbioreaktor-Behandlung erhalten werden, der ausgezeichnete Lösungsmittelbeständigkeit, hohe Haftfestigkeit zwischen dem Trägerkörper für semipermeable Membranen und dem Rahmenmaterial sowie zwischen der beschichteten Oberfläche und der nicht beschichteten Oberfläche, und ausgezeichnete Haftfestigkeit zwischen dem Trägerkörper für semipermeable Membranen und der semipermeablen Membran aufweist.

In der vorliegenden Erfindung bedeutet "kristallin" eine Eigenschaft, durch die, wenn die Temperatur nach dem Erhitzen auf eine Temperatur, bei der die Fasern schmelzen, wieder abgesenkt wird, die Fasern im geschmolzenen Zustand durch die Teilchenbewegung zwar verflochten sind, die Fasern sich beim Absenken der Temperatur und der damit verbundenen allmählichen Abnahme der Teilchenbewegung, aber nahe der Kristallisationstemperatur wieder teilweise ausrichten und kristallisieren.

In einem Verfahren zum Überprüfen der Kristallinität wird ein dynamisches Differenzkalorimeter (hergestellt von PerkinElmer Inc., Gerätename: DSC 8500) verwendet. Zunächst wird die Temperatur, beginnend bei 0°C, mit einer Aufheizrate von 10°C/min bis zum Überschreiten des Schmelzpunkts des Mantelabschnitts der Polyesterverbundfasern vom Kern-Mantel-Typ erhöht und anschließend mit einer Abkühlrate von 10°C/min bis 0°C abgekühlt. Dabei wird beobachtet, ob es durch die Kristallisation zu einem exothermen Peak kommt, und falls dies der Fall ist, kann auf das Vorhandensein von Kristallinität geschlossen werden. Die Peak-Temperatur des exothermen Peaks entspricht der Kristallisationstemperatur.

Der Schmelzpunkt des Mantelabschnitts wird unter Verwendung eines dynamischen Differenzkalorimeters (hergestellt von PerkinElmer Inc., Gerätename: DSC 8500) gemessen, wobei unter Erhöhung der Temperatur von 0°C auf 300°C mit einer Aufheizrate von 10°C/min, der durch das Kristallschmelzen hervorgerufene endotherme Peak beobachtet, und die Peak-Temperatur des endothermen Peaks als Schmelzpunkt definiert wird.

Der Glasübergangspunkt des Mantelabschnitts wird unter Verwendung eines dynamischen Differenzkalorimeters (hergestellt von PerkinElmer Inc., Gerätename: DSC 8500) gemessen. Dabei wird zunächst die Temperatur, beginnend bei 0°C, mit einer Aufheizrate von 10°C/min bis zum Überschreiten des Schmelzpunkts des Mantelabschnitts der Polyesterverbundfasern vom Kern-Mantel-Typ erhöht, während 10 Minuten auf dieser Temperatur gehalten, anschließend durch schnelles Abkühlen auf 0°C gesenkt, und im Anschluss mit einer Aufheizrate von 20°C/min von 0°C bis zum Überschreiten des Schmelzpunkts des Mantelabschnitts der Polyesterverbundfasern vom Kern-Mantel-Typ erhöht, um eine DSC-Kurve zu erhalten. In dieser wurde nach den in ISO 11357-2(2013) oder JIS K7121: 1987 beschriebenen Methoden die Temperatur an einem Punkt, an dem einander eine Gerade, die sich in vertikaler Richtung in gleicher Entfernung von den verlängerten Geraden der jeweiligen Basislinien befindet, und die Kurve des stufenförmigen Wechselabschnitts des Glasübergangs kreuzen (Mittelpunkt-Glasübergangstemperatur), gemessen.

In der vorliegenden Erfindung ist der Kernabschnitt der Polyesterverbundfasern vom Kern-Mantel-Typ A ein Polyester, in dem die Hauptwiederholungseinheit ein Alkylen-Terephthalat ist, und ist vorzugsweise Polyethylenterephthalat mit hoher Wärmebeständigkeit.

In der vorliegenden Erfindung ist die Querschnittsform der Polyesterverbundfasern vom Kern-Mantel-Typ A nicht besonders beschränkt, jedoch ist die Querschnittsform vorzugsweise eine Kreisform. Das Volumenverhältnis des Kernabschnitts zum Mantelabschnitt liegt vorzugsweise im Bereich von Kern/Mantel = 30/70 bis 70/30 und bevorzugter im Bereich von Kern/Mantel = 40/60 bis 60/40.

In der vorliegenden Erfindung beträgt das Mischungsverhältnis der Bindefasern bevorzugt 20 Gew.% oder mehr, bevorzugter 25 Gew.% oder mehr, und noch bevorzugter 30 Gew.% oder mehr in Bezug auf die Gesamtfasern. Ferner beträgt das Mischungsverhältnis der Bindefasern bevorzugt 50 Gew.% oder weniger, bevorzugter 45 Gew.% oder weniger, und noch bevorzugter 40 Gew.% oder weniger Bezug auf die Gesamtfasern. Wenn das Mischungsverhältnis der Bindefasern weniger als 20 Gew.% beträgt, neigt die Haftfestigkeit zwischen den Fasern dazu, unzureichend zu sein, die Oberfläche des Trägerkörpers für semipermeable Membranen neigt zur Fusselbildung, und die Beschichtseigenschaften der semipermeablen Membran können sich verschlechtern. Wenn andererseits das Mischungsverhältnis der Bindefasern mehr als 50 Gew.% beträgt, bildet sich durch das Schmelzen der Bindefasern leicht ein Filmüberzug auf der Oberfläche des Trägerkörpers für semipermeable Membranen, was zu einer Abnahme der Haftfestigkeit zwischen dem Trägerkörper für semipermeable Membranen und der semipermeablen Membran führen kann. Außerdem kann dadurch das durch thermisches Schweißen oder Ultraschall-Schweißen erhaltene, geschmolzene Rahmenmaterial nur schwierig in den Trägerkörper für semipermeable Membranen eingreifen, weshalb die Haftfestigkeit zwischen dem Trägerkörper für semipermeable Membranen und dem Rahmenmaterial abnehmen kann. Ferner neigt ein Abschnitt des rohrförmigen Trägerkörpers für semipermeable Membranen, in dem die beschichtete Oberfläche und die nicht beschichtete Oberfläche des Trägerkörpers für semipermeable Membranen verschmolzen sind, dazu, einen Filmüberzug zu bilden, wodurch die semipermeable Membran nur schwierig in den verschmolzenen Teil eingreifen kann, was zu einer Abnahme der Haftfestigkeit zwischen dem Trägerkörper für semipermeable Membranen und der semipermeablen Membran führen kann.

In der vorliegenden Erfindung beträgt das Mischungsverhältnis der Polyesterverbundfasern vom Kern-Mantel-Typ A bevorzugt 5 Gew.% oder mehr, bevorzugter 10 Gew.% oder mehr, und noch bevorzugter 15 Gew.% oder mehr in Bezug auf die Gesamtfasern. Ferner beträgt das Mischungsverhältnis der Polyesterverbundfasern vom Kern-Mantel-Typ A bevorzugt 40 Gew.% oder weniger, bevorzugter 35 Gew.% oder weniger, noch bevorzugter 30 Gew.% oder weniger, und besonders bevorzugt 25 Gew.% oder weniger in Bezug auf die Gesamtfasern, und kann auch 20 Gew.% oder weniger betragen. Wenn das Mischungsverhältnis der Polyesterverbundfasern vom Kern-Mantel-Typ A weniger als 5 Gew.% beträgt, kann die Haftfestigkeit zwischen dem Trägerkörper für semipermeable Membranen und der semipermeablen Membran abnehmen. Wenn das Mischungsverhältnis der Polyesterverbundfasern vom Kern-Mantel-Typ A andererseits 40 Gew.% überschreitet, bildet sich leicht ein Filmüberzug an der Oberfläche des Trägerkörpers für semipermeable Membranen. Somit kann das durch thermisches Schweißen oder Ultraschall-Schweißen erhaltene, geschmolzene Rahmenmaterial nur schwierig in den Trägerkörper für semipermeable Membranen eingreifen, wodurch die Haftfestigkeit zwischen dem Trägerkörper für semipermeable Membranen und dem Rahmenmaterial abnehmen kann. Ferner neigt der Abschnitt des rohrförmigen Trägerkörpers für semipermeable Membranen, in dem die beschichtete Oberfläche und die nicht beschichtete Oberfläche des Trägerkörpers für semipermeable Membranen verschmolzen sind, dazu, einen Filmüberzug zu bilden, wodurch die semipermeable Membran nur schwierig in den verschmolzenen Teil eingreifen kann, was zu einer Abnahme der Haftfestigkeit zwischen dem Trägerkörper für semipermeable Membranen und der semipermeablen Membran führen kann.

In der vorliegenden Erfindung ist es bevorzugt, dass die Bindefasern nicht gestreckte Polyesterfasern als einen Bestandteil enthalten. Da die Polyesterverbundfasern vom Kern-Mantel-Typ A einen Schmelzpunkt im Bereich von 160 bis 185°C aufweisen und einen kristallinen copolymerisierten Polyester als Mantelabschnitt beinhalten, ist es im Trocknungsprozess bei der Herstellung des Vliesstoffs im Nassverfahren erforderlich, die Trocknungstemperatur auf mindestens 160°C zu erhöhen. Es ist jedoch schwierig, die Trocknungstemperatur in einer normalen Papiermaschine auf 160°C oder höher einzustellen. Wenn nur die Polyesterverbundfasern vom Kern-Mantel-Typ A als Bindefasern eingesetzt werden, kann es daher vorkommen, dass die Festigkeit des Vliesstoffs nach der Blattbildung unzureichend ist und der Vliesstoff nicht dem Heißkalandrieren zugeführt werden kann. In der vorliegenden Erfindung wurde festgestellt, dass durch den zusätzlichen Einsatz von nicht gestreckten Polyesterfasern als Bindefasern ein Effekt erzielt wird, durch den die Festigkeit der Polyesterverbundfasern vom Kern-Mantel-Typ A im Blattbildungsprozess verbessert wird.

Beispiele für die nicht gestreckten Polyesterfasern umfassen nicht gestreckte Fasern, die durch das Spinnen von Polyestern wie Polyethylenterephthalat, Polytrimethylenterephthalat, und Polybutylenterephthalat, oder Copolymerisaten mit diesen Polyestern als Hauptbestandteile, bei einer Spinngeschwindigkeit von 800 bis 1200 m/min erhalten werden. Durch Heißdruckschmelzen dieser nicht gestreckten Polyesterfasern mittels Heißkalandrieren kann ein Trägerkörper für semipermeable Membranen mit hoher Festigkeit erhalten werden.

Das Mischungsverhältnis der nicht gestreckten Polyesterfasern beträgt bevorzugt 0 bis 30 Gew.% und bevorzugter 0 bis 25 Gew.%, bezogen auf die Gesamtfasern. Wenn das Mischungsverhältnis der nicht gestreckten Polyesterfasern mehr als 30 Gew.% beträgt, bildet sich leicht ein Filmüberzug an der Oberfläche des Trägerkörpers für semipermeable Membranen. Somit kann das durch thermisches Schweißen oder Ultraschall-Schweißen erhaltene, geschmolzene Rahmenmaterial nur schwierig in den Trägerkörper für semipermeable Membranen eingreifen, wodurch die Haftfestigkeit zwischen dem Trägerkörper für semipermeable Membranen und dem Rahmenmaterial abnimmt. Ferner neigt der Abschnitt des rohrförmigen Trägerkörpers für semipermeable Membranen, in dem die beschichtete Oberfläche und die nicht beschichtete Oberfläche des Trägerkörpers für semipermeable Membranen verschmolzen sind, dazu, einen Filmüberzug zu bilden, wodurch die semipermeable Membran nur schwierig in den verschmolzenen Teil eingreifen kann, was zu einer Abnahme der Haftfestigkeit zwischen dem Trägerkörper für semipermeable Membranen und der semipermeablen Membran führen kann.

In der vorliegenden Erfindung beträgt der Faserdurchmesser der Bindefasern bevorzugt 2 bis 30 µm, bevorzugter 5 bis 27 µm, und noch bevorzugter 7 bis 25 µm. Wenn Bindefasern mit einem Faserdurchmesser von weniger als 2 µm verwendet werden, ist die Festigkeit des Trägerkörpers für semipermeable Membranen möglicherweise unzureichend. Wenn andererseits Bindefasern mit einem Faserdurchmesser von mehr als 30 µm verwendet werden, verschlechtert sich die Faserdispersion während der Blattbildung, die Beschaffenheit des Trägerkörpers für semipermeable Membranen neigt zu Unregelmäßigkeiten, und die Filmbildungseigenschaften der funktionellen Trennschicht können beeinträchtigt werden.

In der vorliegenden Erfindung beträgt die Faserlänge der Bindefasern bevorzugt 1 bis 15 mm, bevorzugter 3 bis 12 mm, und noch bevorzugter 3 bis 10 mm. Wenn die Faserlänge weniger als 1 mm beträgt, kann es zu einer Abnahme der Festigkeit des Trägerkörpers für semipermeable Membranen kommen. Wenn die Faserlänge mehr als 15 mm beträgt, kommt es leicht zu einer Verschlechterung der Faserdispersion, die Beschaffenheit des Trägerkörpers für semipermeable Membranen neigt zu Unregelmäßigkeiten, und die Filmbildungseigenschaften der funktionellen Trennschicht können beeinträchtigt werden.

In dem erfindungsgemäßen Trägerkörper für semipermeable Membranen zur Membranbioreaktor-Behandlung werden als Hauptfasern gestreckte Polyesterfasern verwendet. Wenn der Vliesstoff Bindefasern enthält, und ein Schritt, in dem die Temperatur auf oder über den Erweichungspunkt bzw. die Schmelztemperatur (Schmelzpunkt) der Bindefasern erhöht wird, in das Herstellungsverfahren des Trägerkörpers für semipermeable Membranen zur Membranbioreaktor-Behandlung integriert wird, kann die mechanische Festigkeit des Trägerkörpers für semipermeable Membranen zur Membranbioreaktor-Behandlung durch die Bindefasern erhöht werden. In diesem Temperaturerhöhungsschritt kommt es zu keinem Erweichen oder Schmelzen der gestreckten Polyesterfasern und diese bilden als Hauptfasern das Gerüst des Trägerkörpers für semipermeable Membranen. Beispiele für die gestreckten Polyesterfasern umfassen Polyester, bei denen die Hauptwiederholungseinheit ein Alkylen-Terephthalat ist, wobei Polyethylenterephthalat mit hoher Wärmebeständigkeit bevorzugt ist. Darüber hinaus ist die Querschnittsform der Fasern vorzugsweise kreisförmig. Jedoch können auch Fasern mit unregelmäßigen Querschnitten, wie T-, Y-, oder dreiecksförmigen Querschnitten, zur Verhinderung des Durchblutens oder zur Glättung der beschichteten Oberfläche enthalten sein, allerdings nur in einem Umfang, bei dem andere Eigenschaften nicht beeinträchtigt werden.

Der Faserdurchmesser der gestreckten Polyesterfasern beträgt vorzugsweise 2 bis 30 µm, bevorzugter 5 bis 27 µm, und noch bevorzugter 7 bis 25 µm. Wenn Fasern mit einem Faserdurchmesser von weniger als 2 µm verwendet werden, ist die Festigkeit des Trägerkörpers für semipermeable Membranen möglicherweise unzureichend. Wenn andererseits Fasern mit einem Faserdurchmesser von mehr als 30 µm verwendet werden, verschlechtert sich die Faserdispersion während der Blattbildung, die Beschaffenheit des Trägerkörpers für semipermeable Membranen neigt zu Unregelmäßigkeiten, und die Filmbildungseigenschaften der semipermeablen Membran können beeinträchtigt werden.

Die Faserlänge der gestreckten Polyesterfasern ist nicht besonders beschränkt, beträgt jedoch bevorzugt 1 bis 15 mm, bevorzugter 3 bis 12 mm, und noch bevorzugter 3 bis 10 mm. Wenn die Faserlänge weniger als 1 mm beträgt, kann es zu einer Abnahme der Festigkeit des Trägerkörpers für semipermeable Membranen kommen. Wenn die Faserlänge mehr als 15 mm beträgt, kommt es leicht zu einer Verschlechterung der Faserdispersion, die Beschaffenheit des Trägerkörpers für semipermeable Membranen neigt zu Unregelmäßigkeiten, und die Filmbildungseigenschaften der semipermeablen Membran können beeinträchtigt werden.

In der vorliegenden Erfindung wird der Faserdurchmesser durch Untersuchung des Querschnitts des Trägerkörpers für semipermeable Membranen zur Membranbioreaktor-Behandlung mittels Rasterelektronenmikroskopie ermittelt. Dabei wird die Querschnittsfläche von 50 Fasern, die zufällig aus den das Vliesstoff-Basismaterial aufbauenden Fasern ausgewählt werden, gemessen, und der Faserdurchmesser durch Umwandlung in eine perfekte Kreisform ermittelt.

In dem erfindungsgemäßen Trägerkörper für semipermeable Membranen zur Membranbioreaktor-Behandlung können bei Bedarf andere Fasern als die oben erwähnten gestreckten Polyesterfasern und Bindefasern zugesetzt werden. Dabei umfassen konkrete Beispiele für synthetische Fasern zum Beispiel Fasern auf Polyolefinbasis, Polyamidbasis, Polyacrylbasis, sowie Fasern auf Vinyliden-, Polyvinylchlorid-, Benzoat-, Polychlal-, und Phenolbasis. Als Naturfasern sind Hanfzellstoff mit dünner Beschichtung, Baumwollfusseln, und Fusseln zu nennen, als Regeneratfasern Lyocellfasern, Rayon, und Cupro, als halbsynthetische Fasern Acetat, Triacetat, und Promix, und als anorganische Fasern AluminiumoxidFasern, Aluminiumoxid-Siliziumdioxid-Fasern, Steinwolle, Glasfasern, Mikroglasfasern, Zirkoniumdioxid-Fasern, Kaliumtitanat-Fasern, Aluminiumoxid-Whisker, und Aluminiumborat-Whisker. Zusätzlich zu den oben genannten Fasern können als Pflanzenfasern auch aus Holz oder Gräsern gewonnene Stoffe wie Nadelholz-Zellstoff, Laubholz-Zellstoff und andere Holzzellstoffe, Strohzellstoff, Bambuszellstoff und Kenafzellstoff verwendet werden. Ferner können die oben erwähnten Fasern fibrilliert werden, solange dies die Durchlässigkeit für Flüssigkeiten und Luft nicht beeinträchtigt. Ferner können auch Zellstofffasern verwendet werden, die aus Altpapier, Papierabfällen und dergleichen erhalten werden. Zusätzlich können auch Fasern mit unregelmäßigen Querschnitten wie T-, Y- und dreiecksförmigen Querschnitten enthalten sein.

Das Flächengewicht des erfindungsgemäßen Trägerkörpers für semipermeable Membranen zur Membranbioreaktor-Behandlung beträgt vorzugsweise 30 bis 250 g/m², bevorzugter 40 bis 230 g/m², und noch bevorzugter 50 bis 200 g/m². Wenn das Flächengewicht weniger als 30 g/m² beträgt, ist die Festigkeit des Trägerkörpers für semipermeable Membranen möglicherweise unzureichend. Wenn das Flächengewicht mehr als 250 g/m² beträgt, kommt es vor, dass der Widerstand beim Flüssigkeitsdurchtritt zunimmt, und bei zunehmender Dicke des Trägerkörpers für semipermeable Membranen kann für den Einbau einer bestimmten Menge an semipermeablen Membranen eine Vergrößerung der Module oder Einheiten notwendig sein.

Die Dicke des erfindungsgemäßen Trägerkörpers für semipermeable Membranen zur Membranbioreaktor-Behandlung beträgt vorzugsweise 50 bis 300 µm, bevorzugter 70 bis 270 µm, und noch bevorzugter 80 bis 250 µm. Wenn die Dicke mehr als 300 µm beträgt, verringert sich die Fläche für die in die Einheit integrierte semipermeable Membran, und infolgedessen kann die Lebensdauer der semipermeablen Membran abnehmen. Wenn andererseits die Dicke weniger als 50 µm beträgt, kann möglicherweise keine ausreichende Festigkeit erhalten werden.

Die Dichte des erfindungsgemäßen Trägerkörpers für semipermeable Membranen zur Membranbioreaktor-Behandlung beträgt vorzugsweise 0,30 bis 1,00 g/cm³, bevorzugter 0,35 bis 0,98 g/cm³, und noch bevorzugter 0,40 bis 0,95 g/cm³. Wenn die Dichte weniger als 0,30 g/cm³ beträgt, kann es beim Aufbringen der funktionellen Trennschicht auf den Trägerkörper für semipermeable Membranen dazu kommen, dass zu viel Beschichtungslösung in den Trägerkörper für semipermeable Membranen eindringt und die Gleichmäßigkeit der funktionellen Trennschicht beeinträchtigt wird. Wenn andererseits die Dichte mehr als 1,00 g/cm³ beträgt, enthält der Trägerkörper für semipermeable Membranen wenig Hohlräume und durch das unzureichende eingreifen der Lösung der semipermeablen Membran beim Beschichten kann es zu einer Abnahme der Haftfestigkeit kommen. Darüber hinaus kann es vorkommen, dass das durch thermisches Schweißen oder Ultraschall-Schweißen erhaltene, geschmolzene Rahmenmaterial nur schwierig in den Trägerkörper für semipermeable Membranen eingreifen kann, dass die Haftung zwischen der beschichteten Oberfläche und der nicht beschichteten Oberfläche des Trägerkörpers für semipermeable Membranen abnimmt, oder dass die Haftfestigkeit zwischen dem Trägerkörper für semipermeable Membranen und dem Rahmenmaterial sowie zwischen der beschichteten Oberfläche und der nicht beschichteten Oberfläche des Trägerkörpers für semipermeable Membranen abnimmt. Des Weiteren können die Permeabilität der Beschichtungslösung und die Haftfestigkeit zwischen dem Trägerkörper für semipermeable Membranen und der semipermeablen Membran abnehmen.

Der erfindungsgemäße Trägerkörper für semipermeable Membranen zur Membranbioreaktor-Behandlung (5) ist dadurch gekennzeichnet, dass er eine zweischichtige Struktur aufweist, die aus einer beschichteten Oberflächenschicht und einer der beschichteten Oberflächenschicht entgegengesetzten Rückflächenschicht (nicht beschichtete Oberflächenschicht) besteht, dass sowohl die beschichtete Oberflächenschicht als auch die Rückflächenschicht als Hauptfasern gestreckte Polyesterfasern und als Bindefasern die Polyesterverbundfasern vom Kern-Mantel-Typ A und nicht gestreckte Polyesterfasern enthalten, dass sowohl in der beschichteten Oberflächenschicht als auch in der Rückflächenschicht das Mischungsverhältnis der Bindefasern 25 Gew.% oder mehr und 40 Gew.% oder weniger, und das Mischungsverhältnis der Polyesterverbundfasern vom Kern-Mantel-Typ A 5 Gew.% oder mehr und 20 Gew.% oder weniger in Bezug auf die in der jeweiligen Schicht enthaltenen Gesamtfasern beträgt, und der Faserdurchmesser der in der beschichteten Oberflächenschicht enthaltenen gestreckten Polyesterfasern 6 bis 18 µm beträgt.

In den Polyesterverbundfasern vom Kern-Mantel-Typ A dringt die semipermeable Membran beim Aufbringen der semipermeablen Membran unter Sicherstellen von Hohlräumen ins Innere des Trägerkörpers für semipermeable Membranen ein. Wenn die semipermeable Membran allerdings zu sehr in den Trägerkörper für semipermeable Membranen eindringt, kann es zu einem Durchbluten der semipermeablen Membran bis zur nicht beschichteten Oberfläche des Trägerkörpers für semipermeable Membranen kommen. Daher ist es in einem Trägerkörper für semipermeable Membranen zur Membranbioreaktor-Behandlung mit einer zweischichtigen Struktur bevorzugt, dass der Faserdurchmesser der gestreckten Polyesterfasern in der beschichteten Oberflächenschicht kleiner ist als der Faserdurchmesser der gestreckten Polyesterfasern in der Rückflächenschicht. Dadurch kommt es kaum zu einem Durchbluten der semipermeablen Membran zur nicht beschichteten Oberfläche des Trägerkörpers für semipermeable Membranen, und durch die Erhöhung der Anzahl an Adhäsionspunkten zwischen der semipermeablen Membran und dem Trägerkörper für semipermeable Membranen nahe der beschichteten Oberfläche des Trägerkörpers für semipermeable Membranen wird ein Ankereffekt verstärkt, durch den die Haftung zwischen der semipermeablen Membran und dem Trägerkörper für semipermeable Membranen zunimmt. Zusätzlich können fallweise die Haftfestigkeit zwischen dem Trägerkörper für semipermeable Membranen und dem Rahmenmaterial sowie die Beschichtseigenschaften der semipermeablen Membran verbessert werden.

In dem erfindungsgemäßen Trägerkörper für semipermeable Membranen zur Membranbioreaktor-Behandlung (5) beträgt der Faserdurchmesser der gestreckten Polyesterfasern in der beschichteten Oberflächenschicht 6 bis 18 µm, vorzugsweise 6 bis 14 µm, und bevorzugter 10 bis 14 µm. Wenn der Faserdurchmesser weniger als 6 µm beträgt, dringt die semipermeable Membran beim Aufbringen der semipermeablen Membran nicht ausreichend in den Trägerkörper für semipermeable Membranen ein, und es kann zu einem Ablösen zwischen der semipermeablen Membran und dem Trägerkörper für semipermeable Membranen kommen. Wenn der Faserdurchmesser andererseits mehr als 18 µm beträgt, durchdringt die semipermeable Membran den Trägerkörper für semipermeable Membranen zu stark und es kann zu einem Durchbluten der semipermeablen Membran kommen.

In dem erfindungsgemäßen Trägerkörper für semipermeable Membranen zur Membranbioreaktor-Behandlung (5) ist es bevorzugt, dass der Faserdurchmesser der gestreckten Polyesterfasern in der Rückflächenschicht größer ist als der Faserdurchmesser der gestreckten Polyesterfasern in der beschichteten Oberflächenschicht. Der Faserdurchmesser der gestreckten Polyesterfasern in der Rückflächenschicht beträgt vorzugsweise 10 bis 25 µm, und bevorzugter 12 bis 18 µm. Wenn gestreckte Polyesterfasern mit einem Faserdurchmesser von weniger als 10 µm verwendet werden, ist die Festigkeit des Trägerkörpers für semipermeable Membranen möglicherweise unzureichend, wodurch es im Fall eines rohrförmigen Trägerkörpers für semipermeable Membranen in rohrförmigen bzw. schlauchartigen Modulen zu einer Abnahme der Luftdurchlässigkeit des Trägerkörpers für semipermeable Membranen und einer Verringerung der Durchströmung der Filtermembran nach der Aufbringung der semipermeablen Membran kommen kann. Wenn andererseits gestreckte Polyesterfasern mit einem Faserdurchmesser von mehr als 25 µm verwendet werden, verschlechtert sich die Faserdispersion während der Blattbildung, die Beschaffenheit des Trägerkörpers für semipermeable Membranen neigt zu Unregelmäßigkeiten, die Filmbildungseigenschaften der semipermeablen Membran können beeinträchtigt werden, und es kommt leicht zu einem Durchbluten der semipermeablen Membran.

Um die Durchströmung einer durch Aufbringen einer semipermeablen Membran auf einen rohrförmigen Trägerkörper für semipermeable Membranen erhaltenen Filtermembran auf einen bevorzugten Wert zu bringen, ist es wünschenswert, die Frazier-Luftdurchlässigkeit des Trägerkörpers für semipermeable Membranen auf einen bevorzugten Bereich einzustellen. In dem erfindungsgemäßen Trägerkörper für semipermeable Membranen zur Membranbioreaktor-Behandlung (5) beträgt die Frazier-Luftdurchlässigkeit vorzugsweise 0,3 bis 3,0 cm³/cm²*s, bevorzugter 0,35 bis 2,5 cm³/cm²*s, und noch bevorzugter 0,4 bis 2,0 cm³/cm²*s. Das Verfahren zum Einstellen der Frazier-Luftdurchlässigkeit kann durch Ändern des Flächengewichts, des Faserdurchmessers der gestreckten Polyesterfasern, der Sorte der Bindefasern, des Mischungsverhältnisses der Bindefasern und dergleichen realisiert werden.

Da in der vorliegenden Erfindung die Polyesterverbundfasern vom Kern-Mantel-Typ A enthalten sind, ist es bei der Herstellung eines rohrförmigen Trägerkörpers für semipermeable Membranen in rohrförmigen bzw. schlauchartigen Modulen möglich, einen Trägerkörper für semipermeable Membranen mit hoher Zugfestigkeit zu erhalten, was für die Aufrechterhaltung der Schlauch-Form wichtig ist. In dem erfindungsgemäßen Trägerkörper für semipermeable Membranen zur Membranbioreaktor-Behandlung (5) ist die durchschnittliche Zugfestigkeit des Trägerkörpers für semipermeable Membranen in MD-Richtung und CD-Richtung vorzugsweise 150 N/15 mm oder mehr, bevorzugter 170 N/15 mm oder mehr und noch bevorzugter 200 N/15 mm oder mehr. Wenn die durchschnittliche Zugfestigkeit weniger als 150 N/15 mm beträgt, kann es zur Verformung des Schlauchs im Bearbeitungsprozess des rohrförmigen Trägerkörpers für semipermeable Membranen oder im Membranbeschichtungsprozess kommen, wodurch möglicherweise keine gleichmäßige Filmbildung möglich ist. Wenn andererseits die durchschnittliche Zugfestigkeit mehr als 260 N/15 mm beträgt, ist der Trägerkörper für semipermeable Membranen im Bearbeitungsprozess des rohrförmigen Trägerkörpers für semipermeable Membranen zu steif, weshalb unter Umständen kein Schlauch geformt werden kann, und deshalb beträgt die durchschnittliche Zugfestigkeit vorzugsweise 260 N/15 mm oder weniger. Da ferner die Polyesterverbundfasern vom Kern-Mantel-Typ A enthalten sind, wird bei der Herstellung des rohrförmigen Trägerkörpers für semipermeable Membranen die Haftung zwischen der beschichteten Oberfläche und der nicht beschichteten Oberfläche des Trägerkörpers für semipermeable Membranen erhöht, weshalb ein Trägerkörper für semipermeable Membranen mit hoher Haftfestigkeit zwischen der beschichteten Oberfläche und der nicht beschichteten Oberfläche des Trägerkörpers für semipermeable Membranen erhalten werden kann.

Der Vliesstoff gemäß dem erfindungsgemäßen Trägerkörper für semipermeable Membranen zur Membranbioreaktor-Behandlung kann im Trockenverfahren oder Nassverfahren hergestellt werden. Bevorzugt ist ein Nass-Vliesstoff, der durch ein Nassverfahren gebildet wird.

Bei dem Nassherstellungsverfahren werden zuerst die Hauptfasern und die Bindefasern gleichmäßig in Wasser dispergiert, und nach einem Verfahrensschritt wie beispielsweise einer Abtrennung durch ein Sieb (Abtrennung von Fremdkörpern, Klumpen und dergleichen), wird eine Aufschlämmung mit einer auf 0,01 bis 0,50 Gew.% eingestellten, endgültigen Faserkonzentration durch Blattformung mittels einer Papiermaschine in der Form eines Nassblatts erhalten. Um ein gleichmäßiges Dispergieren der Fasern sicherzustellen, werden im Herstellungsprozess gegebenenfalls Chemikalien wie Dispergiermittel, Entschäumungsmittel, Hydrophilierungsmittel, Antistatikmittel, Polymerklebstoffe, Formtrennmittel, antibakterielle Mittel, und bakterizide Mittel hinzugefügt.

Als Papiermaschine kann eine Papiermaschine, in der ein einzelnes Blattformsieb wie ein Langsieb, ein Rundsieb oder ein geneigter Draht installiert ist, oder eine Kombinationspapiermaschine, in der zwei oder mehr Blattformsiebe desselben Typs oder verschiedener Typen online installiert sind, verwendet werden. Wenn der erfindungsgemäße Trägerkörper für semipermeable Membranen eine Mehrschichtstruktur aus zwei oder mehr Schichten aufweist, kann außerdem entweder ein Verfahren zum Laminieren der jeweils von der Papiermaschine geformten Nassblättern oder ein Verfahren, bei dem nach der Formung einer einzelnen Schicht zum Laminieren eine Aufschlämmung mit darin dispergierten Fasern auf die Schicht aufgegossen wird, angewendet werden. Beim Aufgießen der Aufschlämmung mit den darin dispergierten Fasern, kann die zuvor gebildete Schicht im nassen oder trockenen Zustand sein. Ferner können zwei oder mehr Schichten unter Einwirkung von Hitze verschmolzen werden, um einen Vliesstoff mit mehrschichtiger Struktur zu bilden.

Wenn der Vliesstoff in dem erfindungsgemäßen Trägerkörper für semipermeable Membranen zur Membranbioreaktor-Behandlung eine mehrschichtige Struktur aufweist, kann es sich um eine Mehrschichtstruktur handeln, bei der die Faserzusammensetzung der jeweiligen Schichten einheitlich ist, oder eine Mehrschichtstruktur, bei der die Faserzusammensetzung der jeweiligen Schichten unterschiedlich ist, um die Permeabilität für Flüssigkeiten in dem Trägerkörper für semipermeable Membranen zur Membranbioreaktor-Behandlung in der Dickenrichtung zu steuern. Im Fall einer Mehrschichtstruktur kann die Faserkonzentration der Aufschlämmung durch Verringern des Flächengewichts der jeweiligen Schichten reduziert werden, so dass die Beschaffenheit des Vliesstoffs verbessert wird und sich infolgedessen die Glätte und Gleichmäßigkeit der beschichteten Oberfläche verbessern. Selbst wenn Ungleichmäßigkeiten in der Beschaffenheit der jeweiligen Schichten auftreten, können diese durch Laminieren kompensiert werden. Darüber hinaus kann die Blattformungsgeschwindigkeit erhöht und die Bedienbarkeit verbessert werden.

Das im Blattformsieb erzeugte Nassblatt wird mit einem Yankee-Trockner, einem Lufttrockner, einem Zylindertrockner, einem Saugtrommeltrockner, einem Infrarottrockner oder dergleichen getrocknet, wodurch ein Blatt (Grundblatt) erhalten wird. Beim Trocknen wird das Nassblatt in engen Kontakt mit der Heizwalze eines Yankee-Trockners oder dergleichen gebracht und unter Druck und Hitze getrocknet, so dass die Glätte der mit der Heizwalze in Kontakt stehenden Oberfläche verbessert wird. Unter Druck und Hitze Trocknen bedeutet, dass das Nassblatt mit einer Andruckwalze oder dergleichen gegen die Heizwalze gedrückt wird, um es zu trocknen. Die Oberflächentemperatur der Heizwalze beträgt vorzugsweise 100 bis 180°C, bevorzugter 100 bis 160°C, und noch bevorzugter 110 bis 160°C. Der Druck beträgt vorzugsweise 5 bis 100 kN/m, bevorzugter 10 bis 80 kN/m.

Bei der vorliegenden Erfindung ist es bevorzugt, dass der Vliesstoff (Grundblatt) ferner mittels Heißkalandrieren bearbeitet wird. Beim Heißkalandrieren können Kalandereinheiten mit einer Walzenstruktur wie beispielsweise Strukturen aus Metallwalze-Metallwalze, Metallwalze-elastische Walze, Metallwalze-Baumwollwalze oder Metallwalze-Siliziumwalze allein oder in Kombination verwendet werden. Mindestens eine Metallwalze der Kalandereinheit wird erhitzt. Bei der vorliegenden Erfindung ist es bevorzugt, eine Kalandereinheit der Struktur Metallwalze-elastische Walze zu verwenden, da mit dieser eine ausreichende Wärmemenge auf den Vliesstoff aufgebracht und ein Trägerkörper für semipermeable Membranen mit hoher Festigkeit erhalten werden kann.

Beim Heißkalandrieren liegt die Temperatur der Metallwalze vorzugsweise mindestens 10°C, bevorzugter mindestens 20°C über dem Schmelzpunkt des Mantelabschnitts der Polyesterverbundfasern vom Kern-Mantel-Typ A. Wenn die Temperatur der Metallwalze weniger als 10°C über dem Schmelzpunkt des Mantelabschnitts der Polyesterverbundfasern vom Kern-Mantel-Typ A liegt, kann möglicherweise keine ausreichende Festigkeit für den Trägerkörper für semipermeable Membranen erreicht werden.

Beim Heißkalandrieren beträgt der Nipdruck im Walzenspalt vorzugsweise 19 bis 180 kN/m, bevorzugter 39 bis 150 kN/m. Die Verarbeitungsgeschwindigkeit beträgt vorzugsweise 5 bis 150 m/min, bevorzugter 10 bis 80 m/min.

### Beispiele

Im Folgenden wird die vorliegende Erfindung konkreter unter Bezugnahme auf Beispiele beschrieben. Die vorliegende Erfindung ist allerdings nicht auf diese Beispiele beschränkt. Sofern nicht anders angegeben, sind alle Anteile und Prozentsätze in den Beispielen auf die Masse bezogen.

### Hauptfasern

### Gestreckte PET-Faser 1

Eine gestreckte Polyesterfaser aus Polyethylenterephthalat mit einem Faserdurchmesser von 5 µm und einer Faserlänge von 3 mm wurde als gestreckte PET-Faser 1 bezeichnet.

### Gestreckte PET-Faser 2

Eine gestreckte Polyesterfaser aus Polyethylenterephthalat mit einem Faserdurchmesser von 6 µm und einer Faserlänge von 5 mm wurde als gestreckte PET-Faser 2 bezeichnet.

### Gestreckte PET-Faser 3

Eine gestreckte Polyesterfaser aus Polyethylenterephthalat mit einem Faserdurchmesser von 7 µm und einer Faserlänge von 3 mm wurde als gestreckte PET-Faser 3 bezeichnet.

### Gestreckte PET-Faser 4

Eine gestreckte Polyesterfaser aus Polyethylenterephthalat mit einem Faserdurchmesser von 10 µm und einer Faserlänge von 5 mm wurde als gestreckte PET-Faser 4 bezeichnet.

### Gestreckte PET-Faser 5

Eine gestreckte Polyesterfaser aus Polyethylenterephthalat mit einem Faserdurchmesser von 13 µm und einer Faserlänge von 5 mm wurde als gestreckte PET-Faser 5 bezeichnet.

### Gestreckte PET-Faser 6

Eine gestreckte Polyesterfaser aus Polyethylenterephthalat mit einem Faserdurchmesser von 14 µm und einer Faserlänge von 5 mm wurde als gestreckte PET-Faser 6 bezeichnet.

### Gestreckte PET-Faser 7

Eine gestreckte Polyesterfaser aus Polyethylenterephthalat mit einem Faserdurchmesser von 18 µm und einer Faserlänge von 10 mm wurde als gestreckte PET-Faser 7 bezeichnet.

### Gestreckte PET-Faser 8

Eine gestreckte Polyesterfaser aus Polyethylenterephthalat mit einem Faserdurchmesser von 25 µm und einer Faserlänge von 10 mm wurde als gestreckte PET-Faser 8 bezeichnet.

### Gestreckte PET-Faser 9

Eine gestreckte Polyesterfaser aus Polyethylenterephthalat mit einem Faserdurchmesser von 40 µm und einer Faserlänge von 10 mm wurde als gestreckte PET-Faser 9 bezeichnet.

### Bindefasern

### Kern-Mantel PET-Faser 1

Die Polyesterverbundfaser vom Kern-Mantel-Typ A (CASVEN (eingetragenes Markenzeichen) 8080, hergestellt von Unitika Inc.) mit einem Faserdurchmesser von 15 µm, einer Faserlänge von 5 mm, einem Kernabschnitt aus Polyethylenterephthalat (Schmelzpunkt: 260°C) und einem Mantelabschnitt aus kristallinem copolymerisiertem Polyester mit einem Schmelzpunkt von 180°C, in dem eine Dicarbonsäurekomponente Terephthalsäure ist und die Diolkomponenten Ethylenglykol und Tetramethylenglykol sind, wurde als Kern-Mantel PET-Faser 1 bezeichnet.

### Kern-Mantel PET-Faser 2

Eine Polyesterverbundfaser vom Kern-Mantel-Typ (CASVEN (eingetragenes Markenzeichen) 7080, hergestellt von Unitika Inc.) mit einem Faserdurchmesser von 15 µm, einer Faserlänge von 5 mm, einem Kernabschnitt aus Polyethylenterephthalat (Schmelzpunkt: 260°C) und einem Mantelabschnitt aus kristallinem copolymerisiertem Polyester mit einem Schmelzpunkt von 159°C, in dem die Dicarbonsäurekomponente Terephthalsäure ist und die Diolkomponenten Ethylenglykol, Tetramethylenglykol und ε-Caprolaclan sind, wurde als Kern-Mantel PET-Faser 2 bezeichnet.

### Kern-Mantel PET-Faser 3

Eine Polyesterverbundfaser vom Kern-Mantel-Typ (MELTY (eingetragenes Markenzeichen) 4080, hergestellt von Unitika Inc.) mit einem Faserdurchmesser von 15 µm, einer Faserlänge von 5 mm, einem Kernabschnitt aus Polyethylenterephthalat (Schmelzpunkt: 260°C) und einem Mantelabschnitt aus nicht kristallinem copolymerisiertem Polyester mit einer Erweichungstemperatur von 75°C, in dem die Dicarbonsäurekomponenten Terephthalsäure und Isophthalsäure und die Diolkomponenten Ethylenglykol und Diethylenglykol sind, wurde als Kern-Mantel PET-Faser 3 bezeichnet.

### Kern-Mantel PET-Faser 4

Eine Polyesterverbundfaser vom Kern-Mantel-Typ (MELTY (eingetragenes Markenzeichen) 6080, hergestellt von Unitika Inc.) mit einem Faserdurchmesser von 13 µm, einer Faserlänge von 5 mm, einem Kernabschnitt aus Polyethylenterephthalat (Schmelzpunkt: 260°C) und einem Mantelabschnitt aus Polyethylen (PE, Schmelzpunkt: 130°C) wurde als Kern-Mantel PET-Faser 4 bezeichnet.

### Kern-Mantel PET-Faser 5

Eine Polyesterverbundfaser vom Kern-Mantel-Typ (TJ04BN (eingetragenes Markenzeichen), hergestellt von Teijin Inc.) mit einem Faserdurchmesser von 15 µm, einer Faserlänge von 5 mm, einem Kernabschnitt aus Polyethylenterephthalat (Schmelzpunkt: 260°C) und einem Mantelabschnitt aus kristallinem copolymerisiertem Polyester mit einem Schmelzpunkt von 153°C, in dem die Dicarbonsäurekomponenten Terephthalsäure und Isophthalsäure und die Diolkomponenten Ethylenglykol und Tetramethylenglykol sind, wurde als Kern-Mantel PET-Faser 5 bezeichnet.

### Kern-Mantel PET-Faser 6

Eine Polyesterverbundfaser vom Kern-Mantel-Typ (TJ04CN (eingetragenes Markenzeichen), hergestellt von Teijin Inc.) mit einem Faserdurchmesser von 15 µm, einer Faserlänge von 5 mm, einem Kernabschnitt aus Polyethylenterephthalat (Schmelzpunkt: 260°C) und einem Mantelabschnitt aus nicht kristallinem copolymerisiertem Polyester mit einer Erweichungstemperatur von 75°C, in dem die Dicarbonsäurekomponenten Terephthalsäure und Isophthalsäure und die Diolkomponenten Ethylenglykol und Diethylenglykol sind, wurde als Kern-Mantel PET-Faser 6 bezeichnet.

### Nicht gestreckte PET-Faser 1

Eine nicht gestreckte Polyesterfaser (Schmelzpunkt: 260°C) (TA07N, hergestellt von Teijin Inc.), die aus Polyethylenterephthalat mit Isophthalsäure als Dicarbonsäurekomponente besteht, und einen Faserdurchmesser von 11 µm und eine Faserlänge von 5 mm aufweist, wurde als nicht gestreckte PET-Faser 1 bezeichnet.

Die Trägerkörper für semipermeable Membranen zur Membranbioreaktor-Behandlung der Beispiele 1 bis 12 und der Vergleichsbeispiele 1 bis 6 wurden unter den folgenden Bedingungen hergestellt.

### Herstellung Grundblatt

Wasser wurde in einen Dispersionstank mit einem Volumen von 2 m³ gefüllt und die Rohmaterialien wurden in den in Tab. 1 aufgelisteten Mischungsverhältnissen (Anteilen) gemischt. Dann wurde die Mischung bei einer Dispersionskonzentration von 0,2 Gew.% 5 Minuten lang dispergiert, und in einer Rundsieb-Papiermaschine ein Nassblatt geformt. Dieses wurde im Anschluss mit einem Yankee-Trockner mit einer Oberflächentemperatur von 140°C unter Druck und Hitze getrocknet und mit den in Tab. 1 aufgelisteten Flächengewichten als Zielgewichte wurden Nass-Vliesstoffe (Grundblätter 1 bis 18) mit einer Breite von 500 mm erhalten.

**[Tab. 1]**

| | | | | | | | | | | | | | |
|---|---|---|---|---|---|---|---|---|---|---|---|---|---|
| | | Mischmenge (Massenanteile) | | | | | | | | | | | Flächengewicht (g/m²) |
| | | Hauptfasern | | | | Bindefasern | | | | | | | |
| | | Gestreckte PET-Faser 3 | Gestreckte PET-Faser 5 | Gestreckte PET-Faser 7 | Gestreckte PET-Faser 8 | Kern-Mantel PET-Faser 1 | Kern-Mantel PET-Faser 2 | Kern-Mantel PET-Faser 3 | Kern-Mantel PET-Faser 4 | Kern-Mantel PET-Faser 5 | Kern-Mantel PET-Faser 6 | Nicht gestreckte PET-Faser 1 | |
| Faserdurchmesser | µm | 7 | 13 | 18 | 25 | 15 | 15 | 15 | 13 | 15 | 15 | 11 | |
| Faserlänge | mm | 3 | 5 | 10 | 10 | 5 | 5 | 5 | 5 | 5 | 5 | 5 | |
| Schmelzpunkt | °C | 260 | 260 | 260 | 260 | Mantel 180 | Mantel 159 | Nicht zutreffend im Mantel | Mantel PE 130 | Mantel 153 | Nicht zutreffend im Mantel | 260 | |
| Kristallisationstemperatur | °C | - | - | - | - | Mantel 126 | Mantel 125 | Nicht zutreffend im Mantel | | Mantel 89 | Nicht zutreffend im Mantel | - | |
| Glasübergangspunkt | °C | - | - | - | - | Mantel 50 | Mantel 34 | Mantel 67 | | Mantel 40 | Mantel 67 | - | |
| Volumenverhälmis Kern/Mantel | - | - | - | - | - | 50/50 | 50/50 | 50/50 | 50/50 | 50/50 | 50/50 | - | |
| Beispiel 1 | Grundblatt 1 | | 80 | | | 5 | | | | | | 15 | 73 |
| Beispiel 2 | Grundblatt 2 | | 75 | | | 5 | | | | | | 20 | 73 |
| Beispiel 3 | Grundblatt 3 | | 70 | | | 10 | | | | | | 20 | 73 |
| Beispiel 4 | Grundblatt 4 | | 60 | | | 20 | | | | | | 20 | 73 |
| Beispiel 5 | Grundblatt 5 | | 50 | | | 30 | | | | | | 20 | 73 |
| Beispiel 6 | Grundblatt 6 | | 50 | | | 40 | | | | | | 10 | 73 |
| Beispiel 7 | Grundblatt | | 80 | | | 10 | | | | | | 10 | 73 |
| Beispiel 8 | Grundblatt | | 60 | | | 10 | | | | | | 30 | 73 |
| Beispiel 9 | Grundblatt 9 | | 50 | | | 10 | | | | | | 40 | 73 |
| Beispiel 10 | Grundblatt | 10 | 60 | | | 10 | | | | | | 20 | 73 |
| Beispiel 11 | Grundblatt 11 | | 50 | 10 | 10 | 10 | | | | | | 20 | 73 |
| Beispiel 12 | Grundblatt 12 | | 60 | | | 30 | | | | | | 10 | 73 |
| Vergleichsbeispiel 1 | Grundblatt 13 | | 70 | | | | | | | | | 30 | 73 |
| Vergleichsbeispiel | Grundblatt 14 | | 60 | | | | 30 | | | | | 10 | 73 |
| Vergleichsbeispiel 3 | Grundblatt 15 | | 60 | | | | | 30 | | | | 10 | 73 |
| Vergleichsbeispiel 4 | Grundblatt 16 | | 60 | | | | | | 30 | | | 10 | 73 |
| Vergleichsbeispiel 5 | Grundblatt 17 | | 60 | | | | | | | 30 | | 10 | 73 |
| Vergleichsbeispiel 6 | Grundblatt 18 | | 60 | | | | | | | | 30 | 10 | 73 |

### Heißkalandrieren

Das erhaltene Grundblatt wurde einem Heißkalandrierprozess in einer Kalandereinheit vom Aufbau Metallwalze-elastische Walze unter den in Tab. 2 aufgelisteten Bedingungen unterzogen, um die Trägerkörper für semipermeable Membranen zur Membranbioreaktor-Behandlung der Beispiele 1 bis 12 und der Vergleichsbeispiele 1 bis 6 zu erhalten. Die Bearbeitung erfolgte dermaßen, dass eine Oberfläche, die in einem ersten Schritt auf die Metallwalze gedrückt wurde, in einem zweiten Schritt auf die elastische Walze gedrückt wurde. Die Oberfläche, die im ersten Schritt auf die Metallwalze gedrückt wurde, bildete die beschichtete Oberfläche, während die Oberfläche, die im zweiten Schritt auf die Metallwalze gedrückt wurde, die nicht beschichtete Oberfläche bildete.

**[Tab. 2]**

| | | Schrittanzahl (Anzahl) | Temperatur der Metallwalze (°C) | Shore D-Härte der elastischen Walze | Liniendruck (kN/m) | Verarbeitungsgeschwindigkeit (m/min) |
|---|---|---|---|---|---|---|
| Beispiel 1 | Grundblatt 1 | 2 | 230 | 92 | 90 | 40 |
| Beispiel 2 | Grundblatt 2 | 2 | 230 | 92 | 90 | 40 |
| Beispiel 3 | Grundblatt 3 | 2 | 230 | 92 | 90 | 40 |
| Beispiel 4 | Grundblatt 4 | 2 | 230 | 92 | 90 | 40 |
| Beispiel 5 | Grundblatt 5 | 2 | 230 | 92 | 90 | 40 |
| Beispiel 6 | Grundblatt 6 | 2 | 230 | 92 | 90 | 40 |
| Beispiel 7 | Grundblatt 7 | 2 | 230 | 92 | 90 | 40 |
| Beispiel 8 | Grundblatt 8 | 2 | 230 | 92 | 90 | 40 |
| Beispiel 9 | Grundblatt 9 | 2 | 230 | 92 | 90 | 40 |
| Beispiel 10 | Grundblatt | 2 | 230 | 92 | 90 | 40 |
| Beispiel 11 | Grundblatt 11 | 2 | 230 | 92 | 90 | 40 |
| Beispiel 12 | Grundblatt 12 | 2 | 230 | 92 | 90 | 40 |
| Vergleichsbeispiel 1 | Grundblatt 13 | 2 | 230 | 92 | 90 | 40 |
| Vergleichsbeispiel 2 | Grundblatt 14 | 2 | 230 | 92 | 90 | 40 |
| Vergleichsbeispiel 3 | Grundblatt 15 | 2 | 230 | 92 | 90 | 40 |
| Vergleichsbeispiel 4 | Grundblatt 16 | 2 | 230 | 92 | 90 | 40 |
| Vergleichsbeispiel 5 | Grundblatt 17 | 2 | 230 | 92 | 90 | 40 |
| Vergleichsbeispiel 6 | Grundblatt 18 | 2 | 230 | 92 | 90 | 40 |

Die folgenden Messungen und Bewertungen wurden an den in den Beispielen 1 bis 12 und den Vergleichsbeispielen 1 bis 6 erhaltenen Trägerkörpern für semipermeable Membranen zur Membranbioreaktor-Behandlung durchgeführt, und die Ergebnisse in den Tabellen 3 und 4 aufgelistet.

### Flächengewicht

Das Flächengewicht wurde gemäß JIS P 8124:2011 gemessen.

### Dicke und Dichte des Trägerkörpers für semipermeable Membranen zur Membranbioreaktor-Behandlung

Die Dicke des Trägerkörpers für semipermeable Membranen wurde gemäß JIS P 8118:2014 gemessen.

### Lösungsmittelbeständigkeit des Trägerkörpers für semipermeable Membranen

Der Trägerkörper für semipermeable Membranen wurde 10 Sekunden in NMP getaucht, dann mit reinem Wasser gewaschen und 24 Stunden in einer Atmosphäre von 23°C und 50% Feuchtigkeit getrocknet, um einen lösungsmittelbehandelten Trägerkörper für semipermeable Membranen zu erhalten. Ein Material-Prüfstand (Handelsname: STA-1150, hergestellt von ORIENTEC CORPORATION) wurde verwendet, um bei einem Greifintervall von 100 mm und einer Zuggeschwindigkeit von 100 mm/min die maximale Last des Trägerkörpers für semipermeable Membranen vor und nach der Lösungsmittelbehandlung in MD-Richtung (vertikale Richtung, Strömungsrichtung) und CD-Richtung (horizontale Richtung, Breitenrichtung) zu bestimmen, bei der der Trägerkörper für semipermeable Membranen beim Hochziehen des oberen Spannarms bricht. Die Festigkeit des Trägerkörpers für semipermeable Membranen wurde als die Summe der maximalen Last in der MD-Richtung und der CD-Richtung bestimmt und die Lösungsmittelbeständigkeit anhand folgender Kriterien bewertet.
$\left(Festigkeit des Trägerkörpers für semipermeable Membranen nach Lösungsmittelbehandlung/Festigkeit des Trägerkörpers für semipermeable Membranen vor Lösungsmittelbehandlung\right) \times 100$
A: 80% oder mehr.
B: 70% oder mehr, aber unter 80%.
C: Unter 70%.

### Haftfestigkeit zwischen Trägerkörper für semipermeable Membranen und Rahmenmaterial

Ein zu einer Breite von 30 mm und einer Länge von 50 mm geschnittener Trägerkörper für semipermeable Membranen wurde auf eine ABS-Harzplatte gleicher Größe platziert und durch Andrücken des Kopfes (Produktnummer: N1, 4 mm x 4 mm) eines Ultraschallklebegeräts (Shenzhen Keijing Star Technology Ltd., Produktname: MSK-800) an den Trägerkörper für semipermeable Membranen bei einer Leistung von 40%, einem Luftdruck an der Quelle von 0,15 MPa und einer Klebezeit von 1,0 Sekunden, wurden die ABS-Harzplatte und die nicht beschichtete Oberfläche des Trägerkörpers für semipermeable Membranen, wie in Fig. 1 gezeigt, an Ultraschallschmelzpunkten zusammengeklebt. Ferner wurde der Trägerkörper für semipermeable Membranen an dem durch die gepunktete Linie in Fig. 1 gezeigten Faltabschnitt zurückgefaltet. Wie in Fig. 2 gezeigt, wurden der Trägerkörper für semipermeable Membranen und die ABS-Harzplatte in den Spannarmen eines Material-Prüfstands (Gerätename: STA-1150, hergestellt von ORIENTEC CORPORATION) mit einem Spannintervall von 15 mm fixiert, um bei einer konstanten Geschwindigkeit von 100 mm/min die maximale Last, bei der sich der Trägerkörper für semipermeable Membranen und die ABS-Harzplatte beim Hochziehen des oberen Spannarms voneinander lösen, zu bestimmen. Diese maximale Last wurde als "Haftfestigkeit zwischen dem Trägerkörper für semipermeable Membranen und dem Rahmenmaterial" definiert und nach folgenden Kriterien bewertet.

A: Die Haftfestigkeit von Beispiel 2 wird als 1,00 (Referenz) angenommen, das Festigkeitsverhältnis zu Beispiel 2 beträgt 0,90 oder mehr.
B: Das Festigkeitsverhältnis zu Beispiel 2 beträgt 0,70 oder mehr, aber weniger als 0,90.
C: Das Festigkeitsverhältnis zu Beispiel 2 beträgt weniger als 0,70.

### Haftfestigkeit zwischen Trägerkörper für semipermeable Membranen und semipermeabler Membran

Unter Verwendung einer Beschichtungsvorrichtung mit konstanter Geschwindigkeit (Handelsname: TQC vollautomatischer Filmapplikator, COTEC Inc.) wurde bei konstantem Abstand eine mit Magic Ink (eingetragenes Markenzeichen) gefärbte NMP-Lösung (Konzentration: 12%) aus Polyvinylidenfluorid (PVDF) auf die beschichtete Oberfläche des Trägerkörpers für semipermeable Membranen aufgetragen. Danach wurde die Oberfläche mit Wasser gewaschen und getrocknet, und ein PVDF-Film wurde auf der beschichteten Oberfläche des Trägerkörpers für semipermeable Membranen erhalten, wodurch die semipermeable Membran hergestellt wurde.

Einen Tag nach der Herstellung der semipermeablen Membran wurde der Trägerkörper für semipermeable Membranen zu einer Probe mit einer Breite von 24 mm (Querrichtung bezüglich der Beschichtungsrichtung) und einer Länge von 50 mm (Beschichtungsrichtung) geschnitten. Ein auf eine Breite von 24 mm und eine Länge von 30 mm geschnittenes Zellophan-Klebeband (hergestellt von Nichiban Inc., Handelsname: Lpack (eingetragenes Markenzeichen) LP24) wurde nur auf einer Länge von 10 mm an der nicht beschichteten Oberfläche des geschnittenen Trägerkörpers für semipermeable Membranen aufgeklebt und der verbleibende Teil des Zellophan-Klebebands mit einer Breite von 24 mm und einer Länge von 20 mm wurde als Klebeteil belassen. Als nächstes wurde in einem Bereich der Oberfläche der semipermeablen Membran mit einer Breite von 24 mm und einer Länge von 10 mm, der Klebeteil eines Haftmarkers (hergestellt von LION OFFICE PRODUCTS CORP., Handelsname: Stick on Notes SN-23) angeklebt. Der Klebeteil (24 mm x 20 mm) des Zellophan-Klebebandes und der Nicht-Klebeteil des Haftmarkers wurden gehalten und mit der Hand in jene Richtung gezogen, in der die semipermeable Membran und der Trägerkörper für semipermeable Membranen sich voneinander lösen. Dabei wurde die Haftfestigkeit zwischen dem Trägerkörper für semipermeable Membranen und der semipermeablen Membran anhand des Zustands beim Aufbringen der Kraft bewertet. Fünf Proben wurden vorbereitet und fünf Tests durchgeführt.

Wenn ein Zellophan-Klebeband auf die Oberfläche der semipermeablen Membran und auf die nicht beschichtete Oberfläche aufgeklebt und die beiden Stücke Zellophan-Klebeband auseinandergezogen wurden, kam es in nahezu allen Fällen zu einem Ablösen zwischen der semipermeablen Membran und dem Trägerkörper für semipermeable Membranen, wodurch eine Bewertung der Haftfestigkeit zwischen dem Trägerkörper für semipermeable Membranen und der semipermeablen Membran schwierig war. Durch Verwendung eines Haftmarkers, der eine geringere Haftfähigkeit als das Zellophan-Klebeband aufweist, und Überprüfung der Stelle, an der es zur Ablösung kam, konnte die Haftfestigkeit zwischen der semipermeablen Membran und dem Trägerkörper für semipermeable Membranen bewertet werden. Die "Haftfestigkeit zwischen dem Trägerkörper für semipermeable Membranen und der semipermeablen Membran" wurde anhand folgender Bewertungskriterien bewertet.

### Bewertungskriterien

A: In allen fünf Tests kam es zu einem Ablösen zwischen der semipermeablen Membran und dem Haftmarker. Entspricht einem sehr guten Wert.
B: In drei oder vier Tests kam es zu einem Ablösen zwischen der semipermeablen Membran und dem Haftmarker. Entspricht einem guten Wert.
C: In ein oder zwei Tests kam es zu einem Ablösen zwischen der semipermeablen Membran und dem Haftmarker. Entspricht der Untergrenze für praktische Anwendungen.
D: In allen 5 Tests kam es zu einem Ablösen zwischen der semipermeablen Membran und dem Trägerkörper für semipermeable Membranen. Befindet sich unter dem Niveau für praktische Anwendungen.

### Beschichtungseigenschaften der semipermeablen Membran im Trägerkörper für semipermeable Membranen

Die auf einer quadratischen Fläche der semipermeablen Membran mit einer Breite von 10 cm und einer Länge von 10 cm vorzufindende Anzahl der durch Fusselbildung der Oberfläche des Trägerkörpers für semipermeable Membranen beschädigten Abschnitte (schadhafte Teile) der in "Haftfestigkeit zwischen Trägerkörper für semipermeable Membranen und semipermeabler Membran" hergestellten semipermeablen Membran wurde mit einer Lupe mit 10-facher Vergrößerung untersucht, und die "Beschichtungseigenschaften der semipermeablen Membran im Trägerkörper für semipermeable Membranen" anhand folgender Bewertungskriterien bewertet.

### Bewertungskriterien

A: Die Anzahl der beschädigten Teile beträgt nicht mehr als drei, was einem guten Wert entspricht.
B: Die Anzahl der beschädigten Teile beträgt nicht mehr als fünf, was praktische Anwendbarkeit erlaubt.
C: Die Anzahl der beschädigten Teile beträgt mehr als 5, was unter dem Niveau für praktische Anwendungen liegt.

### Falten im Trägerkörper für semipermeable Membranen

Die auf dem Trägerkörper für semipermeable Membranen beobachteten Falten in Strömungsrichtung wurden gemäß folgender Bewertungskriterien beurteilt.
A: Während der Behandlung auf der Heißkalandrierwalze wurden keine Falten beobachtet, und in dem Trägerkörper für semipermeable Membranen nach dem Heißkalandrieren wurden ebenfalls keine Falten beobachtet, was einem sehr guten Niveau entspricht.
B: Während der Behandlung auf der Heißkalandrierwalze wurden einige Falten in dem Trägerkörper für semipermeable Membranen in der Strömungsrichtung beobachtet, aber in dem Trägerkörper für semipermeable Membranen nach dem Heißkalandrieren wurden keine Falten beobachtet, was für praktische Anwendungen keine Probleme darstellt.
C: Während der Behandlung auf der Heißkalandrierwalze wurden Falten in dem Trägerkörper für semipermeable Membranen in der Strömungsrichtung beobachtet, und in dem Trägerkörper für semipermeable Membranen nach dem Heißkalandrieren wurden ebenfalls Falten beobachtet, wodurch keine praktischen Anwendungen möglich sind.

**[Tab. 3]**

| | Flächengewicht des Trägerkörpers für semipermeable Membranen (g/m²) | Dicke des Trägerkörpers für semipermeable Membranen (µm) | Dichte des Trägerkörpers für semipermeable Membranen (g/cm³) |
|---|---|---|---|
| Beispiel 1 | 75 | 161 | 0,47 |
| Beispiel 2 | 75 | 160 | 0,47 |
| Beispiel 3 | 75 | 160 | 0,47 |
| Beispiel 4 | 74 | 162 | 0,46 |
| Beispiel 5 | 75 | 163 | 0,46 |
| Beispiel 6 | 75 | 165 | 0,45 |
| Beispiel 7 | 74 | 163 | 0,45 |
| Beispiel 8 | 73 | 157 | 0,46 |
| Beispiel 9 | 75 | 152 | 0,49 |
| Beispiel 10 | 75 | 157 | 0,48 |
| Beispiel 11 | 7 5 | 167 | 0,45 |
| Beispiel 12 | 75 | 165 | 0,45 |
| Vergleichsbeispiel 1 | 76 | 154 | 0,49 |
| Vergleichsbeispiel 2 | 75 | 167 | 0,45 |
| Vergleichsbeispiel 3 | 77 | 156 | 0,49 |
| Vergleichsbeispiel 4 | 76 | 155 | 0,49 |
| Vergleichsbeispiel 5 | 75 | 165 | 0,45 |
| Vergleichsbeispiel 6 | 76 | 158 | 0,48 |

**[Tab. 4]**

| | Lösungsmittelbeständigkeit des Trägerkörpers für semipermeable Membranen | Haftfestigkeit zwischen Trägerkörper für semipermeable Membranen und Rahmenmaterial | Haftfestigkeit zwischen Trägerkörper für semipermeable Membranen und semipermeabler Membran | Beschichtungseigenschaften der semipermeablen Membran im Trägerkörper für semipermeable Membranen | Falten im Trägerkörper für semipermeable Membranen |
|---|---|---|---|---|---|
| Beispiel 1 | A | B | B | B | A |
| Beispiel 2 | A | Referenz | B | A | A |
| Beispiel 3 | A | A | A | A | A |
| Beispiel 4 | A | A | A | A | A |
| Beispiel 5 | A | A | A | A | B |
| Beispiel 6 | A | A | A | A | B |
| Beispiel 7 | A | B | A | B | A |
| Beispiel 8 | A | A | B | A | A |
| Beispiel 9 | A | A | A | B | A |
| Beispiel 10 | A | A | B | A | A |
| Beispiel 11 | A | A | A | A | A |
| Beispiel 12 | A | A | A | A | A |
| Vergleichsbeispiel 1 | A | C | D | A | A |
| Vergleichsbeispiel 2 | A | A | A | A | C |
| Vergleichsbeispiel 3 | C | A | C | C | C |
| Vergleichsbeispiel 4 | A | C | C | C | B |
| Vergleichsbeispiel 5 | A | B | A | A | C |
| Vergleichsbeispiel 6 | C | A | C | C | C |

Die Trägerkörper für semipermeable Membranen zur Membranbioreaktor-Behandlung in den Beispielen 1 bis 12 sind Vliesstoffe, die Hauptfasern und Bindefasern enthalten, wobei der Trägerkörper für semipermeable Membranen zur Membranbioreaktor-Behandlung als Hauptfasern gestreckte Polyesterfasern und als Bindefasern Polyesterverbundfasern vom Kern-Mantel-Typ mit einem Mantelabschnitt aus kristallinem copolymerisiertem Polyester, dessen Schmelzpunkt im Bereich von 160 bis 185°C liegt, und in dem die Dicarbonsäurekomponente Terephthalsäure ist und die Diolkomponenten Ethylenglykol und Tetramethylenglykol sind. Deswegen wurden ausgezeichnete Lösungsmittelbeständigkeit sowie gute Bewertungsergebnisse für die Haftfestigkeit zwischen dem Trägerkörper für semipermeable Membranen und dem Rahmenmaterial, die Haftfestigkeit zwischen dem Trägerkörper für semipermeable Membranen und der semipermeablen Membran, die Beschichtungseigenschaften der semipermeablen Membran im Trägerkörper für semipermeable Membranen, und die Falten des Trägerkörpers für semipermeable Membranen erhalten.

Da der Trägerkörper für semipermeable Membranen im Vergleichsbeispiel 1 nur nicht gestreckte Polyesterfasern als Bindefasern enthält, sind die Haftfestigkeit zwischen dem Trägerkörper für semipermeable Membranen und dem Rahmenmaterial, und die Haftfestigkeit zwischen dem Trägerkörper für semipermeable Membranen und der semipermeablen Membran gering, weshalb der Trägerkörper für semipermeable Membranen im Vergleichsbeispiel 1 das Niveau für praktische Anwendungen nicht erreicht.

Da der Trägerkörper für semipermeable Membranen im Vergleichsbeispiel 2 nicht die Polyesterverbundfasern vom Kern-Mantel-Typ A, sondern die Kern-Mantel PET-Fasern 2 enthält, entstanden beim Heißkalandrieren Falten in dem Trägerkörper für semipermeable Membranen und dieser erreichte daher nicht das Niveau für praktische Anwendungen.

Da der Trägerkörper für semipermeable Membranen im Vergleichsbeispiel 3 nicht die Polyesterverbundfasern vom Kern-Mantel-Typ A, sondern die Kern-Mantel PET-Fasern 3 enthält, war die Lösungsmittelbeständigkeit sehr schlecht. Zusätzlich zeigten die Bewertungen der Haftfestigkeit zwischen dem Trägerkörper für semipermeable Membranen und der semipermeablen Membran, der Beschichtungseigenschaften der semipermeablen Membran im Trägerkörper für semipermeable Membranen, und der Faltenbildung des Trägerkörpers für semipermeable Membranen ebenfalls schlechte Resultate.

Da der Trägerkörper für semipermeable Membranen im Vergleichsbeispiel 4 nicht die Polyesterverbundfasern vom Kern-Mantel-Typ A, sondern die Kern-Mantel PET-Fasern 4 enthält, zeigten die Bewertungen der Haftfestigkeit zwischen dem Trägerkörper für semipermeable Membranen und dem Rahmenmaterial, der Haftfestigkeit zwischen dem Trägerkörper für semipermeable Membranen und der semipermeablen Membran, und der Beschichtungseigenschaften der semipermeablen Membran im Trägerkörper für semipermeable Membranen schlechte Resultate.

Da der Trägerkörper für semipermeable Membranen im Vergleichsbeispiel 5 nicht die Polyesterverbundfasern vom Kern-Mantel-Typ A, sondern die Kern-Mantel PET-Fasern 5 enthält, entstanden beim Heißkalandrieren Falten in dem Trägerkörper für semipermeable Membranen und dieser erreichte daher nicht das Niveau für praktische Anwendungen.

Da der Trägerkörper für semipermeable Membranen im Vergleichsbeispiel 6 nicht die Polyesterverbundfasern vom Kern-Mantel-Typ A, sondern die Kern-Mantel PET-Fasern 6 enthält, war die Lösungsmittelbeständigkeit sehr schlecht. Zusätzlich zeigten die Bewertungen der Haftfestigkeit zwischen dem Trägerkörper für semipermeable Membranen und der semipermeablen Membran, der Beschichtungseigenschaften der semipermeablen Membran im Trägerkörper für semipermeable Membranen, und der Faltenbildung des Trägerkörpers für semipermeable Membranen ebenfalls schlechte Resultate.

Die Trägerkörper für semipermeable Membranen zur Membranbioreaktor-Behandlung der Beispiele 13 bis 24 und der Vergleichsbeispiele 7 bis 12 wurden unter den folgenden Bedingungen hergestellt.

### Herstellung Grundblatt

Wasser wurde in einen Dispersionstank mit einem Volumen von 2 m³ gefüllt und die Rohmaterialien wurden in den in Tab. 5 aufgelisteten Mischungsverhältnissen (Anteilen) gemischt. Dann wurde die Mischung bei einer Dispersionskonzentration von 0,5 Gew.% 5 Minuten lang dispergiert. Unter Verwendung einer Kombinationspapiermaschine mit geneigtem und Rundsieb wurden bei gleichem Mischungsverhältnis und gleichem Flächengewicht die auf dem geneigtem Draht und dem Rundsieb-Draht gebildeten Nassblätter vor dem Trocknen laminiert. Die laminierten Nassblätter wurden im Anschluss mit einem Yankee-Trockner mit einer Oberflächentemperatur von 150°C unter Druck und Hitze getrocknet und mit den in Tab. 5 aufgelisteten Flächengewichten als Zielgewichte wurden Nass-Vliesstoffe (Grundblätter 19 bis 36) mit einer Breite von 500 mm erhalten.

**[Tab. 5]**

| | | Mischmenge (Massenanteile) | | | | | | | | | | | Flächengewicht (g/m²) |
|---|---|---|---|---|---|---|---|---|---|---|---|---|---|
| | | Hauptfasern | | | | Bindefasern | | | | | | | |
| | | Gestreckte PET-Faser 3 | Gestreckte PET-Faser 5 | Gestreckte PET-Faser 7 | Gestreckte PET-Faser 8 | Kern-Mantel PET-Faser 1 | Kern-Mantel PET-Faser 2 | Kern-Mantel PET-Faser 3 | Kern-Mantel PET-Faser 4 | Kern-Mantel PET-Faser 5 | Kern-Mantel PET-Faser 6 | Nicht gestreckte PET-Faser 1 | |
| Faserdurchmesser | µm | 7 | 13 | 18 | 25 | 15 | 15 | 15 | 13 | 15 | 15 | 11 | |
| Faserlänge | mm | 3 | 5 | 10 | 10 | 5 | 5 | 5 | 5 | 5 | 5 | 5 | |
| Schmelzpunkt | °C | 260 | 260 | 260 | 260 | Mantel 180 | Mantel 159 | Nicht zutreffend im Mantel | Mantel PE 130 | Mantel 153 | Nicht zutreffend im Mantel | 260 | |
| Kristallisationstemperatur | °C | - | - | - | - | Mantel 126 | Mantel 125 | Nicht zutreffend im Mantel | | Mantel 89 | Nicht zutreffend im Mantel | - | |
| Glasübergangspunkt | °C | - | - | - | - | Mantel 50 | Mantel 34 | Mantel 67 | | Mantel 40 | Mantel 67 | - | |
| Volumenverhältnis Kern/Mantel | | - | - | - | - | 50/50 | 50/50 | 50/50 | 50/50 | 50/50 | 50/50 | - | |
| Beispiel 13 | Grundblatt 19 | | 40 | 40 | | 5 | | | | | | 15 | 180 |
| Beispiel 14 | Grundblatt 20 | | 37 | 38 | | 5 | | | | | | 20 | 180 |
| Beispiel 15 | Grundblatt 21 | | 35 | 35 | | 10 | | | | | | 20 | 180 |
| Beispiel 16 | Grundblatt 22 | | 30 | 30 | | 20 | | | | | | 20 | 180 |
| Beispiel 17 | Grundblatt 23 | | 25 | 25 | | 30 | | | | | | 20 | 180 |
| Beispiel 18 | Grundblatt 24 | | 25 | 25 | | 40 | | | | | | 10 | 180 |
| Beispiel 19 | Grundblatt 25 | | 40 | 40 | | 10 | | | | | | 10 | 180 |
| Beispiel 20 | Grundblatt 26 | | 30 | 30 | | 10 | | | | | | 30 | 180 |
| Beispiel 21 | Grundblatt 27 | | 25 | 25 | | 10 | | | | | | 40 | 180 |
| Beispiel 22 | Grundblatt 28 | 10 | 30 | 30 | | 10 | | | | | | 20 | 180 |
| Beispiel 23 | Grundblatt 29 | | 30 | 30 | 10 | 10 | | | | | | 20 | 180 |
| Beispiel 24 | Grundblatt 30 | | 30 | 30 | | 30 | | | | | | 10 | 180 |
| Vergleichsbeispiel 7 | Grundblatt 31 | | 35 | 35 | | | | | | | | 30 | 180 |
| Vergleichsbeispiel 8 | Grundblatt 32 | | 30 | 30 | | | 30 | | | | | 10 | 180 |
| Vergleichsbeispiel 9 | Grundblatt 33 | | 30 | 30 | | | | 30 | | | | 10 | 180 |
| Vergleichsbeispiel 10 | Grundblatt 34 | | 30 | 30 | | | | | 30 | | | 10 | 180 |
| Vergleichsbeispiel 11 | Grundblatt 35 | | 30 | 30 | | | | | | 30 | | 10 | 180 |
| Vergleichsbeispiel 12 | Grundblatt 36 | | 30 | 30 | | | | | | | 30 | 10 | 180 |

### Heißkalandrieren

Das erhaltene Grundblatt wurde einem Heißkalandrierprozess in einer Kalandereinheit vom Aufbau Metallwalze-elastische Walze unter den in Tab. 6 aufgelisteten Bedingungen unterzogen, um die Trägerkörper für semipermeable Membranen zur Membranbioreaktor-Behandlung der Beispiele 13 bis 24 und der Vergleichsbeispiele 7 bis 12 zu erhalten. Die Bearbeitung erfolgte dermaßen, dass in einem ersten Schritt die Oberfläche der am geneigten Draht entstandenen Schicht auf die Metallwalze gedrückt wurde und in einem zweiten Schritt die Oberfläche der am Rundsieb entstandenen Schicht gegen die Metallwalze gedrückt wurde. Die Oberfläche der am geneigten Draht entstandenen Schicht bildete die beschichtete Oberfläche, während die Oberfläche der am Rundsieb entstandenen Schicht die nicht beschichtete Oberfläche bildete.

**[Tab. 6]**

| | | Schrittanzahl (Anzahl) | Temperatur der Metallwalze (°C) | Shore D-Härte der elastischen Walze | Liniendruck (kN/m) | Verarbeitungsgeschwindigkeit (m/min) |
|---|---|---|---|---|---|---|
| Beispiel 13 | Grundblatt 19 | 2 | 235 | 92 | 100 | 10 |
| Beispiel 14 | Grundblatt 2 0 | 2 | 235 | 92 | 100 | 10 |
| Beispiel 15 | Grundblatt 21 | 2 | 235 | 92 | 100 | 10 |
| Beispiel 16 | Grundblatt 22 | 2 | 235 | 92 | 100 | 10 |
| Beispiel 17 | Grundblatt 23 | 2 | 235 | 92 | 100 | 10 |
| Beispiel 18 | Grundblatt 24 | 2 | 235 | 92 | 100 | 10 |
| Beispiel 19 | Grundblatt 25 | 2 | 235 | 92 | 100 | 10 |
| Beispiel 20 | Grundblatt 26 | 2 | 200 | 92 | 100 | 10 |
| Beispiel 21 | Grundblatt 27 | 2 | 235 | 92 | 100 | 10 |
| Beispiel 22 | Grundblatt 28 | 2 | 235 | 92 | 100 | 10 |
| Beispiel 23 | Grundblatt 29 | 2 | 235 | 92 | 100 | 10 |
| Beispiel 24 | Grund - blatt 30 | 2 | 235 | 92 | 100 | 10 |
| Vergleichsbeispiel 7 | Grundblatt 31 | 2 | 235 | 92 | 100 | 10 |
| Vergleichsbeispiel 8 | Grundblatt 32 | 2 | 235 | 92 | 100 | 10 |
| Vergleichsbeispiel 9 | Grundblatt 33 | 2 | 235 | 92 | 100 | 10 |
| Vergleichsbeispiel 10 | Grundblatt 34 | 2 | 235 | 92 | 100 | 10 |
| Vergleichsbeispiel 11 | Grundblatt 35 | 2 | 235 | 92 | 100 | 10 |
| Vergleichsbeispiel 12 | Grundblatt 36 | 2 | 235 | 92 | 100 | 10 |

Die folgenden Messungen und Bewertungen wurden an den in den Beispielen 13 bis 24 und den Vergleichsbeispielen 7 bis 12 erhaltenen Trägerkörpern für semipermeable Membranen zur Membranbioreaktor-Behandlung durchgeführt, und die Ergebnisse in den Tabellen 7 und 8 aufgelistet.

### Flächengewicht des Trägerkörpers für semipermeable Membranen zur Membranbioreaktor-Behandlung

Das Flächengewicht wurde auf die gleiche Weise wie in den Beispielen 1 bis 12 und den Vergleichsbeispielen 1 bis 6 gemessen.

### Dicke und Dichte des Trägerkörpers für semipermeable Membranen zur Membranbioreaktor-Behandlung

Die Dicke wurde auf die gleiche Weise wie in den Beispielen 1 bis 12 und den Vergleichsbeispielen 1 bis 6 gemessen.

### Lösungsmittelbeständigkeit des Trägerkörpers für semipermeable Membranen

Die Messungen wurden auf die gleiche Weise wie in den Beispielen 1 bis 12 und den Vergleichsbeispielen 1 bis 6 durchgeführt, und die "Lösungsmittelbeständigkeit des Trägerkörpers für semipermeable Membranen" wurde anhand der gleichen Kriterien wie in den Beispielen 1 bis 12 und den Vergleichsbeispielen 1 bis 6 bewertet.

### Haftfestigkeit zwischen beschichteter Oberfläche und nicht beschichteter Oberfläche des Trägerkörpers für semipermeable Membranen

Der Trägerkörper für semipermeable Membranen wurde zu zwei Scheiben mit einer Breite von 30 mm und einer Länge von 50 mm geschnitten. Der vordere Endabschnitt der einen Scheibe des Trägerkörpers für semipermeable Membranen wurde mit dem hinteren Endabschnitt der anderen Scheibe des Trägerkörpers für semipermeable Membranen auf einer Länge von 10 mm so zur Deckung gebracht, dass die beschichtete Oberfläche der einen Scheibe des Trägerkörpers für semipermeable Membranen und die nicht beschichtete Oberfläche der anderen Scheibe des Trägerkörpers für semipermeable Membranen einander berühren. Im Anschluss darauf wurden die beschichtete Oberfläche und die nicht beschichtete Oberfläche der beiden Scheiben des Trägerkörpers für semipermeable Membranen unter Verwendung eines Ultraschallklebegeräts (Shenzhen Keijing Star Technology Ltd., Produktname: MSK-800, Kopf-Produktnummer: N1 (4 mm x 4 mm)) bei einer Leistung von 5%, einem Luftdruck an der Quelle von 0,10 MPa und einer Klebezeit von 1,0 Sekunden, wie in Fig. 3 gezeigt, an Ultraschallschmelzpunkten zusammengeklebt. Wie in Fig. 4 gezeigt, wurden die beiden Trägerkörper für semipermeable Membranen in den Spannarmen eines Material-Prüfstands (Gerätename: STA-1150, hergestellt von ORIENTEC CORPORATION) mit einem Spannintervall von 15 mm fixiert, um bei einer konstanten Geschwindigkeit von 100 mm/min die maximale Last, bei der sich die beiden Trägerkörper für semipermeable Membranen beim Hochziehen des oberen Spannarms voneinander lösen, zu bestimmen. Diese maximale Last wurde als "Haftfestigkeit zwischen der beschichteten Oberfläche und der nicht beschichteten Oberfläche des Trägerkörpers für semipermeable Membranen" definiert und nach folgenden Kriterien bewertet.

A: Die Haftfestigkeit von Beispiel 14 wird als eine Haftfestigkeit von 1,00 angenommen. Das Festigkeitsverhältnis zu Beispiel 13 beträgt 0,90 oder mehr.
B: Das Festigkeitsverhältnis zu Beispiel 14 beträgt 0,70 oder mehr, aber weniger als 0,90.
C: Das Festigkeitsverhältnis zu Beispiel 14 beträgt weniger als 0,70.

### Haftfestigkeit zwischen Trägerkörper für semipermeable Membranen und semipermeabler Membran

Unter Verwendung der Oberfläche der am geneigten Draht entstandenen Schicht als beschichtete Oberfläche wurden Tests auf die gleiche Weise wie in den Beispielen 1 bis 12 und den Vergleichsbeispielen 1 bis 6 durchgeführt und die "Haftfestigkeit zwischen dem Trägerkörper für semipermeable Membranen und der semipermeablen Membran" wurde anhand der gleichen Bewertungskriterien wie in den Beispielen 1 bis 12 und den Vergleichsbeispielen 1 bis 6 bewertet.

### Haftfestigkeit zwischen verschmolzenem Teil und semipermeabler Membran

Der Trägerkörper für semipermeable Membranen wurde zu zwei Scheiben mit einer Breite von 130 mm und einer Länge von 185 mm geschnitten und diese Scheiben wurden so zur Deckung gebracht, dass die beschichtete Oberfläche und die nicht beschichtete Oberfläche einander berühren. Im Anschluss darauf wurden die beschichtete Oberfläche und die nicht beschichtete Oberfläche der beiden Scheiben des Trägerkörpers für semipermeable Membranen unter Verwendung eines Ultraschallklebegeräts (Shenzhen Keijing Star Technology Ltd., Produktname: MSK-800, Kopf-Produktnummer: N1 (4 mm x 4 mm)) bei einer Leistung von 5%, einem Luftdruck an der Quelle von 0,1 MPa und einer Klebezeit von 1,0 Sekunden, wie in Fig. 5 gezeigt, an einem Ultraschallschmelzpunkt zusammengeklebt. Die Breite des Ultraschallschmelzpunktes betrug 12 mm und die Länge 50 mm.

Als nächstes wurde unter Verwendung einer Beschichtungsvorrichtung mit konstanter Geschwindigkeit (Handelsname: TQC, vollautomatischer Filmapplikator, COTEC Inc.) bei konstantem Abstand eine mit Magic Ink (eingetragenes Markenzeichen) gefärbte NMP-Lösung (Konzentration: 12%) aus PVDF aufgetragen. Danach wurde die Oberfläche mit Wasser gewaschen und getrocknet, und ein PVDF-Film wurde auf der beschichteten Oberfläche des den Ultraschallschmelzpunkt enthaltenden Trägerkörpers für semipermeable Membranen erhalten, wodurch die semipermeable Membran hergestellt wurde.

Einen Tag nach der Herstellung wurde der Ultraschallschmelzpunkt (verschmolzener Teil, Breite 12 mm, Länge 50 mm) ausgeschnitten und als Probe verwendet. Ein auf eine Breite von 12 mm und eine Länge von 30 mm geschnittenes Zellophan-Klebeband (hergestellt von Nichiban Inc., Handelsname: Lpack (eingetragenes Markenzeichen) LP12) wurde nur auf einer Länge von 10 mm an der nicht beschichteten Oberfläche der Probe aufgeklebt und der verbleibende Abschnitt des Zellophan-Klebebands mit einer Breite von 12 mm und einer Länge von 20 mm wurde als Klebeteil belassen. Als nächstes wurde in einem Bereich der Oberfläche der semipermeablen Membran mit einer Breite von 12 mm und einer Länge von 10 mm, der Klebeteil eines Haftmarkers (hergestellt von LION OFFICE PRODUCTS CORP., Handelsname: Stick on Notes SN-23) angeklebt. Der Klebeteil (12 mm x 20 mm) des Zellophan-Klebebandes und der Nicht-Klebeteil des Haftmarkers wurden gehalten und mit der Hand in jene Richtung gezogen, in der die semipermeable Membran und der Trägerkörper für semipermeable Membranen sich voneinander lösen. Dabei wurde die Haftfestigkeit zwischen dem verschmolzenen Teil und der semipermeablen Membran anhand des Zustands beim Aufbringen der Kraft bewertet. Fünf Proben wurden vorbereitet und fünf Tests durchgeführt. Die "Haftfestigkeit zwischen dem verschmolzenen Teil und der semipermeablen Membran" wurde anhand folgender Bewertungskriterien bewertet.

### Bewertungskriterien

A: In allen fünf Tests kam es zu einem Ablösen zwischen der semipermeablen Membran und dem Haftmarker. Entspricht einem sehr guten Wert.
B: In drei oder vier Tests kam es zu einem Ablösen zwischen der semipermeablen Membran und dem Haftmarker. Entspricht einem guten Wert.
C: In ein oder zwei Tests kam es zu einem Ablösen zwischen der semipermeablen Membran und dem Haftmarker. Entspricht der Untergrenze für praktische Anwendungen. D: In allen 5 Tests kam es zu einem Ablösen zwischen der semipermeablen Membran und dem Trägerkörper für semipermeable Membranen. Befindet sich unter dem Niveau für praktische Anwendungen.

### Bewertung der Beschichtungseigenschaften der semipermeablen Membran im Trägerkörper für semipermeable Membranen

Unter Verwendung der Oberfläche der am geneigten Draht entstandenen Schicht als beschichtete Oberfläche wurden Tests auf die gleiche Weise wie in den Beispielen 1 bis 12 und den Vergleichsbeispielen 1 bis 6 durchgeführt und die "Beschichtungseigenschaften der semipermeablen Membran im Trägerkörper für semipermeable Membranen" wurden anhand der gleichen Bewertungskriterien wie in den Beispielen 1 bis 12 und den Vergleichsbeispielen 1 bis 6 bewertet.

### Bewertung von Falten im Trägerkörper für semipermeable Membranen

Die "Falten im Trägerkörper für semipermeable Membranen" wurden anhand der gleichen Bewertungskriterien wie in den Beispielen 1 bis 12 und den Vergleichsbeispielen 1 bis 6 bewertet.

**[Tab. 7]**

| | Flächengewicht des Trägerkörpers für semipermeable Membranen (g/m²) | Dicke des Trägerkörpers für semipermeable Membranen (µm) | Dichte de s Trägerkörpers für semipermeable Membranen (g/cm³) |
|---|---|---|---|
| Beispiel 13 | 182 | 230 | 0,79 |
| Beispiel 14 | 183 | 224 | 0,82 |
| Beispiel 15 | 185 | 220 | 0,84 |
| Beispiel 16 | 187 | 216 | 0,87 |
| Beispiel 17 | 190 | 215 | 0,88 |
| Beispiel 18 | 186 | 223 | 0,83 |
| Beispiel 19 | 183 | 235 | 0,78 |
| Beispiel 20 | 182 | 214 | 0,85 |
| Beispiel 21 | 188 | 210 | 0,90 |
| Beispiel 22 | 187 | 214 | 0,87 |
| Beispiel 23 | 188 | 228 | 0,82 |
| Beispiel 24 | 187 | 220 | 0,85 |
| Vergleichsbeispiel 7 | 187 | 210 | 0,89 |
| Vergleichsbeispiel 8 | 186 | 223 | 0,83 |
| Vergleichsbeispiel 9 | 188 | 230 | 0,82 |
| Vergleichs - beispiel 10 | 190 | 215 | 0,88 |
| Vergleichs - beispiel 11 | 187 | 223 | 0,84 |
| Vergleichsbeispiel 12 | 188 | 230 | 0,82 |

**[Tab. 8]**

| | Lösungsmittelbeständigkeit des Trägerkörpers für semipermeable Membranen | Haftfestigkeit zwischen beschichteter Oberfläche und nicht beschichteter Oberfläche des Trägerkörpers für semipermeable Membranen | Haftfestigkeit zwischen Trägerkörper für semipermeable Membranen und semipermeabler Membran | Haftfestigkeit zwischen verschmolzenem Teil und semipermeabler Membran | Beschichtungseigenschaften der semipermeablen Membran im Trägerkörper für semipermeable Membranen | Falten im Trägerkörper für semipermeable Membranen |
|---|---|---|---|---|---|---|
| Beispiel 13 | A | B | B | B | B | A |
| Beispiel 14 | A | A | A | A | B | A |
| Beispiel 15 | A | A | A | A | A | A |
| Beispiel 16 | A | A | A | A | A | A |
| Beispiel 17 | A | A | A | A | A | B |
| Beispiel 18 | A | A | A | A | A | B |
| Beispiel 19 | A | A | A | B | B | A |
| Beispiel 20 | A | A | A | A | A | A |
| Beispiel 21 | A | A | B | A | B | A |
| Beispiel 22 | A | A | A | A | A | A |
| Beispiel 23 | A | A | A | A | A | A |
| Beispiel 24 | A | A | A | A | A | A |
| Vergleichsbeispiel 7 | A | A | D | D | A | A |
| Vergleichsbeispiel 8 | A | A | A | A | A | C |
| Vergleichsbeispiel 9 | C | A | C | C | C | B |
| Vergleichsbeispiel 10 | A | B | D | D | C | B |
| Vergleichsbeispiel 11 | A | A | A | A | A | C |
| Vergleichsbeispiel 12 | C | A | C | C | C | B |

Die Trägerkörper für semipermeable Membranen zur Membranbioreaktor-Behandlung der Beispiele 13 bis 24 sind Vliesstoffe, die Hauptfasern und Bindefasern enthalten, wobei die Trägerkörper für semipermeable Membranen zur Membranbioreaktor-Behandlung als Hauptfasern gestreckte Polyesterfasern und als Bindefasern Polyesterverbundfasern vom Kern-Mantel-Typ mit einem Mantelabschnitt aus kristallinem copolymerisiertem Polyester, dessen Schmelzpunkt im Bereich von 160 bis 185°C liegt, und in dem die Dicarbonsäurekomponente Terephthalsäure ist und die Diolkomponenten Ethylenglykol und Tetramethylenglykol sind, enthalten. Deswegen wurden ausgezeichnete Lösungsmittelbeständigkeit, starke Haftfestigkeit zwischen der beschichteten Oberfläche und der nicht beschichteten Oberfläche des Trägerkörpers für semipermeable Membranen, sowie gute Bewertungsergebnisse für die Haftfestigkeit zwischen dem Trägerkörper für semipermeable Membranen und der semipermeablen Membran, die Haftfestigkeit zwischen dem verschmolzenen Teil und der semipermeablen Membran, die Beschichtungseigenschaften der semipermeablen Membran im Trägerkörper für semipermeable Membranen, und die Falten des Trägerkörpers für semipermeable Membranen erhalten.

Da der Trägerkörper für semipermeable Membranen im Vergleichsbeispiel 7 nur nicht gestreckte Polyesterfasern als Bindefasern enthält, sind die Haftfestigkeit zwischen dem Trägerkörper für semipermeable Membranen und der semipermeablen Membran und die Haftfestigkeit zwischen dem verschmolzenen Teil und der semipermeablen Membran gering, weshalb der Trägerkörper für semipermeable Membranen im Vergleichsbeispiel 7 das Niveau für praktische Anwendungen nicht erreicht.

Da der Trägerkörper für semipermeable Membranen im Vergleichsbeispiel 8 nicht die Polyesterverbundfasern vom Kern-Mantel-Typ A, sondern die Kern-Mantel PET-Fasern 2 enthält, entstanden beim Heißkalandrieren Falten in dem Trägerkörper für semipermeable Membranen und dieser erreichte daher nicht das Niveau für praktische Anwendungen.

Da der Trägerkörper für semipermeable Membranen im Vergleichsbeispiel 9 nicht die Polyesterverbundfasern vom Kern-Mantel-Typ A, sondern die Kern-Mantel PET-Fasern 3 enthält, war die Lösungsmittelbeständigkeit sehr schlecht. Zusätzlich zeigten die Bewertungen der Haftfestigkeit zwischen dem Trägerkörper für semipermeable Membranen und der semipermeablen Membran, der Haftfestigkeit zwischen dem verschmolzenen Teil und der semipermeablen Membran, und der Beschichtungseigenschaften der semipermeablen Membran im Trägerkörper für semipermeable Membranen ebenfalls schlechte Resultate.

Da der Trägerkörper für semipermeable Membranen im Vergleichsbeispiel 10 nicht die Polyesterverbundfasern vom Kern-Mantel-Typ A, sondern die Kern-Mantel PET-Fasern 4 enthält, zeigten die Bewertungen der Haftfestigkeit zwischen dem Trägerkörper für semipermeable Membranen und der semipermeablen Membran und der Haftfestigkeit zwischen dem verschmolzenen Teil und der semipermeablen Membran schlechte Resultate.

Da der Trägerkörper für semipermeable Membranen im Vergleichsbeispiel 11 nicht die Polyesterverbundfasern vom Kern-Mantel-Typ A, sondern die Kern-Mantel PET-Fasern 5 enthält, entstanden beim Heißkalandrieren Falten in dem Trägerkörper für semipermeable Membranen und dieser erreichte daher nicht das Niveau für praktische Anwendungen.

Da der Trägerkörper für semipermeable Membranen im Vergleichsbeispiel 12 nicht die Polyesterverbundfasern vom Kern-Mantel-Typ A, sondern die Kern-Mantel PET-Fasern 6 enthält, war die Lösungsmittelbeständigkeit sehr schlecht. Zusätzlich zeigten die Bewertungen der Haftfestigkeit zwischen dem Trägerkörper für semipermeable Membranen und der semipermeablen Membran, der Haftfestigkeit zwischen dem verschmolzenen Teil und der semipermeablen Membran, und der Beschichtungseigenschaften der semipermeablen Membran im Trägerkörper für semipermeable Membranen ebenfalls schlechte Resultate.

Die Trägerkörper für semipermeable Membranen zur Membranbioreaktor-Behandlung der Beispiele 25 bis 28 wurden unter den folgenden Bedingungen hergestellt.

### Herstellung Grundblatt

Wasser wurde in einen Dispersionstank mit einem Volumen von 2 m³ gefüllt und die Rohmaterialien wurden in den in Tab. 9 aufgelisteten Mischungsverhältnissen (Anteilen) gemischt. Dann wurde die Mischung bei einer Dispersionskonzentration von 0,5 Gew.% 5 Minuten lang dispergiert. Unter Verwendung einer Kombinationspapiermaschine mit geneigtem Draht und Rundsieb wurden die auf dem geneigtem Draht und dem Rundsieb-Draht gebildeten Nassblätter vor dem Trocknen laminiert. Die laminierten Nassblätter wurden im Anschluss mit einem Yankee-Trockner mit einer Oberflächentemperatur von 150°C unter Druck und Hitze getrocknet und mit den in Tab. 9 aufgelisteten Flächengewichten als Zielgewichte wurden Nass-Vliesstoffe (Grundblätter 43 bis 46) mit einer Breite von 500 mm erhalten.

**[Tab. 9]**

| | | | Mischmenge (Massenanteile) | | | | | | | Flächengewicht (g/m²) |
|---|---|---|---|---|---|---|---|---|---|---|
| | | | Hauptfasern | | | | | Bindefasern | | |
| | | | Gestreckte PET-Faser 2 | Gestreckte PET-Faser 3 | Gestreckte PET-Faser 4 | Gestreckte PET-Faser 5 | Gestreckte PET-Faser 7 | Kern-Mantel PET-Faser 1 | Nicht gestreckte PET-Faser 1 | |
| Faserdurchmesser | | µm | 7 | 10 | 13 | 14 | 25 | 12 | 10 | |
| Faserlänge | | mm | 5 | 6 | 6 | 5 | 5 | 5 | 5 | |
| Schmelzpunkt | | °C | 260 | 260 | 260 | 260 | 260 | Mantel 180 | 260 | |
| Kristallisationstemperatur | | °C | - | - | - | - | - | Mantel 126 | - | |
| Glasübergangspunkt | | °C | - | - | - | - | - | Mantel 50 | - | |
| Volumenverhältnis Kern/Mantel | | - | - | - | - | - | - | 50/50 | - | |
| Beispiel 25 | Grund-blatt 43 | Schicht am geneigten Draht | | 70 | | | | 10 | 20 | 38 |
| | | Schicht am Rundsieb | | 70 | | | | 10 | 20 | 38 |
| Beispiel 26 | Grundblatt 44 | Schicht am geneigten Draht | | 40 | 30 | | | 10 | 20 | 38 |
| | | Schicht am Rundsieb | 30 | 40 | | | | 10 | 20 | 38 |
| Beispiel 27 | Grundblatt 45 | Schicht am geneigten Draht | 30 | 40 | | | | 10 | 20 | 38 |
| | | Schicht am Rundsieb | | 40 | 30 | | | 10 | 20 | 38 |
| Beispiel 28 | Grundblatt 46 | Schicht am geneigten Draht | 30 | 10 | 10 | 10 | 10 | 10 | 20 | 38 |
| | | Schicht am Rundsieb | 30 | 40 | | | | 10 | 20 | 38 |

### Heißkalandrieren

Das erhaltene Grundblatt wurde einem Heißkalandrierprozess in einer Kalandereinheit vom Aufbau Metallwalze-elastische Walze unter den in Tab. 10 aufgelisteten Bedingungen unterzogen, um die Trägerkörper für semipermeable Membranen zur Membranbioreaktor-Behandlung der Beispiele 25 bis 28 zu erhalten. Die Bearbeitung erfolgte dermaßen, dass in einem ersten Schritt die Oberfläche der am geneigten Draht entstandenen Schicht auf die Metallwalze gedrückt wurde und in einem zweiten Schritt die Oberfläche der am Rundsieb entstandenen Schicht gegen die Metallwalze gedrückt wurde. Die am geneigten Draht entstandene Schicht bildete die beschichtete Oberflächenschicht, während die am Rundsieb entstandene Schicht die Rückflächenschicht bildete.

**[Tab. 10]**

| | | Schrittanzahl (Anzahl) | Temperatur der Metallwalze (°C) | Shore D-Härte der elastischen Walze | Liniendruck (kN/cm) | Verarbeitungsgeschwindigkeit (m/min) |
|---|---|---|---|---|---|---|
| Beispiel 25 | Grundblatt 43 | 1 | 235 | 92 | 60 | 30 |
| | | 2 | 235 | 92 | 60 | 30 |
| Beispiel 26 | Grundblatt 44 | 1 | 235 | 92 | 60 | 30 |
| | | 2 | 235 | 92 | 60 | 30 |
| Beispiel 27 | Grundblatt 45 | 1 | 235 | 92 | 60 | 30 |
| | | 2 | 235 | 92 | 60 | 30 |
| Beispiel 28 | Grundblatt 46 | 1 | 235 | 92 | 60 | 30 |
| | | 2 | 235 | 92 | 60 | 30 |

Die folgenden Messungen und Bewertungen wurden an den in den Beispielen 25 bis 28 erhaltenen Trägerkörpern für semipermeable Membranen zur Membranbioreaktor-Behandlung durchgeführt, und die Ergebnisse in den Tabellen 11 und 12 aufgelistet.

### Flächengewicht des Trägerkörpers für semipermeable Membranen zur Membranbioreaktor-Behandlung

Das Flächengewicht wurde auf die gleiche Weise wie in den Beispielen 1 bis 12 und den Vergleichsbeispielen 1 bis 6 gemessen.

### Dicke und Dichte des Trägerkörpers für semipermeable Membranen zur Membranbioreaktor-Behandlung

Die Dicke wurde auf die gleiche Weise wie in den Beispielen 1 bis 12 und den Vergleichsbeispielen 1 bis 6 gemessen.

### Lösungsmittelbeständigkeit des Trägerkörpers für semipermeable Membranen

Die Messungen wurden auf die gleiche Weise wie in den Beispielen 1 bis 12 und den Vergleichsbeispielen 1 bis 6 durchgeführt, und die "Lösungsmittelbeständigkeit des Trägerkörpers für semipermeable Membranen" wurde anhand der gleichen Kriterien wie in den Beispielen 1 bis 12 und den Vergleichsbeispielen 1 bis 6 bewertet.

### Haftfestigkeit zwischen Trägerkörper für semipermeable Membranen und Rahmenmaterial

Die Messungen wurden auf die gleiche Weise wie in den Beispielen 1 bis 12 und den Vergleichsbeispielen 1 bis 6 durchgeführt, und die "Lösungsmittelbeständigkeit des Trägerkörpers für semipermeable Membranen" wurde anhand der gleichen Kriterien wie in den Beispielen 1 bis 12 und den Vergleichsbeispielen 1 bis 6 bewertet.

### Haftfestigkeit zwischen Trägerkörper für semipermeable Membranen und semipermeabler Membran

Die Messungen wurden auf die gleiche Weise wie in den Beispielen 1 bis 12 und den Vergleichsbeispielen 1 bis 6 durchgeführt, und die "Lösungsmittelbeständigkeit des Trägerkörpers für semipermeable Membranen" wurde anhand der gleichen Kriterien wie in den Beispielen 1 bis 12 und den Vergleichsbeispielen 1 bis 6 bewertet.

### Beschichtungseigenschaften der semipermeablen Membran im Trägerkörper für semipermeable Membranen

Die Messungen wurden auf die gleiche Weise wie in den Beispielen 1 bis 12 und den Vergleichsbeispielen 1 bis 6 durchgeführt, und die "Lösungsmittelbeständigkeit des Trägerkörpers für semipermeable Membranen" wurde anhand der gleichen Kriterien wie in den Beispielen 1 bis 12 und den Vergleichsbeispielen 1 bis 6 bewertet.

### Falten im Trägerkörper für semipermeable Membranen

Die Messungen wurden auf die gleiche Weise wie in den Beispielen 1 bis 12 und den Vergleichsbeispielen 1 bis 6 durchgeführt, und die "Lösungsmittelbeständigkeit des Trägerkörpers für semipermeable Membranen" wurde anhand der gleichen Kriterien wie in den Beispielen 1 bis 12 und den Vergleichsbeispielen 1 bis 6 bewertet.

**[Tab. 11]**

| | Flächengewicht des Trägerkörpers für semipermeable Membranen (g/m²) | Dicke des Trägerkörpers für semipermeable Membranen (µm) | Dichte des Trägerkörpers für semipermeable Membranen (g/cm³) |
|---|---|---|---|
| Beispiel 25 | 77 | 157 | 0,49 |
| Beispiel 26 | 78 | 158 | 0,49 |
| Beispiel 27 | 76 | 155 | 0,49 |
| Beispiel 28 | 77 | 163 | 0,47 |

**[Tab. 12]**

| | Lösungsmittelbeständigkeit des Trägerkörpers für semipermeable Membranen | Haftfestigkeit zwischen Trägerkörper für semipermeable Membranen und Rahmenmaterial | Haftfestigkeit zwischen Trägerkörper für semipermeable Membranen und semipermeabler Membran | Be schichtungseigenschaften der semipermeablen Membran im Trägerkörper für se miperme able Membranen | Falten im Trägerkörper für semipermeable Membranen |
|---|---|---|---|---|---|
| Beispiel 25 | A | A | A | A | A |
| Beispiel 26 | A | B | A | A | A |
| Beispiel 27 | A | A | A | A | A |
| Beispiel 28 | A | B | A | B | A |

Die Trägerkörper für semipermeable Membranen zur Membranbioreaktor-Behandlung der Beispiele 25 bis 28 sind Vliesstoffe, die Hauptfasern und Bindefasern enthalten, wobei die Trägerkörper für semipermeable Membranen zur Membranbioreaktor-Behandlung als Hauptfasern gestreckte Polyesterfasern und als Bindefasern Polyesterverbundfasern vom Kern-Mantel-Typ mit einem Mantelabschnitt aus kristallinem copolymerisiertem Polyester, dessen Schmelzpunkt im Bereich von 160 bis 185°C liegt, und in dem die Dicarbonsäurekomponente Terephthalsäure ist und die Diolkomponenten Ethylenglykol und Tetramethylenglykol sind, enthalten. Deswegen wurden ausgezeichnete Lösungsmittelbeständigkeit sowie gute Bewertungsergebnisse für die Haftfestigkeit zwischen dem Trägerkörper für semipermeable Membranen und dem Rahmenmaterial, die Haftfestigkeit zwischen dem Trägerkörper für semipermeable Membranen und der semipermeablen Membran, die Beschichtungseigenschaften der semipermeablen Membran im Trägerkörper für semipermeable Membranen, und die Falten des Trägerkörpers für semipermeable Membranen erhalten.

In dem Trägerkörper für semipermeable Membranen von Beispiel 27 ist der Faserdurchmesser der gestreckten Polyesterfasern in der beschichteten Oberflächenschicht kleiner als der Faserdurchmesser der gestreckten Polyesterfasern in der Rückflächenschicht, wodurch im Vergleich zu den Beispielen 26 und 28, bei denen der Faserdurchmesser der gestreckten Polyesterfasern in der Rückflächenschicht kleiner ist als der Faserdurchmesser der gestreckten Polyesterfasern in der beschichteten Oberflächenschicht, eine ausgezeichnete Haftfestigkeit zwischen dem Trägerkörper für semipermeable Membranen und dem Rahmenmaterial erhalten wird.

Die Trägerkörper für semipermeable Membranen zur Membranbioreaktor-Behandlung der Beispiele 29 bis 66 und der Vergleichsbeispiele 13 bis 17 wurden unter den folgenden Bedingungen hergestellt.

### Herstellung Grundblatt

Wasser wurde in einen Dispersionstank mit einem Volumen von 2 m³ gefüllt und die Rohmaterialien wurden in den in Tab. 13-1 und 13-2 aufgelisteten Mischungsverhältnissen (Anteilen) gemischt. Dann wurde die Mischung bei einer Dispersionskonzentration von 0,5 Gew.% 5 Minuten lang dispergiert. Unter Verwendung einer Kombinationspapiermaschine mit geneigtem Draht und Rundsieb wurde die Faserzusammensetzung der beschichteten Oberflächenschicht am geneigten Draht erhalten, während die Zusammensetzung der Rückflächenschicht (nicht beschichtete Oberflächenschicht) am Rundsieb erhalten wurde. Vor dem Trocknen wurden die auf dem geneigtem Draht und dem Rundsieb gebildeten Nassblätter laminiert. Die laminierten Nassblätter wurden im Anschluss mit einem Yankee-Trockner mit einer Oberflächentemperatur von 150°C unter Druck und Hitze getrocknet und mit den in Tab. 13-1 und 13-2 aufgelisteten Flächengewichten als Zielgewichte wurden Nass-Vliesstoffe (Grundblätter 47 bis 89) in Form von Rollen mit einer Breite von 500 mm erhalten.

**[Tab. 13-1]**

| | | Beschichtete Oberflächenschicht | | | | | | | | | | | | | | | |
|---|---|---|---|---|---|---|---|---|---|---|---|---|---|---|---|---|---|
| | | Mischmenge (Massenanteile) | | | | | | | | | | | | | | | Flächengewicht (g/m²) |
| | | Hauptfasern | | | | | | | | Eindefasern | | | | | | | |
| | | Gestreckte PET-Faser 1 | Gestreckte PET-Feser 2 | Gestreckte PET-Faser 3 | Gestreckte PET-Faser 4 | Gestreckte PET-Faser 5 | Gestreckte PET-Faser 6 | Gestreckte PET-Faser 7 | Gestreckte PET-Faser 8 | Kern-Mantel PET-Faser 1 | Kern-Mantel PETFaser 2 | Kern-Mantel PET-Faser 3 | Kern-Mantel PET Faser 4 | Kern-Mantel PET-Faser 5 | Kern-Mantel PET-Faser 6 | Nicht gestreckte PET-Faser 1 | |
| Faserdurchmesser | µm | 5 | 6 | 7 | 10 | 13 | 14 | 18 | 25 | 14 | 14 | 14 | 13 | 14 | 14 | 11 | |
| Faserlänge | mm | 3 | 5 | 3 | 5 | 5 | 10 | 10 | 10 | 5 | 5 | 5 | 5 | 5 | 5 | 5 | |
| Schmelz-punkt | °C | 260 | 260 | 260 | 260 | 260 | 260 | 260 | 260 | Mantel 180 | Mantel 159 | Nicht zutreffend | Mantel PE 150 | Mantel 155 | Nicht zutreffen | 260 | |
| Kristallisationstemperatur | °C | - | - | - | - | - | - | - | - | Mantel 126 | Mantel 125 | Nicht zutreffend im Mantel | | Mantel 89 | Nicht zutreffend im Mantel | - | |
| Glas übergangspunkt | °C | - | - | - | - | - | - | - | - | Mantel 49 | Mantel 54 | Mantel 67 | | Mantel 40 | Mantel 67 | - | |
| VolumenVerhältnis Kern/Mantel | - | - | - | - | - | - | - | - | - | 50/50 | 50/50 | 50/50 | 50/50 | 50/50 | 50/50 | - | |
| Beispiel 29 | Grund-blatt 47 | 65 | | | | | | | | 15 | | | | | | 20 | 90 |
| Beiapiel 30 | Grund-blatt 48 | | 65 | | | | | | | 15 | | | | | | 20 | 90 |
| Beispiel 31 | Grund-blatt 49 | | | 65 | | | | | | 15 | | | | | | 20 | 90 |
| Beispiel 32 | Grundblatt 50 | | | | 65 | | | | | 15 | | | | | | 20 | 90 |
| Beispiel 33 | Grund-blatt 51 | | | | | 65 | | | | 15 | | | | | | 20 | 90 |
| Beispiel 34 | Grund-blatt 52 | | | | | | 65 | | | 15 | | | | | | 20 | 90 |
| Beispiel 35 | Grund-blatt 53 | | | | | | | 65 | | 15 | | | | | | 20 | 90 |
| Beispiel 36 | Grund-blatt 54 | | | | | | | | 65 | 15 | | | | | | 20 | 90 |
| Beispiel 37 | Grund-blatt 55 | | | | | 65 | | | | | | | | | | 35 | 90 |
| Beispiel 38 | Grund-blatt 56 | | | | | 65 | | | | 5 | | | | | | 30 | 90 |
| Beispiel 39 | Grund-blatt 57 | | | | | 65 | | | | 10 | | | | | | 25 | 90 |
| Beispiel 40 | Grund-blatt 58 | | | | | 65 | | | | 18 | | | | | | 17 | 90 |
| Beispiel 41 | Grund-blatt 59 | | | | | 65 | | | | 20 | | | | | | 15 | 90 |
| Beispiel 42 | Grund-blatt 60 | | | | | 65 | | | | 35 | | | | | | 0 | 90 |
| Beispiel 43 | Grund-blatt 61 | | | | | 65 | | | | 15 | | | | | | 20 | 70 |
| Beispiel 44 | Grund-blatt 62 | | | | | 65 | | | | 15 | | | | | | 20 | 75 |
| Beispiel 45 | Grund-blatt 63 | | | | | 65 | | | | 15 | | | | | | 20 | 80 |
| Beispiel 46 | Grund-blatt 64 | | | | | 65 | | | | 15 | | | | | | 20 | 85 |
| Beispiel 47 | Grund-blatt 65 | | | | | 65 | | | | 15 | | | | | | 20 | 100 |
| Beispiel 48 | Grund-blatt 66 | | | | | 65 | | | | 15 | | | | | | 20 | 110 |
| Beispiel 49 | Grund-blatt 67 | | | | | 65 | | | | 15 | | | | | | 20 | 115 |
| Beispiel 50 | Grund-blatt 68 | | | | | 65 | | | | 15 | | | | | | 20 | 125 |
| Beispiel 51 | Grund-blatt 69 | | | | | 65 | | | | 15 | | | | | | 20 | 130 |
| Beispiel 52 | Grund-blatt 70 | | | | | 80 | | | | 10 | | | | | | 10 | 90 |
| Beispiel 53 | Grund-blatt 71 | | | | | 75 | | | | 10 | | | | | | 15 | 90 |
| Beispiel 54 | Grund-blatt 72 | | | | | 60 | | | | 15 | | | | | | 25 | 90 |
| Beispiel 55 | Grund-blatt 73 | | | | | 55 | | | | 15 | | | | | | 30 | 90 |
| Beispiel 56 | Grund-blatt 74 | | | | | 65 | | | | 15 | | | | | | 20 | 90 |
| Beispiel 57 | Grund-blatt 75 | | | | | 65 | | | | 15 | | | | | | 20 | 90 |
| Beispiel 58 | Grund-blatt 76 | | | | | 65 | | | | 15 | | | | | | 20 | 90 |
| Beispiel 59 | Grund-blatt 77 | | | | | 65 | | | | 15 | | | | | | 20 | 90 |
| Beispiel 60 | Grund-blatt 78 | | | | | 60 | | | | 15 | | | | | | 25 | 90 |
| Beispiel 61 | Grund-blatt 79 | | | | | 65 | | | | 15 | | | | | | 20 | 90 |
| Beispiel 62 | Grund-blatt 80 | | | | | 65 | | | | 15 | | | | | | 20 | 90 |
| Beispiel 63 | Grund-blatt 81 | | | | | 65 | | | | 15 | | | | | | 20 | 90 |
| Beispiel 64 | Grund-blatt 82 | | | | | 65 | | | | 10 | | | | | | 25 | 90 |
| Beispiel 65 | Grund-blatt 83 | | | | | 65 | | | | 10 | | | | | | 25 | 90 |
| Beispiel 66 | Grund-blatt 84 | | | | | 65 | | | | 10 | | | | | | 25 | 90 |
| Vergleichebeispiel 13 | Grund-blatt 85 | | | | | 65 | | | | | 15 | | | | | 20 | 90 |
| Vergleichsbeispiel 14 | Grund-blatt 86 | | | | | 65 | | | | | | 15 | | | | 20 | 90 |
| Vergleichsbeispiel 15 | Grund-blatt 87 | | | | | 65 | | | | | | | 15 | | | 20 | 90 |
| Vergleichsbeispiel 16 | Grund-blatt 88 | | | | | 65 | | | | | | | | 15 | | 20 | 90 |
| Vergleichsbeispiel 17 | Grund-blatt 89 | | | | | 65 | | | | | | | | | 15 | 20 | 90 |

**[Tab. 13-2]**

| | | Rückflächenschisht | | | | | | | | | | | Gesamt-Flächengewicht (g/m²) |
|---|---|---|---|---|---|---|---|---|---|---|---|---|---|
| | | Mischmenge (Massenanteile) | | | | | | | | | | Flächengewicht (g/m²) | |
| | | Hauptfasern | | | Bindefasern | | | | | | | | |
| | | Gestreckte PET-Faser 5 | Ge streckte PET-Faser 7 | Gestreckte PET-Faser 9 | Kern-Mantel PET-Faser 1 | Kern-Mantel PET-Faser 2 | Kern-Mantel PET-Faser 3 | Kern-Mantel PET-Faser 4 | Kern-Mantel PET-Faser 5 | Kern-Mantel PET-Faser 6 | Nicht gestreckte PET-Faser 1 | | |
| Feinheit | dtex | 13 | 18 | 40 | 14 | 14 | 14 | 13 | 14 | 14 | 11 | | |
| Faserlänge | mm | 5 | 10 | 10 | 5 | 5 | 5 | 5 | 5 | 5 | 5 | | |
| Schmelzpunkt | °C | 260 | 260 | 260 | Mantel 180 | Mantel 159 | Nicht zutreffend | Mantel PE 130 | Mantel 153 | Nicht zutreffend | 260 | | |
| | | | | | | | im Mantel | | | im Mantel | | | |
| Kristallisationstemperatur | °C | - | - | - | Mantel 126 | Mantel 125 | Nicht zutreffend im Mantel | - | Mantel 89 | Nicht zutreffend | - | | |
| | | | | | | | | | | im Mantel | | | |
| Glasübergangspunkt | °C | - | - | - | Mantel 49 | Mantel 34 | Mantel 67 | - | Mantel 40 | Mantel 6 7 | - | | |
| Volumenverhältnis Kern/Mantel | - | - | - | - | 50/50 | 50/50 | 50/50 | 50/50 | 50/50 | 50/50 | - | | |
| Beispiel 29 | Grundblatt 47 | | 70 | | 10 | | | | | | 20 | 90 | 180 |
| Beispiel 30 | Grundblatt 48 | | 70 | | 10 | | | | | | 20 | 90 | 180 |
| Beispiel 31 | Grundblatt 49 | | 70 | | 10 | | | | | | 20 | 90 | 180 |
| Beispiel 32 | Grundblatt 50 | | 70 | | 10 | | | | | | 20 | 90 | 180 |
| Beispiel 33 | Grundblatt 51 | | 70 | | 10 | | | | | | 20 | 90 | 180 |
| Beispiel 34 | Grundblatt 52 | | 70 | | 10 | | | | | | 20 | 90 | 180 |
| Beispiel 35 | Grundblatt 53 | | 70 | | 10 | | | | | | 20 | 90 | 180 |
| Beispiel 36 | Grundblatt 54 | | 70 | | 10 | | | | | | 20 | 90 | 180 |
| Beispiel 37 | Grundblatt 55 | | 70 | | 10 | | | | | | 20 | 90 | 180 |
| Beispiel 38 | Grundblatt 56 | | 70 | | 10 | | | | | | 20 | 90 | 180 |
| Beispiel 39 | Grundblatt 57 | | 70 | | 10 | | | | | | 20 | 90 | 180 |
| Beispiel 40 | Grundblatt 58 | | 70 | | 10 | | | | | | 20 | 90 | 180 |
| Beispiel 41 | Grundblatt 59 | | 70 | | 10 | | | | | | 20 | 90 | 180 |
| Beispiel 42 | Grundblatt 60 | | 70 | | 10 | | | | | | 20 | 90 | 180 |
| Beispiel 43 | Grundblatt 61 | | 70 | | 10 | | | | | | 20 | 70 | 140 |
| Beispiel 44 | Grundblatt 62 | | 70 | | 10 | | | | | | 20 | 75 | 150 |
| Beispiel 45 | Grundblatt 63 | | 70 | | 10 | | | | | | 20 | 80 | 160 |
| Beispiel 46 | Grundblatt 64 | | 70 | | 10 | | | | | | 20 | 85 | 170 |
| Beispiel 47 | Grundblatt 65 | | 70 | | 10 | | | | | | 20 | 100 | 200 |
| Beispiel 48 | Grundblatt 66 | | 70 | | 10 | | | | | | 20 | 110 | 220 |
| Beispiel 49 | Grundblatt 67 | | 70 | | 10 | | | | | | 20 | 115 | 230 |
| Beispiel 50 | Grundblatt 68 | | 70 | | 10 | | | | | | 20 | 125 | 250 |
| Beispiel 51 | Grundblatt 69 | | 70 | | 10 | | | | | | 20 | 130 | 260 |
| Beispiel 52 | Grundblatt 70 | | 70 | | 10 | | | | | | 20 | 90 | 180 |
| Beispiel 53 | Grundblatt 71 | | 70 | | 10 | | | | | | 20 | 90 | 180 |
| Beispiel 54 | Grundblatt 72 | | 70 | | 10 | | | | | | 20 | 90 | 180 |
| Beispiel 55 | Grundblatt 73 | | 70 | | 10 | | | | | | 20 | 90 | 180 |
| Beispiel 56 | Grundblatt 74 | | 80 | | 5 | | | | | | 15 | 90 | 180 |
| Beispiel 57 | Grundblatt 75 | | 75 | | 5 | | | | | | 20 | 90 | 180 |
| Beispiel 58 | Grundblatt 76 | | 75 | | 10 | | | | | | 15 | 90 | 180 |
| Beispiel 59 | Grundblatt 77 | | 55 | | 15 | | | | | | 30 | 90 | 180 |
| Beispiel 60 | Grundblatt 78 | | 60 | | 18 | | | | | | 22 | 90 | 180 |
| Beispiel 61 | Grundblatt 79 | | 55 | | 20 | | | | | | 25 | 90 | 180 |
| Beispiel 62 | Grundblatt 80 | | 70 | | 30 | | | | | | | 90 | 180 |
| Beispiel 63 | Grundblatt 81 | | 70 | | | | | | | | 30 | 90 | 180 |
| Beispiel 64 | Grundblatt 82 | 70 | | | 10 | | | | | | 20 | 90 | 180 |
| Beispiel 65 | Grundblatt 83 | | | 70 | 10 | | | | | | 20 | 90 | 180 |
| Beispiel 66 | Grundblatt 84 | 20 | 30 | 20 | 10 | | | | | | 20 | 90 | 180 |
| Vergleichsbeispiel 13 | Grundblatt 85 | | 65 | | | 15 | | | | | 20 | 90 | 180 |
| Vergleichsbespiel 14 | Grundblatt 86 | | 65 | | | | 15 | | | | 20 | 90 | 180 |
| Vergleichsbeispiel 15 | Grundblatt 87 | | 65 | | | | | 15 | | | 20 | 90 | 180 |
| Vergleichsbeispiel 16 | Grundblatt 88 | | 65 | | | | | | 15 | | 20 | 90 | 180 |
| Vergleichsbeispiel 17 | Grundblatt 89 | | 65 | | | | | | | 15 | 20 | 90 | 180 |

### Heißkalandrieren

Das erhaltene Grundblatt wurde einem Heißkalandrierprozess in einer Kalandereinheit vom Aufbau Metallwalze-elastische Walze unter den in Tab. 14 aufgelisteten Bedingungen unterzogen, um die Trägerkörper für semipermeable Membranen zur Membranbioreaktor-Behandlung der Beispiele 29 bis 66 und der Vergleichsbeispiele 13 bis 17 zu erhalten. Die Bearbeitung erfolgte dermaßen, dass in einem ersten Schritt die Rückflächenschicht (die am Rundsieb entstandene Schicht) auf die Metallwalze gedrückt wurde und in einem zweiten Schritt die beschichtete Oberflächenschicht (die am geneigten Draht entstandene Schicht) gegen die Metallwalze gedrückt wurde.

**[Tab. 14]**

| | | Schrittanzahl (Anzahl) | Bedingungen im ersten Schritt | | | | Bedingungen im zweiten Schritt | | | |
|---|---|---|---|---|---|---|---|---|---|---|
| | | | Temperatur der Metallwalze (°C) | Shore D-Härte der elastischen Walze | Liniendruck (kN/m) | Verarbeitungsgeschwindigkeit (m/min) | Temperatur der Metallwalze (°C) | Shore D-Härte der elastischen Walze | Liniendruck (kN/m) | Verarbeitungsgeschwindiegkeit (m/min) |
| Beispiel 29 | Grundblatt 47 | 2 | 240 | 92 | 100 | 10 | 235 | 92 | 90 | 12 |
| Beispiel 30 | Grundblatt 48 | 2 | 240 | 92 | 100 | 10 | 235 | 92 | 90 | 13 |
| Beispiel 31 | Grundblatt 49 | 2 | 240 | 92 | 100 | 10 | 235 | 92 | 90 | 12 |
| Beispiel 32 | Grundblatt 50 | 2 | 240 | 92 | 100 | 10 | 235 | 92 | 90 | 12 |
| Beispiel 33 | Grundblatt 51 | 2 | 240 | 92 | 100 | 10 | 235 | 92 | 90 | 13 |
| Beispiel 34 | Grundblatt 52 | 2 | 240 | 92 | 100 | 10 | 235 | 92 | 90 | 12 |
| Beispiel 35 | Grundblatt 53 | 2 | 240 | 92 | 100 | 10 | 235 | 92 | 90 | 12 |
| Beispiel 36 | Grundblatt 54 | 2 | 240 | 92 | 100 | 10 | 200 | 92 | 90 | 12 |
| Beispiel 37 | Grundblatt 55 | 2 | 240 | 92 | 100 | 10 | 235 | 92 | 90 | 12 |
| Beispiel 38 | Grundblatt 56 | 2 | 240 | 92 | 100 | 10 | 235 | 92 | 90 | 12 |
| Beispiel 39 | Grundblatt 57 | 2 | 240 | 92 | 100 | 10 | 235 | 92 | 90 | 12 |
| Beispiel 40 | Grundblatt 58 | 2 | 240 | 92 | 100 | 10 | 235 | 92 | 90 | 12 |
| Beispiel 41 | Grundblatt 59 | 2 | 240 | 92 | 100 | 10 | 235 | 92 | 90 | 12 |
| Beispiel 42 | Grundblatt 60 | 2 | 240 | 92 | 100 | 10 | 235 | 92 | 90 | 12 |
| Beispiel 43 | Grundblatt 61 | 2 | 240 | 92 | 100 | 10 | 235 | 92 | 90 | 12 |
| Beispiel 44 | Grundblatt 62 | 2 | 240 | 92 | 100 | 10 | 235 | 92 | 90 | 12 |
| Beispiel 45 | Grundblatt 63 | 2 | 240 | 92 | 100 | 10 | 235 | 92 | 90 | 13 |
| Beispiel 46 | Grundblatt 64 | 2 | 240 | 92 | 100 | 10 | 235 | 92 | 90 | 12 |
| Beispiel 4 7 | Grundblatt 65 | 2 | 240 | 92 | 100 | 10 | 235 | 92 | 90 | 12 |
| Beispiel 48 | Grundblatt 66 | 2 | 240 | 93 | 100 | 10 | 235 | 92 | 90 | 13 |
| Beispiel 49 | Grundblatt 67 | 2 | 240 | 92 | 100 | 10 | 235 | 92 | 90 | 12 |
| Beispiel 50 | Grundblatt 68 | 2 | 240 | 92 | 100 | 10 | 235 | 92 | 90 | 12 |
| Beispiel 51 | Grundblatt 69 | 2 | 240 | 92 | 100 | 10 | 235 | 92 | 90 | 12 |
| Beispiel 52 | Grundblatt 70 | 2 | 240 | 92 | 100 | 10 | 235 | 92 | 90 | 12 |
| Beispiel 53 | Grundblatt 71 | 2 | 240 | 92 | 100 | 10 | 235 | 92 | 90 | 12 |
| Beispiel 54 | Grundblatt 72 | 2 | 240 | 92 | 100 | 10 | 235 | 92 | 90 | 12 |
| Beispiel 55 | Grundblatt 73 | 2 | 240 | 92 | 100 | 10 | 235 | 92 | 90 | 12 |
| Beispiel 56 | Grundblatt 74 | 2 | 240 | 92 | 100 | 10 | 235 | 92 | 90 | 12 |
| Beispiel 57 | Grundblatt 75 | 2 | 240 | 92 | 100 | 10 | 235 | 92 | 90 | 12 |
| Beispiel 58 | Grundblatt 76 | 2 | 240 | 92 | 100 | 10 | 235 | 92 | 90 | 12 |
| Beispiel 59 | Grundblatt 77 | 2 | 240 | 92 | 100 | 10 | 235 | 92 | 90 | 12 |
| Beispiel 60 | Grundblatt 78 | 2 | 240 | 92 | 100 | 10 | 235 | 92 | 90 | 12 |
| Beispiel 61 | Grundblatt 79 | 2 | 240 | 92 | 100 | 10 | 235 | 92 | 90 | 12 |
| Beispiel 62 | Grundblatt 80 | 2 | 240 | 92 | 100 | 10 | 235 | 92 | 90 | 12 |
| Beispiel 63 | Grundblatt 81 | 2 | 240 | 92 | 100 | 10 | 235 | 92 | 90 | 12 |
| Beispiel 64 | Grundblatt 82 | 2 | 240 | 92 | 100 | 10 | 235 | 92 | 90 | 12 |
| Beispiel 65 | Grundblatt 83 | 2 | 240 | 92 | 100 | 10 | 235 | 92 | 90 | 12 |
| Beispiel 66 | Grundblatt 84 | 2 | 240 | 92 | 100 | 10 | 235 | 92 | 90 | 12 |
| Vergleichsbeispiel 13 | Grundblatt 85 | 2 | 240 | 92 | 100 | 10 | 235 | 92 | 90 | 12 |
| Vergleichsbeispiel 14 | Grundblatt 86 | 2 | 240 | 92 | 100 | 10 | 235 | 92 | 90 | 12 |
| Vergleichsbeispiel 15 | Grundblatt 87 | 2 | 240 | 92 | 100 | 10 | 235 | 92 | 90 | 12 |
| Vergleichsbeispiel 16 | Grundblatt 88 | 2 | 240 | 92 | 100 | 10 | 235 | 92 | 90 | 12 |
| Vergleichsbeispiel 17 | Grundblatt 89 | 2 | 240 | 92 | 100 | 10 | 335 | 92 | 90 | 12 |

Die folgenden Messungen und Bewertungen wurden an den in den Beispielen 29 bis 66 und den Vergleichsbeispielen 13 bis 17 erhaltenen Trägerkörpern für semipermeable Membranen zur Membranbioreaktor-Behandlung durchgeführt, und die Ergebnisse in den Tabellen 15 und 16 aufgelistet.

### Flächengewicht

Das Flächengewicht wurde gemäß JIS P 8124:2011 gemessen.

### Dicke und Dichte

Die Dicke des Trägerkörpers für semipermeable Membranen wurde gemäß JIS P 8118:2014 gemessen. Die Dichte wurde basierend auf Flächengewicht/Dicke berechnet.

### Frazier-Luftdurchlässigkeit

Mit einem von KATO TECH CO.,LTD. hergestellten Luftdurchlässigkeitstester (KES-F8-AP1) wurde der Luftdurchlässigkeitswiderstand des Trägerkörpers für semipermeable Membranen an 5 Stellen gemessen, und die für den Luftdurchlässigkeitswiderstand erhaltenen Werte wurden nach der Frazier-Methode für die Luftdurchlässigkeit nach JIS L1913:2010 umgerechnet, um die Luftdurchlässigkeit (Luftmenge) zu erhalten. Die Einheit der Luftdurchlässigkeit ist cm³/cm²*s.

### Zugfestigkeit des Trägerkörpers für semipermeable Membranen

Fünf Scheiben mit einer Länge von 160 mm in MD-Richtung und einer Länge von 15 mm in CD-Richtung wurden aus dem Trägerkörper für semipermeable Membranen ausgeschnitten. Zusätzlich dazu wurden fünf Scheiben mit einer Länge von 15 mm in MD-Richtung und einer Länge von 160 mm in CD-Richtung aus dem Trägerkörper für semipermeable Membranen ausgeschnitten, um insgesamt 10 Proben vorzubereiten. Diese Proben wurden unter Verwendung eines Material-Prüfstands (Gerätename: STA-1150, hergestellt von ORIENTEC CORPORATION) bei einem Spannintervall von 100 mm fixiert, um die Zugfestigkeit bei einer oberen und unteren Greiflänge von 25 mm und einer Zuggeschwindigkeit von 20 mm/min zu messen. Der Durchschnittswert der Zugfestigkeit der 10 Proben wurde berechnet und dieser Wert wurde als die Zugfestigkeit des Trägerkörpers für semipermeable Membranen definiert. Die Einheit der Zugfestigkeit ist N/15 mm.

### Lösungsmittelbeständigkeit des Trägerkörpers für semipermeable Membranen

Fünf Scheiben mit einer Länge von 160 mm in MD-Richtung und einer Länge von 15 mm in CD-Richtung wurden aus dem Trägerkörper für semipermeable Membranen ausgeschnitten. Zusätzlich dazu wurden fünf Scheiben mit einer Länge von 15 mm in MD-Richtung und einer Länge von 160 mm in CD-Richtung aus dem Trägerkörper für semipermeable Membranen ausgeschnitten, um insgesamt 10 Proben vorzubereiten. Die Proben wurden 10 Sekunden in NMP getaucht, dann mit reinem Wasser gewaschen und 24 Stunden in einer Atmosphäre von 23°C und 50% relativer Feuchtigkeit getrocknet, um lösungsmittelbehandelte Trägerkörper für semipermeable Membranen zu erhalten. Diese Proben wurden unter Verwendung eines Material-Prüfstands (Handelsname: STA-1150, hergestellt von ORIENTEC CORPORATION) bei einem Spannintervall von 100 mm fixiert, um die Zugfestigkeit des lösungsmittelbehandelten Trägerkörpers für semipermeable Membranen in der MD-Richtung und der CD-Richtung bei einer oberen und unteren Greiflänge von 25 mm und einer Zuggeschwindigkeit von 20 mm/min zu messen. Der Durchschnittswert der Zugfestigkeit der 10 Proben wurde berechnet und dieser Wert wurde als die Zugfestigkeit des lösungsmittelbehandelten Trägerkörpers für semipermeable Membranen definiert. Die Einheit der Zugfestigkeit des lösungsmittelbehandelten Trägerkörpers für semipermeable Membranen ist N/15 mm. Die Lösungsmittelbeständigkeit wurde gemäß den folgenden Bewertungskriterien bewertet. $\left(Zugfestigkeit des Trägerkörpers für semipermeable Membranen nach Lösungsmittelbehandlung/Zugfestigkeit des Trägerkörpers für semipermeable Membranen\right) \times 100$

Die Festigkeit des Trägerkörpers für semipermeable Membranen wurde in "Zugfestigkeit des Trägerkörpers für semipermeable Membranen" berechnet.

### Bewertungskriterien

A: 80% oder mehr.
B: 70% oder mehr, aber unter 80%.
C: Unter 70%.

### Haftfestigkeit zwischen Trägerkörper für semipermeable Membranen und semipermeabler Membran

Unter Verwendung einer Beschichtungsvorrichtung mit konstanter Geschwindigkeit (Handelsname: TQC, vollautomatischer Filmapplikator, COTEC Inc.) wurde bei konstantem Abstand eine mit Magic Ink (eingetragenes Markenzeichen) gefärbte NMP-Lösung (Konzentration: 20%) aus Polyvinylidenfluorid (PVDF) auf die beschichtete Oberfläche des Trägerkörpers für semipermeable Membranen aufgetragen. Danach wurde die Oberfläche mit Wasser gewaschen und getrocknet, und ein PVDF-Film wurde auf der beschichteten Oberfläche des Trägerkörpers für semipermeable Membranen erhalten, wodurch die semipermeable Membran hergestellt wurde.

Einen Tag nach der Herstellung der semipermeablen Membran wurde der Trägerkörper für semipermeable Membranen zu einem Stück mit einer Breite von 25 mm (Beschichtungsrichtung) und einer Länge von 100 mm (Querrichtung bezüglich der Beschichtungsrichtung) geschnitten. Ein zu einer Breite von 25 mm und einer Länge von 100 mm geschnittenes doppelseitiges Klebeband (hergestellt von Nichiban Inc., Handelsname: Nicetack (eingetragenes Markenzeichen) NW-25) wurde an der beschichteten Oberfläche des geschnittenen Trägerkörpers für semipermeable Membranen auf der gesamten beschichteten Oberfläche aufgeklebt. An der Grenzfläche zwischen dem Trägerkörper für semipermeable Membranen und der semipermeablen Membran, an der das Klebeband befestigt ist, wurde das Klebeband auf einer Länge von 30 mm Länge abgezogen, aber auf der verbleibenden Länge von 70 mm nicht abgezogen und der Teil, in dem das Klebeband belassen wurde, diente als Probe. (Dabei wurde das Abzugspapier des doppelseitigen Klebebands belassen, ohne es abzuziehen.)

Unter Verwendung eines Material-Prüfstands (Handelsname: STA-1150, hergestellt von ORIENTEC CORPORATION) wurden der Trägerkörper für semipermeable Membranen im abgezogenen Teil der Probe und das doppelseitige Klebeband (inklusive dem Abzugspapier), an dem die semipermeable Membran anklebte, jeweils in einem Spannarm fixiert. Bei einer Greiflänge von jeweils 25 mm und einer Zuggeschwindigkeit von 100 mm/min wurde die Last, bei der der noch nicht abgezogene Teil sich ablöst, im Zeitraum während einer Bewegung auf einer Länge von 60 mm kontinuierlichen gemessen. Die durchschnittliche Last in diesem Zeitraum wurde als die Haftfestigkeit zwischen dem Trägerkörper für semipermeable Membranen und der semipermeablen Membran bewertet. Die Einheit der Haftfestigkeit ist N/25 mm, und die "Haftfestigkeit zwischen dem Trägerkörper für semipermeable Membranen und der semipermeablen Membran" wurde anhand der folgenden Bewertungskriterien bewertet.

### Bewertungskriterien

A: Die Haftfestigkeit beträgt 1,5 N/25 mm oder mehr, was einem guten Wert entspricht.
B: Die Haftfestigkeit beträgt 0,5 N/25 mm oder mehr, aber weniger als 1,5 N/25 mm, was praktische Anwendbarkeit erlaubt.
C: Die Haftfestigkeit beträgt weniger als 0,5 N/25 mm, was unter dem Niveau für praktische Anwendungen liegt.

### Beschichtungseigenschaften der semipermeablen Membran im Trägerkörper für semipermeable Membranen

Die auf einer quadratischen Fläche der semipermeablen Membran mit einer Breite von 10 cm und einer Länge von 10 cm vorzufindende Anzahl der durch Fusselbildung der Oberfläche des Trägerkörpers für semipermeable Membranen beschädigten Abschnitte (schadhafte Teile) der in "Haftfestigkeit zwischen Trägerkörper für semipermeable Membranen und semipermeabler Membran" hergestellten semipermeablen Membran wurde mit einer Lupe mit 10-facher Vergrößerung untersucht, und die "Beschichtungseigenschaften der semipermeablen Membran im Trägerkörper für semipermeable Membranen" anhand folgender Bewertungskriterien bewertet.

### Bewertungskriterien

A: Die Anzahl der beschädigten Teile beträgt nicht mehr als drei, was einem guten Wert entspricht.
B: Die Anzahl der beschädigten Teile beträgt vier oder fünf, was praktische Anwendbarkeit erlaubt.
C: Die Anzahl der beschädigten Teile beträgt mehr als 5, was unter dem Niveau für praktische Anwendungen liegt.

### Durchbluten der semipermeablen Membran

Der Trägerkörper für semipermeable Membranen wurde auf einem Trägerpapier (hergestellt von Mitsubishi Paper Mills Limited, Handelsname: PPC-Paper N) platziert und unter Verwendung einer Beschichtungsvorrichtung mit konstanter Geschwindigkeit (Handelsname: TQC, vollautomatischer Filmapplikator, COTEC Inc.) wurde bei konstantem Abstand eine mit Magic Ink (eingetragenes Markenzeichen) gefärbte NMP-Lösung (Konzentration: 20%) aus Polyvinylidenfluorid (PVDF) auf die beschichtete Oberfläche des Trägerkörpers für semipermeable Membranen aufgetragen. Direkt nach dem Auftragen wurden im Trägerkörper für semipermeable Membranen nach dem Auftragen noch keine Beobachtungen berücksichtigt, aber danach wurde der Zustand der semipermeablen Membran, die den Trägerkörper für semipermeable Membranen durchdrang und an dem Trägerpapier haftete, beobachtet, und das "Durchbluten der semipermeablen Membran" anhand der folgenden Bewertungskriterien bewertet.

### Bewertungskriterien

A: Keinerlei Durchbluten, was einem guten Niveau entspricht.
B: Durchbluten wurde teilweise beobachtet, aber praktische Anwendbarkeit ist möglich.
C: Durchbluten wurde auf der gesamten Oberfläche beobachtet, keine praktischen Anwendungen möglich.

### Schlauchverformung

Der Trägerkörper für semipermeable Membranen wurde auf einer Breite von 20 mm aufgeschnitten, spiralförmig gewickelt, und die Kanten unter Einwirkung von Hitze verklebt, um einen Schlauch herzustellen. Auf diesen Schlauch wurde weiters ein Trägerkörper für semipermeable Membranen spiralförmig gewickelt und die Kanten durch Hitze verklebt, um einen Schlauch mit einem Innendurchmesser von 8 mm herzustellen, in dem der Trägerkörper für semipermeable Membranen eine Doppelstruktur bildet. Der hergestellte Schlauch wurde zu einer Länge von 5 cm geschnitten, auf die Wägeplatte einer von A&D Company, Limited hergestellten elektronischen Universalwaage FX-3000i platziert und dort ohne zu Wackeln fixiert, um den Null-Tarawert einzustellen. Durch Drücken des mittleren Teils des Schlauchs mit einem Finger wurde die Belastung, ab der es zu einem Verbeulen des Schlauchs kam, gemessen. Es wurden fünf Messungen durchgeführt, und deren Durchschnittswert wurde verwendet, um die "Schlauchverformung" anhand der folgenden Bewertungskriterien zu bewerten.

### Bewertungskriterien

A: 1200 g oder mehr, was einem sehr guten Wert entspricht.
B: 800 g oder mehr, aber weniger als 1200 g, was einem guten Wert entspricht.
C: 500 g oder mehr, aber weniger als 800 g, was praktische Anwendbarkeit erlaubt.
D: Weniger als 500 g, was unter dem Niveau für praktische Anwendungen liegt.

### Verschmutzung der Metallwalze

Das Ausmaß der Verschmutzung der Metallwalze beim Heißkalandrieren eines Grundblatts mit einer Kalandereinheit vom Aufbau Metallwalze-elastische Walze wurde bewertet. Beim Heißkalandrieren wurde das Heißkalandrieren unter den in Tab. 2 aufgelisteten Bedingungen durchgeführt. Die Bearbeitung erfolgte dermaßen, dass in einem ersten Schritt die Rückflächenschicht (die am Rundsieb entstandene Schicht) auf die Metallwalze gedrückt wurde und in einem zweiten Schritt die beschichtete Oberflächenschicht (die am geneigten Draht entstandene Schicht) gegen die Metallwalze gedrückt wurde. Dabei wurde die Verschmutzung der Metallwalze sowohl im ersten Schritt als auch im zweiten Schritt beobachtet und die Beobachtung im Schritt mit der stärkeren Verschmutzung zur Bewertung herangezogen.

### Bewertungskriterien

A: Die Metallwalze ist nicht verschmutzt, was einem guten Niveau entspricht.
B: Die Metallwalze ist teilweise verschmutzt, was praktische Anwendbarkeit erlaubt.
C: Die gesamte Oberfläche der Metallwalze ist verschmutzt, was unter dem Niveau für praktische Anwendungen liegt.

**[Tab. 15]**

| | Flächengewicht des Trägerkörpers für semipermeable Membranen (g/m²) | Dicke des Trägerkörpers für semipermeable Membranen (µm) | Dichte des Trägerkörpers für semipermeable Membranen (g/cm²) | Frazier-Luftdurchla ssigkeit (cm⁵/cm²*s) | Zugfestigkeit des Trägerkörpers für semipermeable Membranen (N/15 mm) |
|---|---|---|---|---|---|
| Beispiel 29 | 183 | 208 | 0,88 | 0,24 | 168 |
| Beispiel 30 | 184 | 215 | 0,86 | 0,28 | 170 |
| Beispiel 31 | 182 | 220 | 0,83 | 0,56 | 181 |
| Beispiel 32 | 183 | 224 | 0,82 | 1,05 | 185 |
| Beispiel 33 | 182 | 227 | 0,80 | 1,85 | 189 |
| Beispiel 34 | 183 | 233 | 0,79 | 2,05 | 191 |
| Beispiel 35 | 182 | 234 | 0,78 | 2,30 | 195 |
| Beispiel 36 | 184 | 238 | 0,77 | 2,89 | 189 |
| Beispiel 37 | 183 | 235 | 0,78 | 0,88 | 153 |
| Beispiel 38 | 182 | 220 | 0,83 | 0,94 | 160 |
| Beispiel 39 | 183 | 222 | 0,82 | 1,06 | 175 |
| Beispiel 40 | 179 | 209 | 0,86 | 1,36 | 190 |
| Beispiel 41 | 181 | 226 | 0,80 | 1,44 | 203 |
| Beispiel 42 | 180 | 241 | 0,75 | 1,60 | 190 |
| Beispiel 43 | 142 | 172 | 0,83 | 2,97 | 151 |
| Beispiel 44 | 150 | 182 | 0,82 | 2,33 | 162 |
| Beispiel 45 | 163 | 201 | 0,81 | 1,87 | 170 |
| Beispiel 46 | 174 | 209 | 0,83 | 1,36 | 177 |
| Beispiel 47 | 203 | 246 | 0,83 | 0,74 | 203 |
| Beispiel 48 | 222 | 268 | 0,83 | 0,42 | 217 |
| Beispiel 49 | 234 | 280 | 0,84 | 0,37 | 225 |
| Beispiel 50 | 249 | 297 | 0,84 | 0,29 | 247 |
| Beispiel 51 | 265 | 315 | 0,84 | 0,25 | 265 |
| Beispiel 52 | 184 | 244 | 0,75 | 1,60 | 152 |
| Beispiel 53 | 182 | 225 | 0,81 | 1,20 | 170 |
| Beispiel 54 | 183 | 220 | 0,83 | 1,70 | 194 |
| Beispiel 55 | 183 | 210 | 0,87 | 1,52 | 210 |
| Beispiel 56 | 182 | 238 | 0,76 | 1,65 | 162 |
| Beispiel 57 | 183 | 231 | 0,79 | 1,49 | 170 |
| Beispiel 58 | 183 | 230 | 0,80 | 1,32 | 178 |
| Beispiel 59 | 183 | 222 | 0,82 | 1,68 | 198 |
| Beispiel 60 | 181 | 220 | 0,82 | 1,84 | 210 |
| Beispiel 61 | 182 | 223 | 0,82 | 1,50 | 224 |
| Beispiel 62 | 181 | 139 | 0,75 | 1,57 | 196 |
| Beispiel 63 | 183 | 237 | 0,77 | 0,86 | 158 |
| Beispiel 64 | 183 | 202 | 0,91 | 0,67 | 154 |
| Beispiel 65 | 182 | 242 | 0,78 | 3,45 | 189 |
| Beispiel 66 | 181 | 224 | 0,81 | 2,65 | 172 |
| Vergleichsbeispiel 13 | 182 | 227 | 0,80 | 1,02 | 182 |
| Vergleichsbeispiel 14 | 183 | 235 | 0,78 | 0,83 | 160 |
| Vergleichsbeispiel 15 | 181 | 257 | 0,70 | 0,24 | 114 |
| Vergleichsbeispiel 16 | 182 | 224 | 0,81 | 0,98 | 175 |
| Vergleichsbeispiel 17 | 183 | 232 | 0,79 | 0,80 | 155 |

**[Tab. 16]**

| | Lõsungsmittel- bestãndigkeit des Trãgerkõrpers für semipermeable Membranen | Haftfestigkeit zwischen Trãgerkõrper für semipermeable Membranen und semipermeabler Membran | Beschichtungseigenschaften der semipermeablen Membran im Trägerkörper für semipermeable Membranen | Durchbluten der semipermeablen Membran | Schlauchverformung | Verschmutzung der Metallwalze |
|---|---|---|---|---|---|---|
| Beispiel 29 | A | B | B | A | B | A |
| Beispiel 30 | A | B | A | A | A | A |
| Beispiel 31 | A | A | A | A | A | A |
| Beispiel 32 | A | A | A | A | A | A |
| Beispiel 33 | A | A | A | A | A | A |
| Beispiel 34 | A | A | A | A | A | A |
| Beispiel 35 | A | B | A | A | A | A |
| Beispiel 36 | A | B | A | B | A | A |
| Beispiel 37 | A | B | A | B | A | A |
| Beispiel 38 | A | B | A | A | A | A |
| Beispiel 39 | A | A | A | A | A | A |
| Beispiel 40 | A | A | A | A | A | B |
| Beispiel 41 | A | A | A | A | A | B |
| Beispiel 42 | A | A | B | B | A | B |
| Beispiel 43 | A | B | A | B | B | A |
| Beispiel 44 | A | B | A | B | A | A |
| Beispiel 45 | A | A | A | A | A | A |
| Beispiel 46 | A | A | A | A | A | A |
| Beispiel 47 | A | A | A | A | A | A |
| Beispiel 48 | A | A | A | A | A | A |
| Beispiel 49 | A | A | A | A | A | A |
| Beispiel 50 | A | B | A | A | A | A |
| Beispiel 51 | A | B | A | A | A | A |
| Beispiel 52 | A | B | B | B | B | A |
| Beispiel 53 | A | A | B | A | A | A |
| Beispiel 54 | A | A | A | A | A | A |
| Beispiel 55 | A | B | A | A | A | B |
| Beispiel 56 | A | B | B | A | B | A |
| Beispiel 57 | A | B | A | A | A | A |
| Beispiel 56 | A | A | B | A | A | A |
| Beispiel 59 | A | B | A | A | A | B |
| Beispiel 60 | A | A | A | A | A | B |
| Beispiel 61 | A | B | B | A | A | B |
| Beispiel 62 | A | A | B | B | B | B |
| Beispiel 63 | A | B | B | B | B | A |
| Beispiel 64 | A | A | B | A | B | A |
| Beispiel 65 | A | A | B | B | A | A |
| Beispiel 66 | A | A | A | B | A | A |
| Vergleichsbeispiel 13 | A | A | A | A | A | C |
| Vergleichsbeispiel 14 | C | C | B | A | C | B |
| Vergleichsbeispiel 15 | A | C | B | A | D | B |
| Vergleichsbeispiel 16 | A | A | A | A | A | C |
| Vergleichsbeispiel 17 | C | C | B | A | C | B |

Die Trägerkörper für semipermeable Membranen zur Membranbioreaktor-Behandlung der Beispiele 29 bis 66 sind Vliesstoffe, die Hauptfasern und Bindefasern enthalten, wobei die Trägerkörper für semipermeable Membranen zur Membranbioreaktor-Behandlung als Hauptfasern gestreckte Polyesterfasern und als Bindefasern Polyesterverbundfasern vom Kern-Mantel-Typ mit einem Mantelabschnitt aus kristallinem copolymerisiertem Polyester, dessen Schmelzpunkt im Bereich von 160 bis 185°C liegt, und in dem die Dicarbonsäurekomponente Terephthalsäure ist und die Diolkomponenten Ethylenglykol und Tetramethylenglykol sind, enthalten. Deswegen wurden ausgezeichnete Lösungsmittelbeständigkeit sowie gute Bewertungsergebnisse für die Haftfestigkeit zwischen dem Trägerkörper für semipermeable Membranen und dem Rahmenmaterial, die Haftfestigkeit zwischen dem Trägerkörper für semipermeable Membranen und der semipermeablen Membran, die Beschichtungseigenschaften der semipermeablen Membran im Trägerkörper für semipermeable Membranen, und die Falten des Trägerkörpers für semipermeable Membranen erhalten.

Da der Trägerkörper für semipermeable Membranen im Vergleichsbeispiel 13 nicht die Polyesterverbundfasern vom Kern-Mantel-Typ A, sondern die Kern-Mantel PET-Fasern 2 enthält, entstanden beim Heißkalandrieren Falten in dem Trägerkörper für semipermeable Membranen und dieser erreichte daher nicht das Niveau für praktische Anwendungen.

Da der Trägerkörper für semipermeable Membranen im Vergleichsbeispiel 14 nicht die Polyesterverbundfasern vom Kern-Mantel-Typ A, sondern die Kern-Mantel PET-Fasern 3 enthält, war die Lösungsmittelbeständigkeit sehr schlecht. Zusätzlich zeigten die Bewertungen der Haftfestigkeit zwischen dem Trägerkörper für semipermeable Membranen und der semipermeablen Membran, der Haftfestigkeit zwischen dem verschmolzenen Teil und der semipermeablen Membran, und der Schlauchverformung ebenfalls schlechte Resultate.

Da der Trägerkörper für semipermeable Membranen im Vergleichsbeispiel 15 nicht die Polyesterverbundfasern vom Kern-Mantel-Typ A, sondern die Kern-Mantel PET-Fasern 4 enthält, zeigten die Bewertungen der Haftfestigkeit zwischen dem Trägerkörper für semipermeable Membranen und der semipermeablen Membran sowie der Schlauchverformung schlechte Resultate.

Da der Trägerkörper für semipermeable Membranen im Vergleichsbeispiel 16 nicht die Polyesterverbundfasern vom Kern-Mantel-Typ A, sondern die Kern-Mantel PET-Fasern 5 enthält, entstanden beim Heißkalandrieren Falten in dem Trägerkörper für semipermeable Membranen und dieser erreichte daher nicht das Niveau für praktische Anwendungen.

Da der Trägerkörper für semipermeable Membranen im Vergleichsbeispiel 17 nicht die Polyesterverbundfasern vom Kern-Mantel-Typ A, sondern die Kern-Mantel PET-Fasern 6 enthält, war die Lösungsmittelbeständigkeit sehr schlecht. Zusätzlich zeigten die Bewertungen der Haftfestigkeit zwischen dem Trägerkörper für semipermeable Membranen und der semipermeablen Membran sowie der Schlauchverformung ebenfalls schlechte Resultate.

Die Trägerkörper für semipermeable Membranen der Beispiele 30 bis 35 weisen eine zweischichtige Struktur auf, die aus einer beschichteten Oberflächenschicht und einer Rückflächenschicht besteht. Das Flächengewicht des Trägerkörpers für semipermeable Membranen beträgt 150 g/m² oder mehr und 250 g/m² oder weniger. Sowohl die beschichtete Oberflächenschicht als auch die Rückflächenschicht enthalten als Hauptfasern gestreckte Polyesterfasern und als Bindefasern die Polyesterverbundfasern vom Kern-Mantel-Typ A und nicht gestreckte Polyesterfasern. Sowohl in der beschichteten Oberflächenschicht als auch in der Rückflächenschicht beträgt das Mischungsverhältnis der Bindefasern 25 Gew.% oder mehr und 40 Gew.% oder weniger, und das Mischungsverhältnis der Polyesterverbundfasern vom Kern-Mantel-Typ A 5 Gew.% oder mehr und 20 Gew.% oder weniger in Bezug auf die in der jeweiligen Schicht enthaltenen Gesamtfasern. Der Faserdurchmesser der in der beschichteten Oberflächenschicht enthaltenen gestreckten Polyesterfasern beträgt 6 bis 18 µm. Verglichen mit dem Trägerkörper für semipermeable Membranen im Beispiel 29, bei dem der Faserdurchmesser der in der beschichteten Oberflächenschicht enthaltenen gestreckten Polyesterfasern weniger als 6 µm beträgt, zeigten die Trägerkörper für semipermeable Membranen der Beispiele 30 bis 35 bei der Bewertung der Beschichtungseigenschaften der semipermeablen Membran im Trägerkörper für semipermeable Membranen und der Schlauchverformung ausgezeichnete Ergebnisse. Verglichen mit dem Trägerkörper für semipermeable Membranen im Beispiel 36, bei dem der Faserdurchmesser der in der beschichteten Oberflächenschicht enthaltenen gestreckten Polyesterfasern mehr als 18 µm beträgt, kam es bei den Trägerkörpern für semipermeable Membranen der Beispiele 30 bis 35 kaum zu einem Durchbluten der semipermeablen Membran.

Die Trägerkörper für semipermeable Membranen der Beispiele 38 bis 41 weisen eine zweischichtige Struktur auf, die aus einer beschichteten Oberflächenschicht und einer Rückflächenschicht besteht. Das Flächengewicht des Trägerkörpers für semipermeable Membranen beträgt 150 g/m² oder mehr und 250 g/m² oder weniger. Sowohl die beschichtete Oberflächenschicht als auch die Rückflächenschicht enthalten als Hauptfasern gestreckte Polyesterfasern und als Bindefasern die Polyesterverbundfasern vom Kern-Mantel-Typ A und nicht gestreckte Polyesterfasern. Sowohl in der beschichteten Oberflächenschicht als auch in der Rückflächenschicht beträgt das Mischungsverhältnis der Bindefasern 25 Gew.% oder mehr und 40 Gew.% oder weniger, und das Mischungsverhältnis der Polyesterverbundfasern vom Kern-Mantel-Typ A 5 Gew.% oder mehr und 20 Gew.% oder weniger in Bezug auf die in der jeweiligen Schicht enthaltenen Gesamtfasern. Der Faserdurchmesser der in der beschichteten Oberflächenschicht enthaltenen gestreckten Polyesterfasern beträgt 6 bis 18 µm. Verglichen mit dem Trägerkörper für semipermeable Membranen von Beispiel 37, bei dem das Mischungsverhältnis der Polyesterverbundfasern vom Kern-Mantel-Typ A in der beschichteten Oberflächenschicht weniger als 5 Gew.% beträgt, kam es bei den Trägerkörpern für semipermeable Membranen der Beispiele 38 bis 41 kaum zu einem Durchbluten der semipermeablen Membran. Verglichen mit dem Trägerkörper für semipermeable Membranen von Beispiel 42, bei dem das Mischungsverhältnis der Polyesterverbundfasern vom Kern-Mantel-Typ A in der beschichteten Oberflächenschicht mehr als 20 Gew.% beträgt, zeigten die Trägerkörper für semipermeable Membranen der Beispiele 38 bis 41 außerdem bei der Bewertung der Beschichtungseigenschaften der semipermeablen Membran im Trägerkörper für semipermeable Membranen und dem Durchbluten der semipermeablen Membran ausgezeichnete Ergebnisse.

Die Trägerkörper für semipermeable Membranen der Beispiele 44 bis 50 weisen eine zweischichtige Struktur auf, die aus einer beschichteten Oberflächenschicht und einer Rückflächenschicht besteht. Das Flächengewicht des Trägerkörpers für semipermeable Membranen beträgt 150 g/m² oder mehr und 250 g/m² oder weniger. Sowohl die beschichtete Oberflächenschicht als auch die Rückflächenschicht enthalten als Hauptfasern gestreckte Polyesterfasern und als Bindefasern die Polyesterverbundfasern vom Kern-Mantel-Typ A und nicht gestreckte Polyesterfasern. Sowohl in der beschichteten Oberflächenschicht als auch in der Rückflächenschicht beträgt das Mischungsverhältnis der Bindefasern 25 Gew.% oder mehr und 40 Gew.% oder weniger, und das Mischungsverhältnis der Polyesterverbundfasern vom Kern-Mantel-Typ A 5 Gew.% oder mehr und 20 Gew.% oder weniger in Bezug auf die in der jeweiligen Schicht enthaltenen Gesamtfasern. Der Faserdurchmesser der in der beschichteten Oberflächenschicht enthaltenen gestreckten Polyesterfasern beträgt 6 bis 18 µm. Verglichen mit dem Trägerkörper für semipermeable Membranen von Beispiel 43, dessen Flächengewicht weniger als 150 g/m² beträgt, verformte sich der Schlauch bei den Trägerkörpern für semipermeable Membranen der Beispiele 44 bis 50 weniger leicht. Verglichen mit dem steifen Trägerkörper für semipermeable Membranen von Beispiel 51, dessen Flächengewicht mehr als 250 g/m² beträgt, konnten die Trägerkörper für semipermeable Membranen der Beispiele 44 bis 50 leichter zu einem Schlauch geformt werden.

Die Trägerkörper für semipermeable Membranen der Beispiele 53 und 54 weisen eine zweischichtige Struktur auf, die aus einer beschichteten Oberflächenschicht und einer Rückflächenschicht besteht. Das Flächengewicht des Trägerkörpers für semipermeable Membranen beträgt 150 g/m² oder mehr und 250 g/m² oder weniger. Sowohl die beschichtete Oberflächenschicht als auch die Rückflächenschicht enthalten als Hauptfasern gestreckte Polyesterfasern und als Bindefasern die Polyesterverbundfasern vom Kern-Mantel-Typ A und nicht gestreckte Polyesterfasern. Sowohl in der beschichteten Oberflächenschicht als auch in der Rückflächenschicht beträgt das Mischungsverhältnis der Bindefasern 25 Gew.% oder mehr und 40 Gew.% oder weniger, und das Mischungsverhältnis der Polyesterverbundfasern vom Kern-Mantel-Typ A 5 Gew.% oder mehr und 20 Gew.% oder weniger in Bezug auf die in der jeweiligen Schicht enthaltenen Gesamtfasern. Der Faserdurchmesser der in der beschichteten Oberflächenschicht enthaltenen gestreckten Polyesterfasern beträgt 6 bis 18 µm. Verglichen mit dem Trägerkörper für semipermeable Membranen von Beispiel 52, bei dem das Mischungsverhältnis der Bindefasern in der beschichteten Oberflächenschicht weniger als 25 Gew.% beträgt, zeigten die Trägerkörper für semipermeable Membranen der Beispiele 53 und 54 bei der Bewertung der Haftfestigkeit zwischen dem Trägerkörper für semipermeable Membranen und der semipermeablen Membran, des Durchblutens der semipermeablen Membran, und der Schlauchverformung ausgezeichnete Ergebnisse. Verglichen mit dem Trägerkörper für semipermeable Membranen von Beispiel 55, bei dem das Mischungsverhältnis der Bindefasern in der beschichteten Oberflächenschicht mehr als 40 Gew.% beträgt, zeigten die Trägerkörper für semipermeable Membranen der Beispiele 53 und 54 außerdem ausgezeichnete Haftfestigkeit zwischen dem Trägerkörper für semipermeable Membranen und der semipermeablen Membran und die Metallwalze wurde kaum verschmutzt.

Die Trägerkörper für semipermeable Membranen der Beispiele 57, 58 und 60 weisen eine zweischichtige Struktur auf, die aus einer beschichteten Oberflächenschicht und einer Rückflächenschicht besteht. Das Flächengewicht des Trägerkörpers für semipermeable Membranen beträgt 150 g/m² oder mehr und 250 g/m² oder weniger. Sowohl die beschichtete Oberflächenschicht als auch die Rückflächenschicht enthalten als Hauptfasern gestreckte Polyesterfasern und als Bindefasern die Polyesterverbundfasern vom Kern-Mantel-Typ A und nicht gestreckte Polyesterfasern. Sowohl in der beschichteten Oberflächenschicht als auch in der Rückflächenschicht beträgt das Mischungsverhältnis der Bindefasern 25 Gew.% oder mehr und 40 Gew.% oder weniger, und das Mischungsverhältnis der Polyesterverbundfasern vom Kern-Mantel-Typ A 5 Gew.% oder mehr und 20 Gew.% oder weniger in Bezug auf die in der jeweiligen Schicht enthaltenen Gesamtfasern. Der Faserdurchmesser der in der beschichteten Oberflächenschicht enthaltenen gestreckten Polyesterfasern beträgt 6 bis 18 µm. Verglichen mit dem Trägerkörper für semipermeable Membranen von Beispiel 56, bei dem das Mischungsverhältnis der Bindefasern in der Rückflächenschicht weniger als 25 Gew.% beträgt, verformte sich der Schlauch bei den Trägerkörpern für semipermeable Membranen der Beispiele 57, 58 und 60 weniger leicht und zeigte ausgezeichnete Eigenschaften. Verglichen mit den Trägerkörpern für semipermeable Membranen der Beispiele 59 und 61, bei denen das Mischungsverhältnis der Bindefasern in der Rückflächenschicht mehr als 40 Gew.% beträgt, kam es im Fall der Trägerkörper für semipermeable Membranen der Beispiele 57 und 58 außerdem kaum zu einem Verschmutzen der Metallwalze, und wiesen die Trägerkörper für semipermeable Membranen der Beispiele 58 und 60 eine höhere Haftfestigkeit zwischen dem Trägerkörper für semipermeable Membranen und der semipermeablen Membran auf.

Verglichen mit dem Trägerkörper für semipermeable Membranen von Beispiel 62, bei dem das Mischungsverhältnis der Polyesterverbundfasern vom Kern-Mantel-Typ A in der Rückflächenschicht mehr als 20 Gew.% beträgt, zeigte der Trägerkörper für semipermeable Membranen im Beispiel 33 bei der Bewertung der Beschichtungseigenschaften der semipermeablen Membran im Trägerkörper für semipermeable Membranen, des Durchblutens der semipermeablen Membran, der Schlauchverformung, und der Verschmutzung der Metallwalze ausgezeichnete Ergebnisse. Verglichen mit dem Trägerkörper für semipermeable Membranen von Beispiel 63, bei dem das Mischungsverhältnis der Polyesterverbundfasern vom Kern-Mantel-Typ A in der Rückflächenschicht weniger als 5 Gew.% beträgt, zeigte der Trägerkörper für semipermeable Membranen von Beispiel 33 außerdem bei der Bewertung der Haftfestigkeit zwischen dem Trägerkörper für semipermeable Membranen und der semipermeablen Membran, der Beschichtungseigenschaften der semipermeablen Membran im Trägerkörper für semipermeable Membranen, des Durchblutens der semipermeablen Membran, und der Schlauchverformung ausgezeichnete Ergebnisse.

In dem Trägerkörper für semipermeable Membranen von Beispiel 39 ist der Faserdurchmesser der gestreckten Polyesterfasern in der beschichteten Oberflächenschicht kleiner als der Faserdurchmesser der gestreckten Polyesterfasern in der Rückflächenschicht, wodurch im Vergleich zu Beispiel 64, bei dem der Faserdurchmesser der gestreckten Polyesterfasern in der Rückflächenschicht und der Faserdurchmesser der gestreckten Polyesterfasern in der beschichteten Oberflächenschicht gleich sind, ausgezeichnete Ergebnisse in der Bewertung der Beschichtungseigenschaften der semipermeablen Membran im Trägerkörper für semipermeable Membranen und der Schlauchverformung erhalten wurden.

In den Trägerkörpern für semipermeable Membranen der Beispiele 39 und 65 ist der Faserdurchmesser der gestreckten Polyesterfasern in der beschichteten Oberflächenschicht kleiner als der Faserdurchmesser der gestreckten Polyesterfasern in der Rückflächenschicht. Allerdings zeigte der Trägerkörper für semipermeable Membranen im Beispiel 39 bei der Bewertung der Beschichtungseigenschaften der semipermeablen Membran im Trägerkörper für semipermeable Membranen und dem Durchbluten der semipermeablen Membran, verglichen mit dem Trägerkörper für semipermeable Membranen im Beispiel 65, bei dem der Faserdurchmesser der gestreckten Polyesterfasern in der Rückflächenschicht mehr als 30 µm beträgt, ausgezeichnete Ergebnisse.

Der durchschnittliche Faserdurchmesser der gestreckten Polyesterfasern in der Rückflächenschicht des Trägerkörpers für semipermeable Membranen von Beispiel 66 beträgt 16 µm, was größer ist als der Faserdurchmesser der gestreckten Polyesterfasern in der beschichteten Oberflächenschicht, aber die Rückflächenschicht enthält gestreckte Polyesterfasern mit einem Faserdurchmesser von mehr als 30 µm. Im Vergleich zu Beispiel 65 kam es bei dem Trägerkörper für semipermeable Membranen von Beispiel 39 daher weniger leicht zu einem Durchbluten der semipermeablen Membran.

### Industrielle Anwendbarkeit

Der erfindungsgemäße Trägerkörper für semipermeable Membranen zur Membranbioreaktor-Behandlung kann auf dem Gebiet der Abwasserbehandlung durch Membranbioreaktor-Methoden eingesetzt werden.

## Patentansprüche

1. Trägerkörper für semipermeable Membranen zur Membranbioreaktor-Behandlung, bei dem es sich um einen Vliesstoff handelt, der Hauptfasern und Bindefasern enthält, **dadurch gekennzeichnet, dass** der Trägerkörper für semipermeable Membranen zur Membranbioreaktor-Behandlung als Hauptfasern gestreckte Polyesterfasern und als Bindefasern Polyesterverbundfasern vom Kern-Mantel-Typ mit einem Mantelabschnitt aus kristallinem copolymerisiertem Polyester, dessen Schmelzpunkt im Bereich von 160 bis 185°C liegt, und in dem eine Dicarbonsäurekomponente Terephthalsäure ist und Diolkomponenten Ethylenglykol und Tetramethylenglykol sind, enthält.

2. Trägerkörper für semipermeable Membranen zur Membranbioreaktor-Behandlung nach Anspruch 1, wobei der Trägerkörper für semipermeable Membranen zur Membranbioreaktor-Behandlung als Bindefasern nicht gestreckte Bindefasern enthält.

3. Trägerkörper für semipermeable Membranen zur Membranbioreaktor-Behandlung nach Anspruch 1 oder 2, wobei der Trägerkörper für semipermeable Membranen zur Membranbioreaktor-Behandlung eine einschichtige Struktur aufweist.

4. Trägerkörper für semipermeable Membranen zur Membranbioreaktor-Behandlung nach Anspruch 1 oder 2, wobei der Trägerkörper für semipermeable Membranen zur Membranbioreaktor-Behandlung eine zweischichtige Struktur aufweist.

5. Trägerkörper für semipermeable Membranen zur Membranbioreaktor-Behandlung nach Anspruch 1, wobei der Trägerkörper für semipermeable Membranen zur Membranbioreaktor-Behandlung eine zweischichtige Struktur aufweist, die aus einer beschichteten Oberflächenschicht und einer der beschichteten Oberflächenschicht entgegengesetzten Rückflächenschicht besteht, der Trägerkörper für semipermeable Membranen zur Membranbioreaktor-Behandlung ein Flächengewicht von 150 g/m² oder mehr und 250 g/m² oder weniger aufweist, sowohl die beschichtete Oberflächenschicht als auch die Rückflächenschicht als Hauptfasern gestreckte Polyesterfasern und als Bindefasern die Polyesterverbundfasern vom Kern-Mantel-Typ und nicht gestreckte Polyesterfasern enthalten, sowohl in der beschichteten Oberflächenschicht als auch in der Rückflächenschicht die Bindefasern ein Mischungsverhältnis von 25 Gew.% oder mehr und 40 Gew.% oder weniger, und die Polyesterverbundfasern vom Kern-Mantel-Typ ein Mischungsverhältnis von 5 Gew.% oder mehr und 20 Gew.% oder weniger in Bezug auf die in der jeweiligen Schicht enthaltenen Gesamtfasern aufweisen, und die in der beschichteten Oberflächenschicht enthaltenen gestreckten Polyesterfasern einen Faserdurchmesser von 6 bis 18 µm aufweisen.
